(19) Europäisches Patentamt
European Patent Office
Office européen des brevets

(11) EP 4 486 805 B1

(12) **EUROPEAN PATENT SPECIFICATION**

(45) Date of publication and mention of the grant of the patent:
**04.02.2026 Bulletin 2026/06**

(21) Application number: **23709611.0**

(22) Date of filing: **02.03.2023**

(51) International Patent Classification (IPC):
***C08F 212/10*** (2006.01) ***C08F 220/44*** (2006.01)
***C08F 2/01*** (2006.01) ***B01J 19/18*** (2006.01)
***B01D 3/00*** (2006.01) ***C08F 6/10*** (2006.01)

(52) Cooperative Patent Classification (CPC):
(C-Sets available)
**C08F 212/10; B01D 3/06; C08F 6/003;**
**C08F 220/44;** B01J 19/1881 (Cont.)

(86) International application number:
**PCT/EP2023/055289**

(87) International publication number:
**WO 2023/166120 (07.09.2023 Gazette 2023/36)**

(54) **CONTINUOUS METHOD OF MANUFACTURING ACRYLONITRILE-CONTAINING COPOLYMERS WITH REDUCED CONTENT OF PROPIONITRILE**

KONTINUIERLICHES VERFAHREN ZUR HERSTELLUNG VON ACRYLNITRILHALTIGEN COPOLYMERISATEN MIT REDUZIERTEM GEHALT AN PROPIONITRIL

PROCÉDÉ CONTINU DE FABRICATION DE COPOLYMÈRES CONTENANT DE L'ACRYLONITRILE À TENEUR RÉDUITE EN PROPIONITRILE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.03.2022 EP 22159927**

(43) Date of publication of application:
**08.01.2025 Bulletin 2025/02**

(73) Proprietor: **INEOS Styrolution Group GmbH**
**60325 Frankfurt am Main (DE)**

(72) Inventors:
- **ITTEMANN, Peter**
  **67125 Dannstadt-Schauernheim (DE)**
- **KEINATH, Michaela**
  **60320 Frankfurt am Main (DE)**
- **BRAUNGER, Julia**
  **89081 Ulm (DE)**
- **FIEDLER, Tobias**
  **55413 Weiler (DE)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**EP-A1- 3 689 923**
**WO-A1-2018/065347**
**CN-A- 112 142 900**
**DE-A1- 3 107 732**
**US-A- 4 555 384**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 6/003, C08L 25/12;**
**C08F 212/08, C08F 220/44;**
**C08F 212/10, C08F 2/01**

## Description

The invention relates to a process for the continuous preparation of a polymer product comprising a polymer based on monomer acrylonitrile (AN) and one or more further monomer(s) (FM) co-polymerizable with (AN), wherein the process leads to a polymer product with reduced content of propionitrile. The invention further relates to the polymer product, its use for the preparation of an article for food contact, child contact (such as toys) and/or medical applications, and a process for the preparation of said article.

Polymer products based on acrylonitrile and one or more further monomers, such as styrene-acrylonitrile (SAN) copolymers, acrylonitrile-butadiene-styrene (ABS) polymer compounds, composed of SAN copolymers and ABS graft copolymers, and acrylonitrile-styrene-acrylate (ASA) polymer compounds, composed of SAN copolymers and alkyl acrylate graft copolymers, are widely used for different applications. ABS and ASA polymer compounds are used e.g. in automotive industries due to their unique features like dimensional stability, impact strength and ease of processing. In addition to this, ease of painting/electroplating and good aesthetic appearance makes them choice for electronics and household applications and articles. ABS and ASA polymer compounds can be used in a wide range of applications in the automotive, household, etc. segments. SAN copolymers are commonly used for many household items where appreciable transparency is needed.

In most applications, it is desirable that chemical components, which are not necessarily required for the establishment of certain properties or functions of polymer products, are not present in the polymer articles, or are present in amounts that are as low as possible. This applies specifically to chemicals that are known to be hazardous to health or environment, or which are not yet sufficiently investigated in terms of health or environmental effects.

Especially when the polymer articles are intended to be in contact with food, to be used in medical applications or to be handled by children, e.g. in toys, it is important to keep the amounts of potentially hazardous materials at very low levels. Although some potentially hazardous components may be avoided by not using them in the preparation of the polymer in the first place, there are also certain chemicals that are necessarily present in the process for the preparation of a polymer product, such as monomers, or chemicals that cannot be avoided, such as by-products and contaminants of the starting materials. Since these chemicals are often volatile and may be hazardous to health and/or the environment, it is necessary that they be actively removed from the polymer.

WO 2018/065347 teaches a method for producing a polymer from a first component and a second component using a reactor, wherein a product flow containing condensed vapors is returned to the reactor from a boiling cooler via a separation vessel, and an aqueous phase is separated from the product flow in the separation vessel.

US 4,555,384 teaches a process and apparatus for the continuous mass polymerization of styrenic and alkenylnitrile monomers, involving circulating a withdrawn portion of the reaction mixture from a position near the bottom of the reaction vessel in at least one closed loop and reintroducing the withdrawn portion near the top of the reaction vessel.

CN-A 112142880 discloses a method for removing residual styrene and acrylonitrile from polymer polyols. The method includes passing the polymer polyol containing up to 2.5% acrylonitrile and up to 2.5% styrene through a series of three flash tanks, in which nitrogen and/or steam is bubbled through the polymer polyol at elevated temperatures, and a steam-stripping tower.

EP-A 0768337 discloses thermoplastic polymers of aromatic vinyl monomers, characterized in a low residual monomer content. The low residual monomer content is obtained by chemical treatment of the polymers with CH-acidic organic compounds and optionally Michael-addition catalysts at a temperature above the glass transition temperature of the polymers. The treatment is carried out in an extruder, after which the product is granulated. Accordingly, the CH-acidic organic compounds, Michael-addition catalysts and their reaction products with the residual monomers remain in the product, and may still be hazardous, or lead to deterioration of certain product properties.

US 4215024 discloses another process involving chemical treatment of acrylonitrile-based polymers, in order to remove residual acrylonitrile. In this process, unsaturated fatty acids are added to the acrylonitrile-containing polymer, after which the product is melt-processed, e.g. by extrusion. Accordingly, the fatty acids and their reaction products with the residual acrylonitrile remain in the product, and may still be hazardous, or lead to deterioration of certain product properties.

DE 2843292 describes the reduction of residual monomers by treatment of the polymer with electron beams. This method involves a high energy consumption, and the exposure of the polymer products to electron beams may lead to damaging of the products and to deterioration of certain properties.

In EP-A 0798314, volatile components are removed from polymers of vinyl aromatic monomers by injecting an amount of non-oxidizing super critical fluid into the polymer melt, after which the polymer melt is devolatilized in a vacuum. The process may be difficult to accomplish on a large scale, and the presence of residual amounts of the fluid in the polymer may have an effect on the polymer properties, such as, e.g., density and porosity.

EP-A 1415693 describes a process, wherein a mixture at least consisting of a polymer, residual monomers, oligomers and solvents (polymer solution), is extruded through nozzles arranged vertically and side by side into a degassing container, thus that the throughput of polymer per nozzle is 0.3 to 2 kg/h and that the vapor pressure of the volatile components of the polymer solution entering the container at high temperatures is greater than 2.5 bar, that the concentration of residual volatiles is less than 20% by weight, and that the absolute pressure in the degassing container is in particular 50 to 5000 Pa.

DE 31 07 732 A1 discloses SAN with a propionitrile content of 120 ppm.

The methods described deal with the removal of undesired components in the final polymer product. However, these methods are often complex and/or include expensive processing steps, in which certain properties of the polymers may potentially deteriorate. Furthermore, the methods mainly focus on the removal of monomers, such as styrene and acrylonitrile, and/or solvents, which are not the only undesired contaminants that may be present in the final polymer product.

Propionitrile ($C_3H_5N$) is a contaminant that typically can be found in acrylonitrile ($C_3H_3N$, Mw 53 g/mol) and is considered to be hazardous to health. In contrast to acrylonitrile, propionitrile does not contain any polymerizable double bonds, and is not built into the polymer chain during the preparation of acrylonitrile-based polymers. Instead, propionitrile remains in the polymer mixture unless actively removed. Being sufficiently volatile, major amounts of propionitrile, and certain other contaminants, are removed together with other volatile components, such as monomers and solvents, during the workup and/or processing of the polymer, e.g. by methods as described in the literature mentioned above. However, minor amounts of propionitrile can be found in the final polymer products and articles prepared therefrom, even after workup and further processing.

The propionitrile content of a number of commercially available styrene acrylonitrile (SAN) copolymers, obtained from main global manufacturers of SAN copolymers, was analyzed by headspace gas chromatography, and it was found that the propionitrile content in these products was in the range of from 0.17 to 7 ppm (w/w), with most polymer products having a propionitrile content between 0.2 and 0.5 ppm. Commercial products with lower propionitrile contents than 0.17 ppm were not found.

These amounts can be considered small and are not seen as critical in many applications, in which acrylonitrile-based polymers such as SAN, ABS and ASA are used, e.g. automotive parts, household appliances, construction equipment, and sports equipment for outdoor use. Therefore, manufacturers and literature were not focusing on the propionitrile content of acrylonitrile-based polymers. However, there are applications, in which it is desirable to use acrylonitrile-based polymers, where propionitrile might have a potential of affecting human and/or animal health.

Especially in articles designed for contact with food, for medical applications or for being handled by children, e.g. in toys, propionitrile has a potential of affecting human and/or animal health, even if present in very small amounts.

It is therefore one object to provide a process for the preparation of acrylonitrile-based polymer products which have reduced propionitrile content, preferably of less than 0.15 ppm, more preferably less than 0.1 ppm (w/w), based on the total weight of the polymer product.

Furthermore, in terms of sustainability and for economic reasons, it is important that the unreacted/unconsumed monomers remaining after the polymerization be utilized for further polymerization, in order to avoid wasting unconsumed resources, and that the process be continuous, without the need for time- and energy-consuming interruptions.

Surprisingly, the present invention demonstrates that the above objectives can be achieved by the process as described herein.

One aspect of the present invention is a process for the continuous preparation of a polymer product (PP1) comprising a polymer (P1) based on acrylonitrile (AN) and one or more further monomer(s) (FM) copolymerizable with (AN), wherein the process comprises the steps:

(a1) providing a continuous first stream (STR1) of (AN), (FM), optionally one or more solvent(s) (SOL), and optionally one or more further component(s) (FC), thus that the amount of (AN) is at least 5% by weight, based on the total weight of all polymerizable monomers, wherein (STR1) is fed into a first polymerization reactor (A1) and wherein the amount of propionitrile (PN) in (STR1) is less than 0.1% by weight, preferably less than 0.03% by weight;

(b1) continuously polymerizing (AN) and (FM) in the first polymerization reactor (A1), to obtain a first reaction mixture (M1) comprising the polymer (P1) and volatile components (V1), which are volatile under the conditions of step (c1), wherein (V1) include unreacted (AN), unreacted (FM), (PN) and, if present, (SOL), oligomers (O) and/or other by-products (BP);

(c1) continuously evaporating at least a portion of (V1) from (M1) at a pressure of from 0.01 to 500 mbar, and at a temperature of from 100 to 350 °C, to obtain a polymer fraction (PF1) comprising polymer (P1), and an evaporated fraction (VF1) comprising (V1);

(d1) continuously separating at least a portion of (V1) from (VF1) to obtain at least one fluid (ULM) comprising (PN), and unreacted (AN) and/or unreacted (FM) and/or, if present, (SOL);

(e1) continuously providing at least a portion of (ULM) as part of at least one stream (STR),

wherein a stream (STR) is the first stream (STR1) and/or a stream (STR) is a second stream (STR2) of (AN), (FM), optionally (SOL) and optionally one or more further component(s) (FC) used for the preparation of a second polymer product (PP2) comprising a polymer (P2) based on acrylonitrile (AN) and one or more further monomer(s) (FM) copolymerizable with (AN);

and wherein if a stream (STR) is the first stream (STR1), the portion of (ULM) provided as part of (STR1) is continuously treated to obtain a fluid (ULM1) containing less than 0.2% by weight of (PN), based on the total weight of (ULM1), and (ULM1) forms less than 50% by weight of the entire first stream (STR1);

and wherein if a stream (STR) is the second stream (STR2), the portion of (ULM) provided as part of (STR2) is used as a fluid (ULM2);

(f1) continuously collecting the polymer fraction (PF1) comprising (P1) obtained in step (c1), and optionally further processing (PF1), to obtain the polymer product (PP1) comprising (P1).

In embodiments, where a stream (STR) is the second stream (STR2), the process of the invention may further comprise the steps:

(a2) continuously providing the second stream (STR2) of (AN), (FM), optionally one or more solvent(s) (SOL), and optionally one or more further component(s) (FC), wherein (STR2) is fed into a second polymerization reactor (A2) and (ULM2) forms part of (STR2);

(b2) continuously polymerizing (AN) and (FM) in the second polymerization reactor (A2), to obtain a second reaction mixture (M2) comprising the second polymer (P2) and volatile components (V2), which are volatile under the conditions of step (c2), wherein (V2) include unreacted (AN) and/or unreacted (FM), (PN), and, if present, (SOL), oligomers (O) and/or other by-products (BP);

(c2) continuously evaporating at least a portion of (V2) from (M2) at a pressure of from 0.01 to 500 mbar, and at a temperature of from 100 to 350 °C, to obtain a second polymer fraction (PF2) comprising (P2), and a second evaporated fraction (VF2) comprising (V2);

(d2) continuously separating at least a portion of (V2) from (VF2) to obtain at least one fluid (ULM3) comprising (PN), and unreacted (AN) and/or unreacted (FM) and/or, if present, (SOL);

(e2) continuously using at least a portion of (ULM3) as part of (ULM) and/or continuously providing at least a portion of (ULM3) as part of at least one stream (STR3),

wherein a stream (STR3) is the first stream (STR1) and/or a stream (STR3) is the second stream (STR2),

and wherein if a stream (STR3) is the first stream (STR1), the portion of (ULM3) provided as part of (STR1) is continuously treated to obtain a fluid (ULM4) containing any amount of (PN), with the proviso that (ULM4) and (ULM1) provided as part of (STR1) together contain less than 0.2% by weight (less than 2000 ppm (w/w)) of propionitrile (PN), based on the total weight of (ULM4) and (ULM1), and (ULM1) and (ULM4) together form less than 50% by weight of the entire first stream (STR1);

and wherein if a stream (STR3) is the second stream (STR2), the portion of (ULM) provided as part of (STR2) is used as a fluid (ULM5);

(f2) continuously collecting the polymer fraction (PF2) comprising (P2) obtained in step (c2), and optionally further processing (PF2), to obtain the polymer product (PP2) comprising (P2).

All steps (a1) to (f1) and (a2) to (f2) are carried out continuously. Accordingly, steps (a1) to (f1) continue to run simultaneously after being initiated, and are not to be understood as steps that are terminated before the next step begins. Termination of the process may occur, e.g., when a predetermined amount of polymer product (PP1) is obtained, or when the person carrying out the process decides to terminate the process. Termination of the process may be carried out by any suitable means, e.g. by terminating the continuous stream (STR1), and, if present (STR2).

In embodiments, where a polymer product (PP1) comprising the polymer (P1) and less than 0.15 ppm, preferably less than 0.1 ppm (w/w) of propionitrile (PN), based on the total weight of (PP1) is required, e.g. where (PP1) is intended to be used in applications for food contact, medical applications and/or child contact (e.g. in toys), step (f1) of the process comprises further processing of the polymer fraction (PF1) at a pressure of from 0.01 to 10 mbar, preferably at 0.1 to 8 mbar, more preferably at 1 to 6 mbar, more preferably at 2 to 5 mbar and a temperature of from 100 to 350 °C, preferably from 150 to 300 °C, more preferably from 200 to 280 °C, more preferably from 250 to 270 °C.

This treatment is preferably carried out by means of a strand degasser and/or a degassing extruder.

Such further processing may also be carried out with the polymer fraction (PF2) comprising (P2), to obtain a polymer product (PP2) comprising (P2). However, due to accumulation of (PN) in the fluids (ULM2) and/or (ULM5), the amount of (PN) in (PP2) is higher than in (PP1), and typically is at least 0.15, often 0.17 to 20 ppm, preferably 0.2 to 0.7 ppm (w/w), based on the total weight of (PP2).

From the present disclosure, it will be understood by those skilled in the art that (ULM) refers to all fluids obtained in step (d1) and further utilized in step (e1); (ULM1) refers to the fluids (ULM) obtained in step (d1), which are re-introduced into the first polymerization process, and which have a propionitrile content of less than 0.2 % by weight; (ULM2) refers to the fluids (ULM) obtained in step (d1), which are transferred to a second polymerization process; (ULM3) refers to all fluids obtained in step (d2) and further utilized in step (e2); (ULM4) refers to the fluids (ULM3) obtained in step (d2), which are transferred to the first polymerization process, thus that the propionitrile content in (ULM4) and (ULM1) combined is less than 0.2 % by weight; and (ULM5) refers to the fluids (ULM3) obtained in step (d2), which are re-introduced into the first polymerization process.

Furthermore, it will be understood by those skilled in the art that the first stream (STR1) refers to the sum of all components fed into the first polymerization reactor (A1); the second stream (STR2) refers to the sum of all components fed into the second polymerization reactor (A2); the at least one stream (STR) refers to any stream fed into any polymerization reactor, which comprises at least a portion of fluid (ULM) (e.g. (ULM1) or (ULM2)) obtained in step (d1); and the at least one stream (STR3) refers to any stream fed into any polymerization reactor, which comprises at least a portion of fluid (ULM3) (e.g. (ULM4) or (ULM5)) obtained in step (d2). Accordingly, a stream (STR) and a stream (STR3) may be the same stream or different streams selected from (STR1) and (STR2).

FIG. 1 shows a schematic view of preparation system used in comparative Example 1.
FIG. 2 shows a schematic view of the preparation system used in Example 1.
FIG. 3 shows a schematic view of the preparation system used in Example 2.
FIG. 4 shows a schematic view of the preparation system used in Example 3.
FIG. 5 shows a schematic view of the preparation system used in Example 4.
FIG. 6 shows a schematic view of the preparation system used in Example 5.
FIG. 7 shows a schematic view of the preparation system used in Example 6.
FIG. 8 shows a schematic view of the preparation system used in Example 7.
FIG. 9 shows a schematic view of the preparation system used in Example 8.
FIG. 10 shows a schematic view of the preparation system used in Example 12.
FIG. 11 (use as part of (ULM2) not shown) shows a schematic view of the preparation system used in Example 11.
FIG. 12 shows a schematic view of the preparation system used in Examples 9 and 10.
FIG. 13 shows a graph, by which the amount of acrylonitrile in the monomer composition required for different amounts of acrylonitrile units in the polymer product can be determined for the process of the invention.
FIG. 14 shows a schematic view of the preparation system used in Example 13.
FIG. 15 shows a schematic view of the preparation system used in Embodiment 10.

In the context of the present invention, a polymer product is a product, preferably composition, comprising one or more polymer(s), which may be any type of polymer and may be present in any form. In a polymer product, the one or more polymer(s) are not necessarily the only component, and further components such as, but not limited to, contaminants and additives may be present. A polymer product comprising a certain polymer may also include further polymers. For example, polymer product (PP1) comprises polymer (P1) and preferably less than 0.15 ppm (w/w) of propionitrile, but may also comprise further components, e.g. a rubber component, reinforcing agents or fillers such as glass fibers or other inorganic components, additives or combinations thereof.

In the context of the present invention, a polymer in its general sense may be any type of polymer, e.g. a polymer obtained from a single monomer or a polymer obtained from two or more types of monomers. A polymer based on a specific monomer or two or more specific monomers comprises units formed by polymerisation of the specific monomer or two or more specific monomers, but may further include other monomer(s) that are not specified. For example, a polymer (P1) based on acrylonitrile (AN) and styrene may be a copolymer of acrylonitrile and styrene, but may also comprise further units, e.g. from methyl methacrylate.

The term "unit" in this context refers to the moiety obtained from the respective monomer after the monomer is introduced into a polymer chain.

The expression "monomer copolymerizable with (AN)" means that under the conditions of the polymerization reaction, the monomer can react with (AN), forming a polymer comprising units based on the monomer and units based on (AN).

The term "fresh", when referring to components, such as acrylonitrile, further monomers or solvents, means that the respective components were not already used in a polymerization reaction, and are preferably used as acquired after synthesis and purification or from commercial sources.

If a fluid is re-introduced into the same reactor, from which it is obtained, it may be referred to as a "circulating fluid". Accordingly, fluids (ULM1) and (ULM5) may be refered to as circulating fluid (ULM1) and circulating fluid (ULM5), respectively. Where a fluid is reintroduced into the same reactor, from which it is obtained, the preparation system involves a circulating fluid loop.

In the context of the present invention, ppm (part(s) per million) refers to ppm by weight, i.e. ppm (w/w), unless stated otherwise. 1 ppm (w/w) of compound A, based on the weight of a composition B comprising compound A, indicates that in each 1 kg of the composition B, 1 mg of the compound A is present, i.e., 1 ppm (w/w) corresponds to 0.0001% by weight or 1% by weight corresponds to 10000 ppm (w/w).

The terms "weight %", "% by weight", "wt.-%" and % (w/w) are synonymous.

The same applies where ppm is used instead of %.

The letter (s) in parentheses attached to a word expresses that the singular and plural form of the word are included. E.g., the expression "one or more monomer(s)" means "one monomer or more than one monomers", and is synonymous to "at least one monomer", or "one or more monomer" where (s) is omitted, but "one or more" is used. A verb following the expression which is grammatically applicable to only a singular or a plural form is not to be understood as a limitation to the singular or plural, i.e. "one or more monomer(s) is" is the same as "one or more monomer(s) are".

A term described by a certain expression followed by an identifier or abbreviation in parentheses is synonymous to the identifier or abbreviation in parentheses used without the expression. For example, "Polymer product (PP1)" is synonymous to "(PP1)", "separation means (SM)" is synonymous to "(SM)", and "step (a1)" is synonymous to "(a1)". However, the expression without an identifier or abbreviation in parentheses is not necessarily synonymous to the expression followed by the identifier or abbreviation in parentheses, except where nothing else can be meant. For example, "acrylonitrile" is necessarily synonymous to "acrylonitrile (AN)" and "(AN)", since acrylonitrile has a recognized meaning.

The term "optional" or "optionally" means that a certain feature may be present, or may be absent. For example, "providing [...] optionally one or more solvent(s) (SOL)" means that in one embodiment, one or more solvent(s) (SOL) are provided, whereas in another no solvent (SOL) is provided.

The expression "essentially the same" when referring to numerical values and ranges thereof, e.g. process parameters such as pressure and temperature, means that the values differ by no more than 10%, preferably no more than 5%, more preferably no more than 3% of the respective numerical value. Where "essentially the same" is used, the differences are fluctuations originating from the process itself and are not actively induced.

Where a first fraction comprising a first component and a second fraction comprising a second component are obtained, the presence of the respective other component is not excluded, unless stated otherwise. Where a fraction is enriched with a specific compound, the relative amount of the compound in the fraction is higher than in the other fractions or in the composition from which the enriched fraction is obtained.

The term "unreacted" refers to monomers which have passed a process step intended for polymerization, but have not lost their ability to polymerize in the process, i.e., monomers which still have the unsaturated double bond required for polymerization, and were not introduced into a polymer or converted into a by-product.

Where at least a portion of a specific component is used, the component may be used partially, or entirely. Where a specific component forms at least part of a composition, the component may form part of the composition or the entire composition.

"Volatile" means that a component can be transferred into the gas phase by applying certain conditions.

"By-products" include by-products, side products and contaminants.

The individual steps and components used herein are discussed in more detail below.

Step (a1)

In step (a1), a first stream (STR1) of acrylonitrile (AN), one or more further monomer(s) (FM), optionally one or more solvent(s) (SOL) and optionally one or more further component(s) (FC) is provided, thus that the amount of (AN) is at least 5% by weight, preferably 6 to 70% by weight, more preferably 7 to 65% by weight, more preferably 8 to 60% by weight, based on the total weight of all polymerizable monomers. The provision of the first stream (STR1) is carried out by feeding (STR1) into a first polymerization reactor (A1). The components of (STR1) typically comprise fresh components, and may further comprise components that were already used in a polymerization reaction. For example, where a fluid (ULM1) and/or a fluid (ULM4), as described herein, forms part of the first stream (STR1), the components of (STR1) typically comprise both fresh components and components that were already used in a polymerization reaction.

The acrylonitrile (AN) and the one or more further monomer(s) (FM) and, if present, the one or more solvent(s) (SOL) and/or the one or more further component(s) (FC) may be provided as a mixture that is fed into the polymerization reactor (A1).

Alternatively, each component may be provided separately or two or more components may be provided as a mixture but separate from the other components.

Preferably at least the acrylonitrile (AN) and each further monomer (FM) are provided separately from each other, since this allows a better control of the monomer composition fed into the polymerization reactor (A1). In this case, (AN) and/or (FM) may be optionally diluted with one or more solvent(s) (SOL), and/or contain further component(s) (FC). (SOL) and/or (FC) may optionally be provided separately, even if the streams of (AN) and/or (FM) also contain (SOL) and/or (FC).

Where a fluid (ULM1) and/or a fluid (ULM4) forms part of the first stream (STR1), fluid (ULM1) and/or fluid (ULM4) may be provided as a mixture with one or more of the fresh components, e.g. from a storage means (F) as described below, or separately from the fresh components.

In any case, the composition of the first stream (STR1) is selected such that the amount of propionitrile (PN) is less than 0.1% by weight (1000 ppm (w/w)), preferably less than 0.08% by weight, more preferably less than 0.05% by weight, more preferably 0.03% or less, more preferably less than 0.02% by weight, based on the total weight of the composition of (STR1), preferably based on the total weight of each individual component of (STR1). Preferably, only the fresh acrylonitrile (AN) fed into the reactor, and, if present, the fluids (ULM1) or (ULM4) contain (PN), which originates from the (AN) starting material. More preferably, the amount of (PN) in the fresh (AN) starting material is 1 to 100 ppm (w/w), preferably 2 to 50 ppm (w/w), more preferably 3 to 30 ppm (w/w), based on the weight of the fresh (AN).

Preferably, the first stream (STR1) is further selected such that the amount of other undesired contaminants from the introduced components is also less than 0.1% by weight, preferably less than 0.08% by weight, more preferably less than 0.05% by weight, more preferably 0.03% or less, more preferably less than 0.02% by weight, based on the total weight of the composition of (STR1), preferably based on the total weight of each individual component of (STR1). Such undesired contaminants include, but are not limited to benzene, acrolein and acetaldehyde. Further component(s) (FC) and solvent(s) (SOL) that are actively provided and fed into the polymerization reactor (A1) for any specific purpose, e.g. in order to influence the process and/or products, are not considered contaminants in the present context.

More preferably, the first stream (STR1) is selected such that the amount of all undesired contaminants, i.e. propionitrile (PN) and other undesired contaminants, is less than 0.1% by weight, preferably less than 0.08% by weight, more preferably less than 0.05% by weight, more preferably 0.03% or less, more preferably less than 0.02% by weight, based on the total weight of the composition of (STR1), preferably based on the total weight of each individual component of (STR1).

The one or more further monomer(s) (FM) are not particularly limited, and may be any monomer(s) copolymerizable with (AN). However, vinylaromatic monomers and derivatives of ethylenically unsaturated carboxylic acids are preferred. Accordingly, the one or more further monomer(s) (FM) copolymerizable with acrylonitrile may comprise, or consist of, vinylaromatic monomer(s), preferably styrene and/or alpha-methyl styrene, more preferably styrene, and/or one or more derivative(s) of ethylenically unsaturated carboxylic acids, preferably alkyl(meth)acrylates and/or maleic acid derivatives, more preferably methyl methacrylate and/or maleic anhydride. More preferably, the one or more further monomer(s) comprise, or consist of, at least one vinylaromatic monomer, in particular styrene, and optionally one or more derivative(s) of ethylenically unsaturated carboxylic acids, in particular methyl methacrylate and/or maleic anhydride.

Other further monomers (FM) may include ethylene, alpha-olefins, vinyl ethers, allyl ethers, vinyl esters, allyl esters, vinyl amines, allyl amines, vinyl amides, allyl amides, vinyl lactams and allyl lactams.

In a preferred embodiment, the amount of (AN) in the first stream (STR1) is 6 to 70% by weight, preferably 7 to 65% by weight, more preferably 8 to 60% by weight, based on the total weight of all polymerizable monomers, and the amount of vinylaromatic monomers, in particular styrene in the first stream (STR1) is 30 to 94% by weight, preferably 35 to 93% by weight, more preferably 40 to 92% by weight, based on the total weight of all polymerizable monomers. Preferably, no further polymerizable monomers except for acrylonitrile (AN) and styrene are provided as part of the first stream (STR1). However, if derivatives of ethylenically unsaturated carboxylic acids, in particular methyl methacrylate and/or maleic anhydride, are provided as part of the first stream (STR1), their amount is preferably 0.5 to 30% by weight, more preferably 0.8 to 15% by weight, more preferably 1 to 10% by weight, often 2 to 5% by weight, based on the total weight of all polymerizable monomers.

The particular amount of (AN) in the monomer mixture is selected depending on the desired amount in the polymer (P1). In the process of the present invention, the amount of (AN) in the monomer mixture does not necessarily correspond to the amount of (AN) units in the polymer. The amounts of (AN) in the monomer composition in the process of the present invention required for specific desired amounts of (AN) units in the polymer (P1) can be determined according to FIG. 13 (curved line). For example, to obtain an (AN) unit amount below 26% by weight in the polymer (P1), the amount of (AN) in the monomer mixture of first stream (STR1) is typically below the desired amount in the polymer (P1), whereas to obtain an (AN) unit amount above 26% by weight in the polymer (P1), ), the amount of (AN) in the monomer mixture of first stream (STR1) is typically above the desired amount in the polymer (P1).

The first stream (STR1) optionally contains one or more solvent(s) (SOL), preferably one solvent (SOL). The solvents are not particularly limited and may be any solvents applicable in polymerization reactions, wherein (AN) is polymerized. Propionitrile (PN) is not considered a solvent in the present context. Exemplary solvents (SOL) include, but are not limited to, ethers, esters, ketones, amines, amides, lactones, lactams, aromatics and alkanes.

Preferably, the one or more solvent(s) (SOL) do not include water, alcohols, halogenated hydrocarbons, nitriles other than (PN) (e.g. acetonitrile) or benzene. Furthermore, (SOL) preferably has a boiling point at 1013 mbar of 60 to 250 °C, preferably 80 to 200 °C, more preferably 100 to 160 °C, more preferably 120 to 150 °C.

Preferred exemplary solvents (SOL) include alkylaromatic solvents, preferably having 1 to 4, more preferably 1 to 3, more preferably 2 carbon atoms attached to an aromatic ring, such as toluene, ethyl benzene, xylenes and mesitylene, and ketones having 3 to 7, preferably 4 to 6 carbon atoms, more preferably 4 carbon atoms, such as methyl ethyl ketone, diethyl ketone and 4-heptanone. More preferred solvents (SOL) are toluene, ethylbenzene and methyl ethyl ketone. More preferably, (SOL) is ethyl benzene or methyl ethyl ketone, in particular ethyl benzene.

The first stream (STR1) optionally contains one or more further component(s) (FC). These components (FC) include, but are not limited to, contaminants, additives, process aids and polymerization initiators.

Contaminants may be present in the starting materials and thus are introduced together with the respective starting material. Preferably, contaminants are not actively provided or fed into the polymerization reactor (A1), but only form part of starting materials, if present therein. For example, acrylonitrile (AN) may contain propionitrile (PN) and benzene as a contaminant in the further component(s) (FC), and styrene as further monomer (FM) may contain benzene, cumene or other aromatic contaminants as optional further component(s) (FC).

Various additives and/or process aids may be used as further component(s) (FC). Suitable additives and/or process aids are not particularly limited and include all substances customarily employed for preparation, processing or finishing the polymers, as long as the amounts and types do not interfere with the objectives of this invention. Examples include, for example, dyes, colorants, antistatic agents, antioxidants, stabilizers for improving thermal stability, stabilizers for increasing photostability, stabilizers for enhancing hydrolysis resistance and chemical resistance, anti-thermal decomposition agents, dispersing agents, anti-scratch agents, fillers, plasticizers and lubricants that are useful for production of polymer products.

If additives and/or process aids are provided as further components (FC) as part of first stream (STR1), they are preferably selected from compounds which may be beneficial in the polymerization reaction. Such compounds include, e.g., antistatic agents, antifouling agents, lubricants, antioxidants and stabilizers, since these may reduce the static adherence of solids to the reactor walls, oxidation and decomposition of the polymer during the polymerization reaction. Other additives and/or process aids, if required, are preferably provided after the polymerization reaction is complete, e.g. by compounding the polymer with the additives and/or process aids. In one embodiment, no additives and/or process aids are provided as further components (FC) as part of (STR1). In another embodiment, the further components (FC) provided as part of (STR1) include additives and/or process aids. Suitable additives and/or processing aids are described, for example, in "Plastics Additives Handbook", Hans Zweifel, 6th edition, Hanser Publ., Munich, 2009.

If additives and/or process aids are used in the process for the preparation of polymer product (PP1) designed for contact with food, medical applications and for being handled by children, preferably in toys, the additives and/or process aids themselves should be safe for use in such products.

Further components (FC) provided as part of (STR1) may also include polymerization initiators. If present, polymerization initiators are preferably radical initiators that are commonly used in radical polymerizations of acrylonitrile with further monomers. Accordingly, polymerization initiators are preferably radical forming substances, which form radicals e.g. upon exposure to heat or light or by redox reaction.

Preferred radical initiators useful in the present invention are selected from azo-compounds and peroxides, more preferably peroxides. Examples of radical initiators are 2,2'-azobis(isobutyronitrile), 2,2'-azobis(2-cyanobutane), dimethyl 2,2'-azobis(isobutyrate), 4,4'-azobis(4-cyanovaleric acid), 1,1'-azobis(cyclohexanecarbonitrile), 2-(t-butylazo)-2-cyanopropane, 2,2'-azobis{2-methyl-N-[1,1-bis(hydroxymethyl)-2-hydroxyethyl] propionamide}, 2,2'-azobis[2-methyl-N-(2-hydroxyethyl) propionamide], 2,2'-azobis[2-(2-imidazolin-2-yl)propane] dihydrochloride, 2,2'-azobis(N,N'-dimethyleneisobutyramidine) dihydrochloride, 2,2'-azobis(2-amidinopropane) dihydrochloride, 2,2'-azobis(N,N'-dimethyleneisobutyramidine), 2,2'-azobis{2-methyl-N-[1,1-bis(hydroxymethyl)-2-hydroxyethyl]propionamide}, 2,2'-azobis{2-methyl-N-[1,1-bis(hydroxymethyl)-2-ethyl]propionamide}, 2,2'-azobis[2-methyl-N-(2-hydroxyethyl)propionamide], 2,2'-azobis(isobutyramide) dihydrate, 2,2'-azobis(2,2,4-trimethylpentane), 2,2'-azobis(2,4-dimethyl-4-methoxyvaleronitrile), 2,2'-azobis(2-methylpropane), t-butyl peroxyacetate, t-butyl peroxybenzoate, t-butyl peroxyneodecanoate, t-butylperoxy isobutyrate, t-amyl peroxypivalate, t-butyl peroxypivalate, diisopropyl peroxydicarbonate, dicyclohexyl peroxydicarbonate, dicumyl peroxide, dibenzoyl peroxide, dilauroyl peroxide, potassium peroxydisulfate, ammonium peroxydisulfate. Preferable initiators are t-butyl peroxyacetate, t-butyl peroxybenzoate, t-butyl peroxyneodecanoate, t-butylperoxy isobutyrate, t-amyl peroxypivalate, t-butyl peroxypivalate, diisopropyl peroxydicarbonate, dicyclohexyl peroxydicarbonate, di-t-butyl peroxide, dicumyl peroxide, dibenzoyl peroxide, dilauroyl peroxide, potassium peroxydisulfate, ammonium peroxydisulfate. More preferable initiators are di-t-butyl peroxide and dicumyl peroxide.

In a preferred embodiment, the first stream (STR1) comprises acrylonitrile (AN), styrene as further monomer (FM), optionally methyl methacrylate and/or maleic anhydride as further monomers (FM) and ethyl benzene as solvent (SOL). In this embodiment, the first stream (STR1) preferably does not contain any further monomers (FM) except for styrene and optionally methyl methacrylate and/or maleic anhydride. More preferably, (STR1) does not contain any further components (FC) except for those found as contaminants in (AN), (FM) and (SOL).

The first polymerization reactor (A1), into which (STR1) is fed in step (a1) may be any polymerization reactor suitable for carrying out continuous polymerizations of acrylonitrile (AN) with one or more further monomer(s) (FM). For example, the first polymerization reactor may be a tube reactor, a tube bundle reactor, a stirred tank reactor, a loop-type reactor, a tower reactor, a linear flow reactor, a screw-type reactor or a fluidized bed reactor configured to carry out continuous polymerization of (AN) with (FM). Suitable reactors are known to those skilled in the art.

The feeding of the first stream (STR1) into the first polymerization reactor (A1) may be carried out by any suitable means, for example by pumping the components of first stream (STR1) through at least one conduit into at least one inlet of the first polymerization reactor (A1).

Fresh components forming part of the first stream (STR1), such as fresh acrylonitrile (AN), fresh further monomers (FM), fresh solvent (SOL) and fresh further components (FC), do not necessarily have to be introduced directly into the first polymerization reactor (A1), and may be introduced into any part of the preparation system, from which at least a part of stream is introduced into the polymerization reactor (A1). For example, where a fluid (ULM1) and/or (ULM4) forms part of the first stream (STR1), one or more fresh component(s) may be introduced into a storage means (F) such as a buffer tank, in which (ULM1) and/or (ULM4) are stored and from which they are fed into the reactor (A1), and/or into any part of a conduit, through which the fluids are fed into the reactor (A1). Preferably, the fresh components are introduced directly into the first polymerization reactor (A1) or into a buffer tank (F) for storage and/or distribution of fluids (ULM1) and/or (ULM4).

Step (b1)

In step (b1), the acrylonitrile (AN) and further monomer(s) (FM) that were fed into the polymerization reactor (A1) in step (a1) are polymerized.

The polymerization may be initiated by any suitable means known in the art. Preferably, the polymerization is thermally initiated, preferably by subjecting the acrylonitrile (AN) and the further monomers (FM) in the first polymerization reactor (A1) to a temperature of from 80 to 200 °C, preferably from 100 to 190 °C, more preferably from 120 to 185 °C, more preferably from 130 to 180 °C, or radical initiated, preferably by radical forming substances, more preferably by one or more peroxides as radical initiators. For example, in embodiments, wherein further components (FC) provided as part of first stream (STR1) include radical initiators, the polymerization is initiated by subjecting the radical initiator to conditions at which the radical initiator is activated to form a radical.

After initiation, the polymerization of (AN) and the one or more further monomer(s) (FM) takes place. In case of thermal initiation, the entire polymerization is preferably carried out at a temperature of from 80 to 200 °C, preferably from 100 to 190 °C, more preferably from 120 to 185 °C, more preferably from 130 to 180 °C. This may be achieved by heating the inside of the first polymerization reactor (A1) to the respective temperature by any suitable means known in the art, and/or by withdrawing excess polymerization energy by any suitable means known in the art, e.g,. by transferring the excess polymerization energy by condensation of vapors to external cooling media via a heat exchanger.

Polymerization of acrylonitrile (AN) and the one or more further monomer(s) (FM) leads to partial consumption of the monomers (AN) and (FM), and a first reaction mixture (M1) is obtained, comprising the polymer (P1) and volatile components (V1), which are volatile under the conditions of step (c1).

During the polymerization reaction, the polymer (P1) based on acrylonitrile (AN) and one or more further monomer(s) (FM) copolymerizable with (AN) is formed, which is part of the first reaction mixture (M1). The polymer (P1) essentially has a composition of units, which depends on the composition of (AN) and one or more further monomer(s) (FM) in the first stream (STR1) provided in step (a1). The amount of (AN) units in the polymer (P1) can be estimated according to FIG. 13, depending on the amount of (AN) in the first stream (STR1). The amount of acrylonitrile (AN) units in the polymer (P1) is typically at least 10% by weight, preferably 11 to 50% by weight, more preferably 12 to 45% by weight, more preferably 13 to 37% by weight, based on the total weight of polymer (P1). More preferably, the polymer (P1) contains 11 to 50% by weight, preferably 12 to 45% by weight, more preferably 13 to 37% by weight, based on the total weight of (P1), of acrylonitrile (AN) units, and 50 to 89% by weight, preferably 55 to 88% by weight, more preferably 63 to 87% by weight, based on the total weight of (P1) of vinylaromatic units, in particular styrene. Preferably, the polymer essentially does not contain units of other monomers. However, if units of other monomers are present, the polymer preferably contains 1 to 20% by weight, preferably 2 to 15% by weight, more preferably 3 to 10% by weight, based on the total weight of (P1), of units of derivatives of ethylenically unsaturated carboxylic acids, in particular methyl methacrylate and/or maleic anhydride.

Apart from the polymer (P1), oligomers (O) of acrylonitrile (AN) and/or the one or more further monomer(s) (FM) may also be formed during the reaction in the first polymerization reactor (A1), as part of the first reaction mixture (M1). Oligomers in the context of the present invention are considered to be any polymerization or other reaction (e.g. Diels-Alder) products of (AN) and/or (FM) containing 2 to 5, preferably 2 to 4, more preferably 2 or 3 units of (AN), (FM) or both. Oligomers (O) are typically volatile under the conditions of step (c1), and therefore are part of the volatile components (V1).

Furthermore, without being bound by theory, it is assumed that apart from (P1) and (O), propionitrile (PN) may potentially be formed during the reaction in the first polymerization reactor (A1). This may be the case if acrylonitrile (AN) undergoes side-reactions, in which the ethylenically unsaturated double bond of acrylonitrile (AN) becomes saturated. Accordingly, the amount of (PN) in the first reaction mixture (M1) may potentially be higher than the amount of (PN) in the first stream (STR1). In addition, any (PN) from (STR1) is not consumed during the reaction. Therefore, the first reaction mixture (M1) comprises (PN), which is volatile under the conditions of step (c1), and therefore is part of the volatile components (V1).

Moreover, if one or more solvent(s) (SOL) is provided as part of the first stream (STR1), the volatile components (V1) include the one or more solvent(s) (SOL), since they are not consumed during the polymerization reaction.

Furthermore, other by-products (BP) may be formed during the reaction in the first polymerization reactor (A1) as part of the volatile components (V1). For example, similarly to (PN), which may be formed by saturation of (AN), saturation of the one or more further monomer(s) (FM) may lead to respective (partially) saturated by-products (BP). Furthermore, degradation and/or other transformations of the further monomer(s) (FM) may occur. In addition, by-products may also include degradation and/or other transformation products of the optional one or more further component(s) (FC) and/or solvent(s) (SOL), if they are sensitive to such side reactions under the conditions of step (b). For example, in case vinylaromatic monomers are present as (FM), by-products (BP) may include benzene, cumene and other aromatic molecules.

Moreover, unreacted acrylonitrile (AN) and further monomer(s) (FM), as well as any volatile contaminants present in the starting materials, also form part of the volatile components (V1).

Step (c1)

In step (c1), at least a portion of the volatile components (V1) is evaporated from the first reaction mixture (M1) at a pressure of from 0.01 to 500 mbar, preferably 0.1 to 200 mbar, more preferably from 1 to 100 mbar, more preferably from 10 to 80 mbar, more preferably 30 to 70 mbar; and a temperature of from 100 to 350 °C, preferably from 150 to 340 °C, more preferably from 200 to 330 °C, more preferably from 250 to 320 °C.

Step (c1) can be carried out by any means suitable for continuously evaporating volatile components from polymer-containing mixtures at the above pressures and temperatures. For example, the evaporating means can be an evaporating means (B1) such as a degassing and/or devolatilizing unit, wherein the reaction mixture (M1) can be subjected to a pressure of from 0.01 to 500 mbar, preferably 0.1 to 200 mbar, more preferably from 1 to 100 mbar, more preferably from 10 to 80 mbar, more preferably from 30 to 70 mbar; and a temperature of from 100 to 350 °C, preferably from 150 to 340 °C, more preferably from 200 to 330 °C, more preferably from 250 to 320 °C.

For this, the reaction mixture (M1) may be continuously transferred from the polymerization reactor (A1) to the evaporating means (B1) through a conduit, for example by pumping the reaction mixture (M1) in molten form into the evaporating means (B1), wherein the reaction mixture (M1) in molten form is subjected to the pressure and temperature described above.

Suitable evaporating means (B1) include, but are not limited to tube bundle heat exchangers for the removal of dissolved substances, as disclosed, e.g. in DE102005054151 and DE102015102311. Further evaporating means include devolatilization technology as provided, e.g. by Sulzer Ltd.

Preferably, the evaporating means includes a degassing equipment for the removal of volatile components, comprising a multi-pipe heat exchanger followed by a flash chamber. In the vacuum flash chamber, volatile components (V1) are separated from the polymer melt and led to an overhead system for recovering (V1). The polymer is discharged from the bottom of the chamber by a gear pump.

Under these conditions, at least a portion, preferably at least 90% by weight, more preferably at least 98% by weight, more preferably at least 99% by weight of the volatile components (V1) is transferred into the gas phase, while the polymer (P1) essentially remains in the condensed phase. Accordingly, in the evaporation step (c), the reaction mixture (M1) is separated into a polymer fraction (PF1) comprising polymer (P1) and an evaporated fraction (VF1) comprising volatile components (V1).

The skilled person knows that volatile components (V1) with higher vapour pressure or low boiling point, such as unreacted acrylonitrile (AN), unreacted further monomers (FM), propionitrile (PN), solvent (SOL) and certain other by-products (BP) will be transferred into the gas phase in higher proportion than volatile components with lower vapour pressure or higher boiling point, such as oligomers (O).

Depending on the vapour pressure or boiling point of the further monomers (FM), solvent (SOL) and by-products (BP), these may be present in the polymer fraction (PF1) and evaporated fraction (VF1) in higher or lower proportion.

Step (d1)

In step (d1), at least a portion of (V1) is separated from (VF1) to obtain at least one fluid (ULM) comprising propionitrile (PN), and unreacted (AN) and/or unreacted (FM) and/or, if present (SOL). The separation means, by which step (d1) is carried out, is not particularly limited and may be any means for continuously separating volatile components from mixtures of volatile components. Preferably, the separation means comprises one or more separation means (SM) capable of separating at least a portion of the volatile components (V1) comprising (AN), (FM) and/or, if present, (SOL) from the evaporated fraction (VF1). The remainder of (VF1) may be discarded, collected for further use or directly transferred to another process for further processing. Preferably, the remainder of (VF1) is collected for further use or transferred to another process for further processing.

For this, the evaporated fraction (VF1) may be continuously transferred from the evaporation means (B1) to the one or more separation means (SM) through a conduit, for example by pumping the evaporated fraction (VF1) into a separation means (SM), or by allowing the evaporated fraction (VF1) to flow to a separation means (SM) due to a pressure gradient. Similarly, different fractions may be continuously transferred between different separation means (SM), if more than one separation means (SM) is used.

The one or more separation means (SM) may be configured to separate a combined fraction comprising two or more volatile components selected from (PN), (AN), (FM) and, if present, (SOL), preferably a combined fraction comprising all of (PN), (AN), (FM) and, if present, (SOL), from the evaporated fraction (VF1), to obtain at least one fluid (ULM). Alternatively, the one or more separation means (SM) may be configured to separate different fractions enriched with (PN), (AN), (FM) and/or, if present, (SOL) from the evaporated fraction (VF1). In this case, the fluid (ULM) may be obtained from one of the different fractions comprising (AN), (FM) and/or, if present, (SOL), or from a combination of two or more different fractions.

For example, the one or more separation means (SM) may comprise an oligomer separator (C). An oligomer separator (C) may be any vessel or apparatus that can be operated at temperatures and pressures, at which at least a portion of any oligomers (O) present in the evaporated fraction (VF1) can be condensed and separated from at least a portion of the other volatile components (V1).

Preferably, the oligomer separator (C) is operated at a temperature below the condensation point of the oligomers (O) but above the condensation point of any one of (AN), (FM) and (SOL), more preferably below the condensation point of the oligomers (O) but above the condensation point of each of (AN), (FM) and (SOL). Accordingly, the oligomer separator (C) is preferably operated at a pressure above the vapour pressure of the oligomers (O) but below the vapour pressure of any one of (AN), (FM) and (SOL), more preferably above the vapour pressure of the oligomers (O) but below the vapour pressure of each of (AN), (FM) and (SOL).

Preferably, the oligomer separator is configured to condense at least 90% by weight, preferably at least 99% by weight, more preferably at least 99.9% by weight of oligomers (O) present in the evaporated fraction (VF1). When an oligomer separator (C) is used as a separation means (SM), the at least one fluid (ULM) is obtained from the volatile components (V1) comprising (PN), (AN), (FM) and/or (SOL), from which oligomers (O) were separated. It will be understood by those skilled in the art that components having similar boiling points and/or vapour pressures as the oligomers (O), will also be condensed in the oligomer separator (C).

The conditions, at which the oligomer separator (C) is operated, can be set by any suitable means that lead to a controlled increase of the pressure and/or controlled decrease of the temperature, each with respect to the pressure and/or temperature of the evaporating means of step (c1). For example, the controlled decrease of temperature in the oligomer separator (C) can be achieved by heat exchangers, or by spraying coolant into the oligomer separator (C). Preferably the temperature in the oligomer separator is set by spraying coolant into the oligomer separator. In this case, the coolant is preferably a portion of the volatile components (V1) comprising (AN), (FM) and/or (SOL), more preferably a portion of (ULM).

Preferably, the pressure in the oligomer separator (C) is from 0.01 to 500 mbar, preferably 0.1 to 200 mbar, more preferably from 1 to 100 mbar, more preferably from 10 to 80 mbar, more preferably 30 to 70 mbar. Particularly preferably, the pressure in the oligomer separator (C) is essentially the same as the pressure in the evaporation means (B1) from which the evaporated fraction (VF1) is transferred to the oligomer separator (C), and the conditions for condensing oligomers (O) are set by controlled decrease of the temperature in the oligomer separator (C), preferably by spraying a portion of the volatile components (V1) condensed in another separation means (SM) into the oligomer separator (C).

The separation means (SM) may also comprise one or more other condensation means (CM), wherein at least a portion of the volatile components (V1) comprising (AN), (FM) and/or (SOL) is condensed to form a fluid (ULM).

The one or more condensation means (CM) may be configured to condense a combined fraction comprising two or more volatile components selected from (PN), (AN), (FM) and, if present, (SOL), preferably a combined fraction comprising all of (PN), (AN), (FM) and, if present, (SOL), from which at least one fluid (ULM) is obtained. Alternatively, the one or more condensation means (CM) may be configured to condense different fractions, each enriched with different components selected from (PN), (AN), (FM) and/or, if present, (SOL). In this case, the at least one fluid (ULM) may be obtained from one of the different fractions comprising or enriched with (AN), (FM) and/or, if present, (SOL), or a combination of two or more different fractions.

For example, the condensation means (CM) may comprise a single condenser and/or heat exchanger operated at conditions, wherein at least a portion of (PN), (AN), (FM) and, if present, (SOL) is cooled to a temperature below their condensation point and/or subjected to a pressure above their vapour pressure, to obtain a combined fraction of (PN), (AN), (FM) and, if present, (SOL), as a fluid (ULM). In such embodiments, preferably at least 90% by weight, more preferably at least 99% by weight of (AN), (FM) and, if present, (SOL) are condensed to form the fluid (ULM). The condensation in such embodiments may be carried out, e.g. at a temperature of from 1 to 10 °C, preferably from 2 to 8 °C, using any suitable coolant, e.g. water, aqueous solutions of salts and/or glycols, and at atmospheric pressure. Preferably, the pressure in the condensation means is from 0.01 to 500 mbar, preferably 0.1 to 200 mbar, more preferably from 1 to 100 mbar, more preferably from 10 to 80 mbar, more preferably 30 to 70 mbar. In particular, the pressure in the condensation means (CM) is preferably essentially the same as in the evaporation means (B1).

Alternatively, the one or more condensation means (CM) may comprise one or more condenser(s) and/or heat exchanger(s) (D), wherein fractions enriched with the further monomer(s) (FM) are condensed, and a condenser and/or heat exchanger (E), wherein a fraction enriched with acrylonitrile (AN) is condensed. In this case, the one or more condensation means (CM) may comprise further condensers and/or heat exchangers before, between or after any of (D) and (E), wherein fractions enriched with other components, such as (PN) or (SOL) are condensed. In this case, the fluid (ULM) may be obtained from one of the different fractions comprising (AN), (FM) and/or, if present, (SOL), or a combination of two or more different fractions.

For example, where (FM) comprises vinylaromatic monomers, in particular styrene, a condenser and/or heat exchanger between (D) and (E) can be used to obtain a fraction enriched with (PN), which has a condensation point between those of styrene and acrylonitrile, while a fraction enriched with styrene is obtained from (D) and a fraction enriched with acrylonitrile is obtained from (E), and the fractions enriched with acrylonitrile and styrene are combined to form the fluid (ULM).

Preferably, the condensation means (CM) comprises at least one condenser and/or heat exchanger operated at temperatures from -10 to 50 °C, preferably from 0 to 40 °C, more preferably from 2 to 35 °C, wherein at least a portion of (AN), (FM), and, if present, the at least one solvent (SOL), is condensed. More preferably, the condensation means (CM) comprises at least one condenser and/or heat exchanger (D) operated at a temperature of from 10 to 35 °C, preferably 15 to 30 °C, more preferably 20 to 28 °C, and at least one condenser and/or heat exchanger (E) operated at a temperature of from 1 to 9 °C, preferably 1 to 8 °C, more preferably 1 to 5 °C, for example 2 to 5 °C. To achieve these temperatures, it is possible to use any suitable coolant, e.g. water or organic coolants. For example, the coolant in condenser and/or heat exchanger (D) may be water, and the coolant in condenser and/or heat exchanger (E) may be a glycol, a mixture of glycols, or a mixture of one or more glycols with water.

More preferably, the condensation means (CM) further comprises at least one oligomer separator (C) before the heat exchangers (D) and (E), wherein oligomers (O) are separated from the other volatile components (V1) comprising (AN), (FM) and, if present, (SOL), before fractions enriched with (AN), (FM), and, if present, (SOL) are condensed. Preferably, both condensers and/or heat exchangers (D) and (E) and oligomer separator (C) are operated at a pressure from 0.01 to 500 mbar, preferably 0.1 to 200 mbar, more preferably from 1 to 100 mbar, more preferably from 10 to 80 mbar, more preferably 30 to 70 mbar. Particularly preferably, (C), (D) and (E) are operated at essentially the same pressure as the evaporation means (B1).

The combined or separate condensed fractions comprising (AN), (FM) and/or, if present, (SOL) obtained from the condensation means (CM) may be directly used in fluid (ULM), or may at least partially be subjected to further treatment by additional separation means (SM), to obtain fluid (ULM). For example, the separation means (SM) may comprise distillation means (G), preferably a distillation column, more preferably a fractional distillation column. The distillation means (G) allows further separation of the condensed fractions into fractions further enriched with (PN), (AN), (FM) and/or, if present (SOL) and/or other components. Where different fractions are obtained from the condensation means (CM), each individual fraction may be subjected to separate treatment by individual distillation means (G), or two or more fractions may be subjected to collective treatment by a single distillation means (G). Alternatively, the evaporated fraction (VF1) obtained from step (c1) may be directly introduced into the distillation means (G) as a gas, where the volatile components (V1) are further separated, to obtain fractions enriched with (PN), (AN), (FM) and/or, if present, (SOL). In this case, the fluid (ULM) may be obtained from one of the different fractions comprising (AN), (FM) and/or, if present, (SOL), or a combination of two or more different fractions.

In a preferred embodiment, the distillation means (G) is a fractional distillation column with at least 10, preferably at least 15, more preferably at least 20 theoretical trays. In a further preferred embodiment, styrene is provided as further monomer (FM), ethylbenzene is provided as the at least one solvent (SOL), and the distillation column is configured thus that:

a fraction (I) containing components having a boiling point above that of styrene are withdrawn the bottom of the distillation column;

at least one fraction (II) containing styrene and ethylbenzene is withdrawn at a position between 10 and 25% of the theoretical trays;

at least one fraction (III) containing propionitrile and other components with boiling points between those of styrene and acrylonitrile is withdrawn at a position between 35 and 80% of the theoretical trays; and

at least one fraction (IV) containing acrylonitrile is withdrawn at a position above 90% of the theoretical trays;

and wherein fractions (II) and (IV) form the fluid (ULM).

The one or more separation means (SM) may also comprise one or more optional storage means (F), wherein the condensed fractions comprising (AN), (FM), and/or, if present, (SOL), or the fluid (ULM) are stored and/or managed for further use. The storage means (F) may be any type of vessel suitable for collecting and storing condensed fractions, for example between two process steps. Preferably, the storage means (F) comprises at least one inlet, through which one or more condensed fractions from the condensation means (CM) or the distillation means (G) are introduced into the storage means (F). Furthermore, the storage means (F) preferably comprises at least one outlet, from which the condensed fractions are further transferred to the next process step. More preferably, the storage means (F) comprises at least one outlet, from which a portion of the condensed fractions stored therein is transferred to the next process step, and a portion of the condensed fractions stored therein is used as coolant in an oligomer separator (C). Preferably, the storage means (F) is located between one or more condensation means (CM) and one or more distillation means (G).

Furthermore, the one or more separation means (SM) may also include means enabling division of individual or combined condensed fractions into different portions. For example, valves may be installed within conduits for individual or combined fractions, allowing withdrawal of one or more portions thereof, wherein different portions may be used e.g. for different purposes.

In step (d1), preferably at least 60%, more preferably at least 90%, more preferably at least 95%, more preferably at least 97% of acrylonitrile present in the evaporated fraction (VF1) is recovered for use in a fluid (ULM). Furthermore, preferably at least 60%, more preferably at least 90%, more preferably at least 95%, more preferably at least 97% of each further monomer (FM) present in the evaporated fraction (VF1) is recovered for use in a fluid (ULM). Furthermore, preferably at least 60%, more preferably at least 90%, more preferably at least 95%, more preferably at least 97% of each solvent (SOL) present in the evaporated fraction (VF1) is recovered for use in a fluid (ULM).

Step (e1)

In step (e1), at least a portion of (ULM) is provided as part of at least one stream (STR) of acrylonitrile (AN), one or more further monomer(s) (FM), optionally one or more solvent(s) (SOL) and optionally one or more further component(s) (FC), which is used for the preparation of a polymer product (PP) comprising a polymer (P) based on acrylonitrile (AN) and one or more further monomer(s) (FM) copolymerizable with (AN).

In some embodiments, a portion of (ULM), preferably 1 to 99% by weight, more preferably 10 to 90% by weight, more preferably 20 to 80% by weight, more preferably 25 to 70% by weight of (ULM) is used as coolant in an oligomer separator (C), where this portion of (ULM) evaporates and is recombined with the volatile components (V1) to form (ULM) again.

The at least one stream (STR) may be the first stream (STR1) as described above. In this case, at least a portion of (ULM) is re-introduced into the first polymerization reactor (A1) as a fluid (ULM1) forming part of the first stream (STR1), for the continuous preparation of the polymer product (PP1) comprising the polymer (P1) based on acrylonitrile (AN) and one or more further monomer(s) (FM) copolymerizable with (AN). In general, the fluid (ULM1) forms less than 50% by weight, preferably 35 to 49% by weight, more preferably 38 to 47% by weight, more preferably 40 to 45% by weight of the first stream (STR1). Accordingly, typically more than 50% by weight, preferably 51 to 65% by weight, more preferably 53 to 62% by weight, more preferably 55 to 60% by weight of the first stream (STR1) are essentially composed of fresh components, e.g. fresh monomers such as fresh acrylonitrile (AN) and fresh further monomer(s) (FM).

In the preparation of polymer product (PP1) according to the invention, the portion (ULM1) of (ULM) provided as part of (STR1) contains less than 0.2% by weight (less than 2000 ppm (w/w)), preferably less than 0.1% by weight, more preferably less than 0.08% by weight, more preferably 0.05% by weight or less, more preferably less than 0.04% by weight of propionitrile (PN).

If the portion of (ULM) provided as part of (STR1) does not contain less than 0.2% by weight of (PN), the amount of (PN) in the polymerization reactor (A1) increases over time, since the (PN) in the fluid (ULM) is not consumed during polymerization, and new (PN) is added to the reactor as contaminant by provision of fresh (AN). This leads to an increased residual (PN) content in the final polymer product (PP1).

Accordingly, where at least a portion of (ULM) is used as part of (STR1), step (d1) is carried out in a way that at least a portion (ULM1) is obtained, which contains less than 0.2% by weight, preferably less than 0.1% by weight, more preferably less than 0.08% by weight, more preferably 0.05% by weight or less, more preferably less than 0.04% by weight of propionitrile, based on the total weight of (ULM1).

This can be achieved, e.g., by carrying out condensation by condensation means (CM) in a way that separate condensed fractions enriched with (PN), (AN), (FM) and/or, if present, (SOL) are obtained from the condensation means (CM), and the fractions comprising less than 0.2% by weight, preferably less than 0.1% by weight, more preferably less than 0.08% by weight, more preferably 0.05% by weight or less, more preferably less than 0.04% by weight of (PN) are used as (ULM1).

Furthermore, this can be achieved e.g. by carrying out fractional distillation of at least a portion of condensed fractions comprising (PN), (AN), (FM) and/or, if present, (SOL), thus that the distilled fractions comprising (AN), (FM) and/or, if present, (SOL) and less than 0.2%, preferably less than 0.1% by weight, more preferably less than 0.08% by weight, more preferably 0.05% or less, more preferably less than 0.04% by weight of (PN) are used as (ULM1).

Both in case of condensation and distillation, it is possible to combine fractions comprising any amount of (PN) (e.g. more than 0.2% by weight) with fractions comprising less than 0.2% by weight, preferably less than 0.1% by weight, more preferably less than 0.08% by weight, more preferably less than 0.05% by weight, more preferably less than 0.04% by weight of (PN), based on the weight of the respective fraction, in a ratio that leads to a (PN) content of less than 0.2% by weight, preferably less than 0.1% by weight, more preferably less than 0.08% by weight, more preferably 0.05% by weight or less, more preferably less than 0.04% by weight, in the combined fraction, which is used as (ULM1). However, preferably only the fractions comprising less than 0.2% by weight, preferably less than 0.1% by weight, more preferably less than 0.08% by weight, more preferably 0.05% by weight or less, more preferably less than 0.04% by weight of (PN), based on the weight of the respective fraction are used as (ULM1).

Furthermore, a content of less than 0.2% by weight of (PN) in (ULM1) may be achieved by continuously withdrawing a portion of the fluid (ULM), through means enabling division of individual or combined condensed fractions into different portions, e.g. through valves installed within a conduit for (ULM), allowing withdrawal of one or more portions thereof.

In this case, the rate X, at which a portion x% of the fluid (ULM) is withdrawn, is calculated according to the equation (eq.1), which is transformable into (eq.2).

$$X = \frac{Y \cdot y\%}{z\%} \quad (eq.1);$$

$$X \cdot z\% = Y \cdot y\% \quad (eq.2)$$

wherein X is the rate at which the portion of the fluid (ULM) is withdrawn; Y is the feed rate of fresh acrylonitrile (AN) in step (a1); y% is the concentration of propionitrile (PN) in the fresh (AN); and z% is the predetermined concentration of (PN) in the fluid (ULM1), which is less than 0.2% by weight and may be, e.g. less than 0.1% by weight, less than 0.08% by weight, 0.05% by weight or less, or less than 0.04% by weight. Accordingly, the feed rate of propionitrile into the polymerization reactor (A1) in step (a1) is $Y \cdot y\%$.

The remaining (100-x)% of (ULM) forms part of (ULM1), which is introduced as part of (STR1) into the first polymerization reactor (A1).

The portion x% of the fluid (ULM) withdrawn may be discarded or further utilized, e.g. as a fluid (ULM2) in a different polymerization process, or further treated, e.g. by distillation, to obtain additional fluid (ULM1) comprising less than 0.2% by weight, preferably less than 0.1% by weight, more preferably less than 0.08% by weight, more preferably less than 0.05% by weight, more preferably less than 0.04% by weight of (PN). The size of the portion x% is the ratio of the withdrawal rate X to the total condensation rate of the fluid (ULM), from which the portion is withdrawn.

If the initial concentration (c%) of propionitrile (PN) in the fluid (ULM) is above the predetermined concentration z%, the initial withdrawal rate X · c% of (PN) is greater than $X \cdot z\%$, and thus greater than the feed rate Y · y% of (PN), thus that the concentration c% is reduced over time, until it reaches z%.

If the initial concentration c% in the fluid (ULM) is below z%, the initial withdrawal rate $X \cdot$ c% of (PN) is smaller than $X \cdot z\%$, and thus smaller than the feed rate Y $\cdot y\%$ of (PN). In this case, concentration c% is increased over time, until it reaches z%.

Accordingly, due to the withdrawal rate X being calculated according to the equation (eq.1), the concentration (c%) of propionitrile (PN) in the fluid (ULM) stabilizes at a value of z%, since the withdrawal rate $X \cdot$ z% of (PN) is then equal to the feed rate Y $\cdot y\%$ of (PN), as seen from (eq.2).

Withdrawal may be accompanied by continuous monitoring of the concentration of (PN) in (ULM). In this case, the withdrawal rate X may be adapted during the process, which allows faster stabilization of c% at a value of z%. For example, where the initial concentration c% is too high in (ULM), withdrawal can be carried out at a higher rate initially, until (ULM) reaches a value of z%, after which the withdrawal rate is reduced to a value calculated according to (eq.1). Continuous monitoring of the (PN) concentration can be carried out e.g. by gas chromatography, preferably with automatic sampling.

Where the (PN) concentration in (ULM1) is regulated by withdrawal of a portion of (ULM), certain components that are not consumed during the polymerization reaction, but are used in the polymerization reactor (A1), such as solvent (SOL), are also partially withdrawn from the process. These components are additionally provided in the first stream (STR1) into the reactor (A1), or added to (ULM1) at any stage, e.g. into a storage tank (F), to compensate for the withdrawn amount.

Withdrawal of a portion of fluid (ULM) is preferably carried out at the point of highest concentration of (PN). For example, where one or more separation means (SM) is configured to obtain a combined fraction of all volatile components selected from (PN), (AN), (FM) and, if present, (SOL), from the evaporated fraction (VF1), the withdrawal of (ULM) at rate X is preferably carried out from this combined fraction. In contrast, where more than one separation means (SM) are configured to obtain two or more fractions from the evaporated fraction (VF1), wherein one fraction is enriched with (PN), the withdrawal of (ULM) at rate X is preferably carried out on the fraction enriched with (PN).

For example, where the one or more condensation means (CM) comprise one or more condenser(s) and/or heat exchanger(s) (D), wherein fractions enriched with the further monomer(s) (FM) and solvent(s) (SOL) are condensed, and a condenser and/or heat exchanger (E), wherein a fraction enriched with acrylonitrile (AN) and propionitrile (PN) is condensed, the withdrawal of (ULM) at rate X is preferably carried out on the condensate obtained from condenser and/or heat exchanger (E).

Withdrawal at a point of high concentration of (PN) allows reducing the amount of components withdrawn from the system, which is desirable from economic perspective. For example, when a point of high concentration of (PN), preferably the point of highest concentration of (PN), is determined to have a concentration of (PN), which is a multitude n of the predetermined concentration z%, wherein n is any number greater than 1, the withdrawal rate X can be calculated according to the equation (eq.3).

$$X = \frac{Y \cdot y\%}{n \cdot z\%} \qquad (eq.3)$$

Withdrawal of a portion of the fluid (ULM) at a rate X calculated according to any of (eq.1) or (eq.3) is particularly preferred in those cases, where the fresh acrylonitrile (AN) fed into the polymerization reactor (A1) is selected to have a particularly low concentration y% of acrylonitrile, and where the tolerable concentration of (PN), represented by predetermined concentration z%, in the fluid (ULM1) is relatively high, e.g. less than 0.08% by weight, less than 0.1% by weight, or less than 0.2% by weight. In this cases, the withdrawal rate X is low, thus that only minor amounts of (ULM) have to be withdrawn from the process.

The content of (PN) in individual fractions and in (ULM1) can be determined by gas chromatography.

Where a portion (ULM1) of the fluid (ULM) is provided as part of stream (STR1), the (ULM1) containing less than 0.2% by weight of (PN) is preferably obtained by at least partial condensation and/or at least partial distillation, preferably at least partial fractional distillation, more preferably at least partial fractional distillation in a distillation column.

Preferably, the portion (ULM1) of the fluid (ULM) further contains less than 0.2% by weight, preferably less than 0.1% by weight, more preferably less than 0.08% by weight, more preferably 0.05% by weight or less, more preferably less than 0.04% by weight of any other component apart from (AN), (FM) and/or, if present, (SOL), in particular benzene. This can be achieved by separation means (SM) as described above.

Where a portion (ULM1) of the fluid (ULM) is provided as part of the first stream (STR1), the rate, at which fresh (AN), (FM) and, if present, (SOL) are provided, is preferably adjusted depending on the amount of (AN), (FM) and/or, if present, (SOL) provided in (ULM1), thus that the total amount of (AN), (FM) and, if present, (SOL) in the stream (STR1) remains essentially constant.

The at least one stream (STR) may also be a second stream (STR2) of (AN), (FM), optionally (SOL) and optionally one or more further component(s) (FC) used for the preparation of a second polymer product (PP2) comprising a polymer (P2) based on acrylonitrile (AN) and one or more further monomer(s) (FM) copolymerizable with (AN). In this case, at least a portion of (ULM) is used as a fluid (ULM2).

In a preferred embodiment, at least a portion (ULM1) of the fluid (ULM) is used as part of the first stream (STR1), as described above, and at least a portion (ULM2) of the fluid (ULM) is used as part of a second stream (STR2), as described above. Preferably, (ULM2) comprises at least 0.2% by weight, preferably 0.2% by weight, more preferably 0.2 to 4% by weight, more preferably 0.3 to 3% by weight, more preferably 0.5 to 2.5% by weight, more preferably 0.7 to 2% by weight of propionitrile (PN).

In any of the above embodiments, during initiation of the continuous process, the fluid (ULM) may be either generated during the process, or may be already present in the equipment, e.g. in a storage tank (F). In the latter case, the fluid (ULM) may originate, e.g., from another process for the preparation of a polymer product.

Step (f1)

In step (f1), the polymer fraction (PF1) comprising polymer (P1) obtained in step (c1) is continuously collected and optionally further processed, to obtain the polymer product (PP1) comprising (P1).

In order to obtain a polymer product (PP1) comprising (P1) and less than 0.15 ppm, preferably less than 0.1 ppm (w/w) of propionitrile (PN), based on the total weight of (PP1), the further processing is carried out and comprises further degassing of the polymer fraction (PF1) at a pressure of from 0.01 to 10 mbar, preferably at 0.1 to 8 mbar, more preferably at 1 to 6 mbar, more preferably at 2 to 5 mbar, and at a temperature of from 100 to 350 °C, preferably from 150 to 300 °C, more preferably from 200 to 280 °C, more preferably from 250 to 270 °C. Preferably this further degassing is carried out by means of a strand degasser and/or a degassing extruder, wherein the specified pressures and temperatures can be established. In the process of the invention, wherein a further degassing of the polymer fraction (PF1) is carried out, typically less than 0.015% by weight, preferably less than 0.01% by weight, more preferably less than 0.005% by weight, more preferably less than 0.002% by weight of unreacted (AN) and propionitrile (PN) present in the reaction mixture (M1) will remain in the polymer fraction (PF1).

In addition, further processing may include thermoplastic processing steps such as molding, extrusion, granulation, and compounding of the polymer fraction (PF1) with other components.

Preferably, further processing comprises compounding of (PF1) with other components, preferably with a rubber component, preferably acrylonitrile butadiene styrene (ABS) rubber or acrylonitrile styrene acrylate (ASA) rubber, more preferably with ABS rubber, to obtain the polymer product (PP1).

Suitable rubber components for compounding with (PF1) are known in the art, and are described, e.g. in "Ullmann's Encyclopedia of Industrial Chemistry", 7th ed., 2011, Volume 29 (pp. 498 ff.). The rubber component may have a monomodal particle size distribution or a multimodal, e.g. bimodal particle size distribution. Preferably, the rubber component has a bimodal particle size distribution.

In cases, where in step (e) at least a portion of (ULM) is used as a fluid (ULM2), and wherein at least one stream (STR) is at least one stream (STR2), the process of the invention preferably further comprises the steps (a2) to (f2), for the preparation of a second polymer product (PP2), comprising a second polymer (P2) based on acrylonitrile (AN) and one or more further monomer(s) (FM) copolymerizable with (AN).

Step (a2)

In step (a2), the second stream (STR2) of (AN), (FM), optionally one or more solvent(s) (SOL), and optionally one or more further component(s) (FC) is provided, wherein (STR2) is fed into a second polymerization reactor (A2) and (ULM2) forms at least part of (STR2). Accordingly, the second stream (STR2) may further comprise one or more streams of (AN), (FM), optionally one or more solvent(s) (SOL), and optionally one or more further component(s) (FC) in addition to (ULM2), to regulate the monomer composition in (STR2). In contrast to (STR1) in step (a1), the amount of (PN) in (STR2) is not limited to less than 0.1% by weight, based on the total weight of (STR2). Accordingly, in some embodiments, the amount of (PN) in (STR2) may be at least 0.1% by weight, based on the total weight of (STR2). Preferably, the amount of (PN) in (STR2) is from 0.1 to 2% by weight, more preferably 0.2 to 1.5% by weight, more preferably 0.5 to 1.2% by weight, more preferably 0.7 to 1% by weight, based on the total weight of (STR2).

Furthermore, in some embodiments, the amount of other undesired contaminants from the introduced components in (STR2) is often at least 0.1% by weight, preferably from 0.1 to 2% by weight, more preferably 0.2 to 1.5% by weight, more preferably 0.5 to 1.2% by weight, more preferably 0.7 to 1% by weight, based on the total weight of (STR2).

Preferably, the amount of (AN) is at least 5% by weight, more preferably 6 to 70% by weight, more preferably 7 to 65% by weight, more preferably 8 to 60% by weight based on the total weight of all polymerizable monomers in (STR2).

Apart from this, the specifications described above for step (a1) apply accordingly to step (a2), the specifications described above for the first stream (STR1) described above apply accordingly to the second stream (STR2) and the specifications described above for the first polymerization reactor (A1) apply accordingly to the second polymerization reactor (A2). Within these specifications, the parameters selected for step (a2), stream (STR2), and polymerization reactor (A2) may be the same as or different from those selected for step (a1), stream (STR1) and polymerization reactor (A1), respectively. Preferably the parameters within these specifications are essentially the same. Particularly preferably, the one or more further monomer(s) (FM), and, if present, the one or more solvent(s) (SOL) and/or the one or more further component(s) (FC) provided in step (a2) are the same as in step (a1).

Step (b2)

In step (b2), the acrylonitrile (AN) and further monomer(s) (FM) that were fed into the polymerization reactor (A2) in step (a2) are polymerized.

The specifications of step (b2) differ from the specifications described above for step (b1) in that the second stream (STR2) as described above is used as source of acrylonitrile (AN) and further monomers (FM), and, if present one or more solvent(s) (SOL) and/or one or more further component(s) (FC) instead of the first stream (STR1), the polymerization is carried out in the second polymerization reactor (A2) instead of the first polymerization reactor (A1), and a second reaction mixture (M2) comprising the second polymer (P2) and volatile components (V2), which are volatile under the conditions of step (c2) is obtained instead of the first reaction mixture (M1) as described above.

Apart from this, the specifications described above for step (b1) apply accordingly to step (b2), the specifications described above for the first reaction mixture (M1) apply accordingly to the second reaction mixture (M2), the specifications described above for polymer (P1) apply accordingly to the second polymer (P2), and the specifications describe above for volatile components (V1) apply accordingly to volatile components (V2). Within these specifications, the parameters selected for step (b2), reaction mixture (M2), polymer (P2), and volatile components (V2) may be the same as or different from those selected for step (b1), reaction mixture (M1), polymer (P1) and volatile components (V1), respectively. Preferably the parameters within these specifications are essentially the same.

Step (c2)

In step (c2), at least a portion of the volatile components (V2) is evaporated from the second reaction mixture (M2).

The specifications of (c2) differ from the specifications described above for step (c1) in that the evaporating means can be a second evaporating means (B2) instead of the first evaporating means (B1), wherein the second reaction mixture (M2) instead of the first reaction mixture (M1) is subjected to a pressure of from 0.01 to 500 mbar, and a temperature of from 100 to 350 °C, to obtain a polymer fraction (PF2) instead of a polymer fraction (PF1), and an evaporated fraction (VF2) comprising volatile components (V2) instead if the evaporated fraction (VF1) comprising volatile components (V1).

Apart from this, the specifications described above for step (c1) apply accordingly to step (c2), the specifications described above for the first polymer fraction (PF1) comprising polymer (P1) apply accordingly to the second polymer fraction (PF2) comprising polymer (P2), and the specifications described above for evaporated fraction (VF1) comprising volatile components (V1) apply accordingly to the evaporated fraction (VF2) comprising volatile components (V2). Within these specifications, the parameters selected for step (c2), polymer fraction (PF2) and evaporated fraction (VF2) may be the same as or different from those selected for step (c1), polymer fraction (PF1) and evaporated fraction (VF1), respectively. Preferably the parameters within these specifications are essentially the same.

Step (d2)

In step (d2), at least a portion of volatile components (V2) is separated from the evaporated fraction (VF2) to obtain at least one fluid (ULM3) comprising propionitrile (PN), and unreacted acrylonitrile (AN) and/or unreacted further monomer(s) (FM) and/or, if present, solvent(s) (SOL).

Since the evaporated fraction (VF2) and volatile components (V2) contain similar, and often the same ingredients as the evaporated fraction (VF1) and volatile components (V1), respectively, steps (d1) and (d2) may be combined into a single process step, wherein both evaporated fractions (VF1) and (VF2) are treated simultaneously as a combined evaporated fraction (VF), comprising combined volatile components (V). In this case, the common separation means is the separation means described above for step (d1). In this case, the fluid (ULM3) is part of the fluid (ULM) obtained in step (d1), and therefore is further treated as (ULM), as described in step (e1).

Alternatively, the evaporated fraction (VF2) and volatile components (V2) may be treated separately from the evaporated fraction (VF1) and volatile components (V1), in the separate step (d2). In this case, apart from the above, the specifications described above for step (d1) apply accordingly to step (d2), the specifications described above for fluid (ULM) apply accordingly to fluid (ULM3), and the specification described above for the separating means used in step (d1) apply accordingly to the separating means used in step (d2). In this case, one or more fractions comprising or enriched with (PN), (AN), (FM) and/or, if present, (SOL) obtained in step (d2) from one separation means (SM) may be combined with one or more fractions comprising or enriched with the respective component obtained in step (d1) from the respective separation means (SM) and further treated as the respective fraction obtained in step (d1), for example in a common second separation means (SM), or as part of fluid (ULM).

Within these specifications, the parameters selected for step (d2), fluid (ULM3) and separating means used in step (d2) may be the same as or different from those selected for step (d1), fluid (ULM) and separating means used in step (d1), preferably the one or more separating means (SM), respectively.

Preferably, either at least one of the parameters within these specifications is different, or the evaporated fractions (VF1) and (VF2) are treated simultaneously as a combined evaporated fraction (VF) in common separation means.

Step (e2)

In step (e2), at least a portion of (ULM3) obtained from step (d2) can be used as part of (ULM) as described above for steps (d1) and (e1). In this case, at least a portion of (ULM3) obtained from step (d2) may be combined and further processed with (ULM) after passing different separation means (SM), or (ULM3) is obtained as part of (ULM) from common separation means, as described above for step (d2).

Furthermore, at least a portion of (ULM3) can be provided as part of at least one stream (STR3) of acrylonitrile (AN), one or more further monomer(s) (FM), optionally one or more solvent(s) (SOL) and optionally one or more further component(s) (FC), which is used for the preparation of a polymer product (PP) comprising a polymer (P) based on acrylonitrile (AN) and one or more further monomer(s) (FM) copolymerizable with (AN).

Similarly as stream (STR) in step (e1), the at least one stream (STR3) in step (e2) may be first stream (STR1) and/or second stream (STR2) as described above.

Where at least one stream (STR3) is first stream (STR1), the portion of (ULM3) used as part of (STR1) is a fluid (ULM4) containing any amount of (PN), with the proviso that (ULM4) and (ULM1) provided as part of (STR1) together contain less than 0.2% by weight (less than 2000 ppm (w/w)), preferably less than 0.1% by weight, more preferably less than 0.08% by weight, more preferably 0.05% by weight or less, more preferably less than 0.04% by weight of propionitrile (PN), based on the total weight of (ULM4) and (ULM1) combined, and (ULM1) and (ULM4) together form less than 50% by weight, preferably 35 to 49% by weight, more preferably 38 to 47% by weight, more preferably 40 to 45% by weight of the entire first stream (STR1). In cases where no (ULM1) is present, but (ULM4) is present, these values apply to (ULM4) alone.

Preferably, (ULM4) itself contains less than 0.2% by weight (less than 2000 ppm (w/w)), preferably less than 0.1% by weight, more preferably less than 0.08% by weight, more preferably 0.05% by weight or less, more preferably less than 0.04% by weight of propionitrile (PN), based on the total weight of (ULM4).

Furthermore, where at least one stream (STR3) is a second stream (STR2), the portion of (ULM3) used as part of (STR2) is defined as fluid (ULM5).

In cases where both fluids (ULM1) and (ULM4) are provided as part of first stream (STR1), (ULM1) and (ULM4) may be provided as a combined fluid. Similarly, where both fluids (ULM2) and (ULM5) are provided as part of second stream (STR2), (ULM2) and (ULM5) may be provided as a combined fluid.

Apart from this, the specifications described above for step (e1) apply accordingly to step (e2), the specifications described above for fluid (ULM) apply accordingly to fluid (ULM3), the specifications described above for the at least one stream (STR) apply accordingly to the at least one stream (STR3), the specifications described above for fluid (ULM1) apply accordingly to fluid (ULM4), and the specifications described above for fluid (ULM2) apply accordingly to fluid (ULM5). Within these specifications, the parameters selected for step (e2), fluid (ULM3), stream (STR3), fluid (ULM4) and fluid (ULM5) may be the same as or different from those selected for step (e1), fluid (ULM), stream (STR), fluid (ULM1) and fluid (ULM2), respectively.

Step (f2)

In step (f2), the polymer fraction (PF2) comprising polymer (P2) obtained in step (c2) is continuously collected and optionally further processed, to obtain the polymer product (PP2) comprising (P2).

Since the presence of large amounts of propionitrile (PN) is not desired, even in applications that are not intended for food contact, child contact or medical applications, preferably the further processing is carried out and comprises further degassing of the polymer fraction (PF1) at a pressure of from 0.01 to 10 mbar, preferably at 0.1 to 8 mbar, more preferably at 1 to 6 mbar, more preferably at 2 to 5 mbar, and at a temperature of from 100 to 350 °C, preferably from 150 to 300 °C, more preferably from 200 to 280 °C, more preferably from 250 to 270 °C. Preferably this further degassing is carried out by means of a strand degasser and/or with a degassing extruder, wherein the specified pressures and temperatures can be established. After this further degassing, the polymer product (PP2) typically still comprises at least 0.15 ppm, often at least 0.2 ppm (w/w) of propionitrile (PN), preferably 0.17 to 20 ppm, more preferably 0.2 to 5 ppm (w/w) of (PN), based on the total weight of (PP2).

In addition, further processing preferably includes thermoplastic processing steps such as molding, extrusion, granulation, and compounding of the polymer fraction (PF2) with other components.

Apart from this, the specifications described above for step (f1) apply accordingly to step (f2), the specifications described above for polymer fraction (PF1) and its optional further processing apply accordingly to polymer fraction (PF2) and its optional further processing, and the specifications described above for polymer product (PP1) apply accordingly to polymer product (PP2). Within these specifications, the parameters selected for step (f2), polymer fraction (PF2) and its optional further processing, and polymer product (PP2) may be the same as or different from those selected for step (f1), polymer fraction (PF1) and its optional further processing, and polymer product (PP1), respectively.

Where steps (a2) to (f2) are carried out, the process of the invention is preferably a process for the simultaneous preparation of two polymer products, which are:

a first polymer product (PP1) comprising a first polymer (P1) based on acrylonitrile (AN) and one or more further monomer(s) (FM) copolymerizable with (AN), and less than 0.15 ppm, preferably less than 0.1 ppm (w/w) of propionitrile (PN), based on the total weight of (PP1); and

a second polymer product (PP2) comprising a second polymer (P2) based on acrylonitrile (AN) and one or more further monomer(s) (FM) copolymerizable with (AN), and at least 0.15 ppm, preferably at least 0.2 ppm (w/w) of propionitrile (PN), based on the total weight of (PP2).

Embodiments of the process of the invention are described in the following. In these embodiments, the parameters not explicitly mentioned can be varied within the specifications described above. The embodiments are merely illustrative and are not to be understood as limiting to the process of the invention

Embodiment 1:

In step (a1), 6 to 70% by weight, based on the total weight of all polymerisable monomers, of acrylonitrile (AN) and 30 to 94% by weight, based on the total weight of all polymerisable monomers, of one or more further monomer(s) (FM) are each provided in a separate stream (STR1) into a first polymerisation reactor (A1). No solvent (SOL) and no further component(s) (FC) are used. The propionitrile (PN) content in (STR1) is less than 0.1% by weight, based on the total weight of (STR1).

In step (b1), the polymerisation is carried out at a temperature of from 130 °C to 180 °C.

In step (c1), the evaporation is carried out at a pressure of from 30 to 70 mbar and a temperature of from 200 to 330 °C.

In step (d1), oligomers (O) are separated from the evaporated fraction (VF1) in an oligomer separator (C), and a fraction comprising (PN), unreacted (AN) and unreacted (FM) is condensed in a condensation means (CM) by cooling with a mixture of water, propylene glycol and diethylene glycol having a temperature of 1 to 8 °C, to obtain a fluid (ULM). A portion of the fluid (ULM) is transferred to a storage tank (F), and is dosed therefrom into the oligomer separator (C) as coolant.

In step (e1), another portion of the fluid (ULM) is used as a fluid (ULM2), which is provided as part of a second stream (STR2) into a second polymerization reactor (A2).

In step (f1), a polymer fraction (PF1) containing a polymer (P1) is collected and further processed in a strand degasser at a pressure of 1 to 6 mbar and a temperature of from 150 to 300 °C to obtain a polymer melt comprising less than 0.15 ppm (w/w) of propionitrile. The polymer melt is further compounded with a rubber component, to obtain a polymer product (PP1) containing less than 0.15 ppm (w/w) of propionitrile.

In step (a2), fluid (ULM2), acrylonitrile (AN) and the same further monomer(s) (FM) as in step (a1) are each separately provided as part of second stream (STR2), thus that the monomer ratio is the same as in step (a1). No solvent (SOL) and no further component(s) (FC) are used.

In step (b2), the polymerisation is carried out at a temperature of from 130 °C to 180 °C.

In step (c2), the evaporation is carried out at a pressure of from 30 to 70 mbar and a temperature of from 200 to 330 °C.

In step (d2), evaporated fraction (VF2) is combined with evaporated fraction (VF1) and further processed as in step (d1), thus that the obtained fluid (ULM3) entirely forms part of fluid (ULM) and is further used accordingly.

In step (e2), the entire fluid (ULM3) necessarily forms part of (ULM) and therefore a portion thereof is used as part of stream (STR2).

In step (f2), a polymer fraction (PF2) containing a polymer (P2) is collected and further processed in a strand degasser at a pressure of 1 to 6 mbar and a temperature of from 150 to 300 °C to obtain a polymer melt comprising more than 0.15 ppm (w/w) of propionitrile. The melt is further compounded with a rubber component, to obtain a polymer product (PP2) containing at least 0.15 ppm (w/w) of propionitrile.

Since (STR1) contains less than 0.1% by weight of (PN) in step (a1) and the fluids (ULM) and (ULM3) are used in a second polymerization, the amount of (PN) in polymer product (PP1) remains below 0.15 ppm (w/w). In contrast, the amount of (PN) in polymer product (PP2) increases, since (PN) is not removed from the fluids, which are continuously re-introduced into the polymerisation reactor (A2). However, due to the conditions present in the evaporation means (B2) and the strand degasser, the propionitrile content of polymer product (PP2) typically remains under 20 ppm (w/w).

Embodiment 2

Steps (a1) to (c1) are carried out as in Embodiment 1.

In step (d1), a fraction comprising (PN), unreacted (AN), unreacted (FM) and oligomers (O) is condensed from the evaporated fraction (VF1) in a condensation means (CM) by cooling with water having a temperature of 2 to 8 °C, and further distilled in a simple distillation column (G), wherein oligomers (O) are collected from the bottom of the column, and a fraction comprising (PN), unreacted (AN) and unreacted (FM) is collected at the top of the distillation column, to obtain a fluid (ULM).

Steps (e1), (f1) and (a2) to (f2) are carried out as in Embodiment 1, however a degassing extruder is used instead of the strand degasser in steps (f1) and (f2). The polymer product (PP1) contains less than 0.15 ppm (w/w) of propionitrile, the polymer product (PP2) contains at least 0.15 ppm (w/w) of propionitrile.

Since (STR1) contains less than 0.1% by weight of (PN) in step (a1) and the fluids (ULM) and (ULM3) are used in a second polymerization, the amount of (PN) in polymer product (PP1) remains below 0.15 ppm (w/w). In contrast, the amount of (PN) in polymer product (PP2) increases, since (PN) is not removed from the fluids, which are continuously re-introduced into the polymerisation reactor (A2). However, due to the conditions present in the evaporation means (B2) and the degassing extruder, the propionitrile content of polymer product (PP2) typically remains under 20 ppm (w/w).

Embodiment 3

Steps (a1) to (c1) are carried out as in Embodiment 1.

In step (d1), oligomers (O) are separated from the evaporated fraction (VF1) in an oligomer separator (C), and a fraction comprising (PN), unreacted (AN) and unreacted (FM) is obtained. The fraction comprising (PN), (AN) and (FM) is fractionally condensed in a series of two condensers (D) and (E), wherein condenser (D) is operated at conditions between those required for condensation of (FM) and those required for the condensation of (PN) and (AN), to obtain two fluids (ULM), being a fraction containing (FM) and less than 0.1% by weight of (PN), as a first fluid (ULM1), and a fraction comprising (AN) and more (PN) than in (ULM1), as a second fluid (ULM2). A portion of the second fluid (ULM2) is transferred to a storage tank (F), and is dosed therefrom into the oligomer separator (C) as coolant.

In step (e1), another portion of the fluid (ULM2) is provided as a second stream (STR2) into a second polymerization reactor (A2). The fluid (ULM1) is entirely provided as part of (STR1) into the first polymerization reactor (A1). The feeding rate of fresh (FM) is reduced depending on the feeding rate of fluid (ULM1) and the content of (FM) therein.

Steps (f1) and (a2) to (f2) are carried out as in Embodiment 1. The polymer product (PP1) contains less than 0.15 ppm (w/w) of propionitrile, the polymer product (PP2) contains at least 0.15 ppm (w/w) of propionitrile.

Since (STR1) (consisting of fresh monomers (AN) and (FM), and (ULM1)) contains less than 0.1% by weight of (PN) in step (a1) and the fluid (ULM2) is used in a second polymerization, the amount of (PN) in polymer product (PP1) remains below 0.15 ppm (w/w). In contrast, the amount of (PN) in polymer product (PP2) increases, since (PN) is not removed from the fluid (ULM2), and (PN) is continuously re-introduced into the polymerisation reactor (A2). However, due to the conditions present in the evaporation means (B2) and the strand degasser, the propionitrile content of polymer product (PP2) typically remains under 20 ppm (w/w).

Embodiment 4

Steps (a1) to (c1) are carried out as in Embodiment 1.

Step (d1) is carried out in the same way as in Embodiment 3, however, the fractional condensation is carried out in a series of three condensers, wherein the third condenser is operated at conditions between those required for condensation of (PN) and those required for the condensation of (AN), to obtain a first fraction containing (FM) and less than 0.2% by weight of (PN), a second fraction enriched with (PN), and a third fraction containing (AN) and less than 0.2% by weight of (PN). The first fraction and the third fraction are combined to form a fluid (ULM). The second fraction enriched with (PN) is discarded. A portion of the fluid (ULM) is transferred to a storage tank (F), and is dosed therefrom into the oligomer separator (C) as coolant.

In step (e1), another portion of the fluid (ULM) is used as a fluid (ULM1), which is provided as a part (40 to 45% by weight) of (STR1) into the first polymerization reactor (A1). The feeding rate of fresh (AN) and fresh (FM) are reduced depending on the feeding rate of fluid (ULM1) and the ratio of (AN) and (FM) therein.

In step (f1), a polymer fraction (PF1) containing a polymer (P1) is collected and further processed in a strand degasser at a pressure of 1 to 6 mbar and a temperature of from 150 to 300 °C to obtain a polymer melt comprising less than 0.15 ppm (w/w) of propionitrile. The melt is further compounded with a rubber component, to obtain a polymer product (PP1) containing less than 0.15 ppm (w/w) of propionitrile.

Steps (a2) to (f2) are not carried out, since no fluid (ULM2) is provided.

Since (STR1) (consisting of fresh monomers (AN) and (FM), and (ULM1))contains less than 0.1% by weight of (PN) in step (a1) and the fraction enriched with (PN) is discarded, the amount of (PN) in polymer product (PP1) remains below 0.15 ppm (w/w).

Embodiment 5

Steps (a1) to (c1) are carried out as in Embodiment 1.

Step (d1) is carried out in the same way as in Embodiment 2, however, the distillation is carried out in a fractional distillation column (G), wherein a first fraction containing oligomers (O), a second fraction containing (FM) and less than 0.1% by weight of (PN), a third fraction enriched with (PN) and a fourth fraction containing (AN) and less than 0.1% by weight of (PN) are obtained. The second fraction and the fourth fraction are combined to form a fluid (ULM). The third fraction enriched with (PN) is discarded.

In step (e1), a portion of the fluid (ULM) is used as a fluid (ULM1), which is provided as a part of (STR1) into the first polymerization reactor (A1). Another portion of the fluid (ULM) is transferred into a storage tank for later use. The feeding rate of fresh (AN) and fresh (FM) are reduced depending on the feeding rate of fluid (ULM1) and the ratio of (AN) and (FM) therein.

In step (f1), a polymer fraction (PF1) containing a polymer (P1) is collected and further processed in a strand degasser at a pressure of 1 to 6 mbar and a temperature of from 150 to 300 °C to obtain a polymer melt comprising less than 0.15 ppm (w/w) of propionitrile. The melt is further compounded with a rubber component, to obtain a polymer product (PP1) containing less than 0.15 ppm (w/w) of propionitrile.

Steps (a2) to (f2) are not carried out, since no fluid (ULM2) is provided.

Since (STR1) (consisting of fresh monomers (AN) and (FM), and (ULM1)) contains less than 0.1% by weight of (PN) in step (a1) and the fraction enriched with (PN) is discarded, the amount of (PN) in polymer product (PP1) remains below 0.15 ppm (w/w).

Embodiment 6

Steps (a1) to (f1) and (a2) to (c2) are carried out as in Embodiment 1.

Step (d2) is carried out in the same way as step (d1) in Embodiment 5, however, using the evaporated fraction (VF2) instead of evaporated fraction (VF1), to obtain a first fraction containing oligomers (O), a second fraction containing (FM) and less than 0.2% by weight of (PN), a third fraction enriched with (PN) and a fourth fraction containing (AN) and less than 0.2% by weight of (PN). The second fraction and the fourth fraction are combined to form a fluid (ULM4). The third fraction enriched with (PN) is collected as fluid (ULM5).

In step (e2), a portion of the fluid (ULM4) is provided as a part (30 to 49% by weight) of (STR1) into the first polymerization reactor (A1). Another portion of the fluid (ULM4) is transferred into a storage tank for later use. The feeding rate of fresh (AN) and fresh (FM) are reduced depending on the feeding rate of fluid (ULM4) and the ratio of (AN) and (FM) therein. The fluid (ULM5) is provided as part of (STR2) into the second polymerization reactor (A2).

In step (f2), a polymer fraction (PF2) containing a polymer (P2) and more than 0.15 ppm (w/w) of propionitrile is collected, and further compounded with a rubber component, to obtain a polymer product (PP2) containing more than 0.15 ppm (w/w) of propionitrile.

Since (STR1) (consisting of fresh monomers (AN) and (FM), and (ULM4))contains less than 0.1% by weight of (PN) in step (a1) and the fluid (ULM2) is used in a second polymerization, the amount of (PN) in polymer product (PP1) remains below 0.15 ppm (w/w). In contrast, the amount of (PN) in polymer product (PP2) increases, since fractions enriched with (PN) are continuously re-introduced into the polymerisation reactor (A2). Due to the absence of a strand degasser or degassing extruder in step (f2), the propionitrile content of polymer product (PP2) typically exceeds 20 ppm (w/w).

Embodiment 7

In step (a1), 6 to 70% by weight, based on the total weight of all polymerisable monomers, of acrylonitrile (AN) and 30 to 94% by weight, based on the total weight of all polymerisable monomers, of one or more further monomer(s) (FM) are separately provided as part of first stream (STR1) into a first polymerisation reactor (A1). A solvent (SOL), and a radical polymerisation initiator as further component (FC) are also provided separately as part of first stream (STR1). The propionitrile (PN) content in (STR1) is less than 0.1% by weight, based on the total weight of (STR1).

In step (b1), the polymerisation is carried out at a temperature of from 100 °C to 160 °C, and under conditions at which (FC) forms radicals.

In step (c1), the evaporation is carried out at a pressure of from 30 to 70 mbar and a temperature of from 200 to 330 °C.

Step (d1) is carried out in the same way as in Embodiment 2, however, the distillation is carried out in a fractional distillation column (G), wherein a first fraction containing oligomers (O), a second fraction containing (FM) and less than 0.2% by weight of (PN), a third fraction containing (SOL) and less than 0.2% by weight of (PN), a fourth fraction enriched with (PN), and a fifth fraction containing (AN) and less than 0.2% by weight of (PN) are obtained. The second fraction, the fifth fraction and a portion of the third fraction are combined to form a fluid (ULM1). The fourth fraction enriched with (PN) and a portion of the third fraction are combined to form a fluid (ULM2). The first fraction containing oligomers (O) is discarded.

In step (e1), all of the fluid (ULM1) is provided as a part (35 to 49% by weight) of (STR1) into the first polymerization reactor (A1), and all of the fluid (ULM2) is provided as a part of (STR2) into a second polymerization reactor (A2). The feeding rate of fresh (AN), fresh (FM) and fresh (SOL) are reduced depending on the feeding rate of fluid (ULM1) and the ratio of (AN), (FM) and (SOL) therein.

In step (f1), a polymer fraction (PF1) containing a polymer (P1) is collected and further processed in a strand degasser at a pressure of 1 to 6 mbar and a temperature of from 150 to 300 °C to obtain a polymer melt comprising less than 0.15 ppm (w/w) of propionitrile.The melt is not subjected to further processing, to obtain a polymer product (PP1) containing less than 0.15 ppm (w/w) of propionitrile.

In step (a2), fluid (ULM2), acrylonitrile (AN) and the same further monomer(s) (FM) as in step (a1) are each provided separately as part of stream (STR2), thus that the monomer ratio is the same as in step (a1). No solvent (SOL) except for that contained in (ULM2) and no further component(s) (FC) are used.

In step (b2), the polymerisation is carried out at a temperature of from 130 °C to 180 °C.

In step (c2), the evaporation is carried out at a pressure of from 30 to 70 mbar and a temperature of from 200 to 330 °C.

In step (d2), evaporated fraction (VF2) is combined with evaporated fraction (VF1) and further processed as in step (d1), thus that the obtained fluid (ULM3) entirely forms part of fluids (ULM1) and (ULM2), and is further used accordingly.

In step (e2), the entire fluid (ULM3) necessarily forms part of (ULM1) and (ULM2) and therefore a portion thereof is used as part of streams (STR1) and (STR2).

In step (f2), a polymer fraction (PF2) containing a polymer (P2) is collected and further processed in a strand degasser at a pressure of 1 to 6 mbar and a temperature of from 150 to 300 °C to obtain a polymer product (PP2) containing at least 0.15 ppm (w/w) of propionitrile.

Since (STR1) contains less than 0.1% by weight of (PN) in step (a1) and the fluid (ULM2) is used in a second polymerization, the amount of (PN) in polymer product (PP1) remains below 0.15 ppm (w/w). In contrast, the amount of (PN) in polymer product (PP2) increases, since fractions enriched with (PN) are continuously re-introduced into the polymerisation reactor (A2). However, due to the conditions present in the evaporation means (B2) and the strand degasser, the propionitrile content of polymer product (PP2) typically remains under 20 ppm (w/w).

Embodiment 8

In step (a1), 6 to 70% by weight, based on the total weight of all polymerisable monomers, of acrylonitrile (AN) and 30 to 94% by weight, based on the total weight of all polymerisable monomers, of one or more further monomer(s) (FM), and a solvent (SOL) are provided as part of first stream (STR1) into a first polymerisation reactor (A1). A portion of the components is provided in form of a fluid (ULM) from a buffer tank (F), which forms 40 to 45% by weight of (STR1) and initially contains 0.2 to 2% by weight of (PN).

The propionitrile (PN) content in (AN) is defined as "y%" and is from 1 to 100 ppm (w/w), based on the total weight of (AN). The further monomer(s) (FM) and solvent (SOL) do not contain (PN).

A predetermined (PN) content in the fluid (ULM1) is defined as "z%" and is smaller than 0.2% by weight, based on the total weight of (ULM1), but greater than y%.

The feed rate of (AN) is defined as "Y". Accordingly, the feed rate of (PN) is y% multiplied with Y.

In step (b1), the polymerisation is carried out at a temperature of from 130 °C to 180 °C.

In step (c1), the evaporation is carried out at a pressure of from 40 to 70 mbar and a temperature of from 200 to 330 °C.

In step (d1), oligomers (O) are separated from the evaporated fraction (VF1) in an oligomer separator (C), and a fraction comprising (PN), unreacted (AN), unreacted (FM) and (SOL) is obtained. The fraction comprising (PN), (AN), (FM) and (SOL) is fractionally condensed in a series of two condensers (D) and (E), wherein condenser (D) is operated at conditions between those required for condensation of (FM) and (SOL) and those required for the condensation of (PN) and (AN), to obtain two fluids (ULM), being a fraction containing (FM) and (SOL) as a first fluid (ULM)-A, and a fraction comprising (AN), minor amounts of (FM) and (SOL), and more (PN) than in the first fluid (ULM)-A as a second fluid (ULM)-B.

A portion of second fluid (ULM)-B is removed from condenser (E) at a withdrawal rate X, wherein X is calculated according to the following equation (eq.1):

$$X = \frac{Y \cdot y\%}{z\%} \qquad (eq. 1)$$

The remainder of the second fluid (ULM)-B is combined and further processed together with the first fluid (ULM)-A.

The portion of second fluid (ULM)-B withdrawn at rate X may be e.g. discarded or used as a fluid (ULM2) in another polymerization process.

A portion of the first fluid (ULM)-A is transferred to a storage tank (F), and is dosed therefrom into the oligomer separator (C) as coolant.

In step (e1), the combined first fluid (ULM)-A is provided as part of first stream (STR1) into the first polymerization reactor (A1). The feeding rate of fresh (FM) and (AN) is reduced depending on the feeding rate of first fluid (ULM)-A and the concentration of (FM) therein. The feeding rate of (SOL) is adjusted depending on the withdrawal rate and concentration of (SOL) in the withdrawn portion of second fluid (ULM)-B.

Withdrawal of (ULM)-B at a withdrawal rate of X according to (eq.1) from the second condenser (E) leads to the concentration of (PN) in the combined first fluid (ULM)-A sinking below 0.2% by weight (after which the combined first fluid (ULM)-A is considered to be fluid (ULM1)), and stabilizing at z%.

Step (f1) is carried out as in Embodiment 1. The polymer product (PP1) (obtained after the concentration of (PN) in the first fluid (ULM)-A sinks below 0.2% by weight) contains less than 0.15 ppm (w/w) of propionitrile. The polymer product obtained before the concentration sinks below 0.2% contains at least 0.15 ppm (w/w) of propionitrile, and is used for purposes not involving contact with food, children or medical applications.

Since (STR1) contains less than 0.1% by weight of (PN) after the concentration of (PN) in the first fluid (ULM)-A stabilizes at z% in step (a1), the amount of (PN) in polymer product (PP1) remains below 0.15 ppm (w/w).

Embodiment 9

Steps (a1) to (f1) are carried out as in Embodiment 8. However, in step (d1), the concentration c%-B of (PN) in the second fluid (ULM)-B and the concentration c%-A of (PN) in the combined first fluid (ULM)-A is determined, the ratio n of the concentrations c%-B : c%-A is determined, and the withdrawal rate X is calculated according to the following equation (eq.3).

$$X = \frac{Y \cdot y\%}{n \cdot z\%} \qquad (eq. 3)$$

Accordingly, the withdrawal rate X in Embodiment 9 is 1/n of the withdrawal rate X in Embodiment 8. The overall loss of monomers (AN) and (FM) and solvent (SOL) is significantly decreased in the long run, thus that withdrawal at a rate X according to (eq.3) is preferred over that according to (eq.1), especially if the withdrawn portion of (ULM)-B is discarded (e.g. when investment into a second polymerization process or distillation column is economically non-viable).

Embodiment 10

Steps (a1) to (c1) are carried out as in Embodiment 1, however a solvent (SOL) is introduced into the first polymerization reactor (A1) in step (a1); the feeding of (SOL) is regulated according to the loss of (SOL) from the system, i.e., after initiation, the feeding of (SOL) is essentially stopped.

In step (d1), the entire evaporated fraction (VF1) is directly introduced into a fractionating distillation column (G), wherein oligomers (O) and other heavy boiling components are collected from the bottom of the column, a fraction comprising (FM) and (SOL), and less than 0.2% by weight of (PN) is collected in the center of the column as a fluid (ULM1), a fraction containing (AN) and (PN) is collected at the top of the column as a fluid (ULM2), and residual volatiles are discarded.

In step (e1), (ULM1) is provided as part of the first stream (STR1) into the first polymerization reactor (A1), and (ULM2) is provided as part of a second stream (STR2) into a second polymerization reactor (A2);

Steps (f1) and (a2) to (c2) are carried out as in Embodiment 1;

In step (d2), the entire evaporated fraction (VF2) is introduced into the distillation column (G) and further treated together with the first evaporated fraction (VF1), inter alia forming a fraction comprising (FM) and (SOL), and less than 0.2% by weight of (PN), which is collected in the center of the column as a fluid (ULM4) together with (ULM1), and a fraction containing (AN) and (PN), which is collected at the top of the column as a fluid (ULM5) together with (ULM2);

In step (e1), (ULM4) is provided together with (ULM1) as part of the first stream (STR1) into the first polymerization reactor (A1), and (ULM5) is provided together with (ULM2) as part of the second stream (STR2) into the second polymerization reactor (A2);

Step (f2) is carried out as in Embodiment 1.

A schematic view of Embodiment 10 is shown in FIG. 15.

Another aspect of the present invention is a preparation system configured for carrying out the process of the invention as described above, wherein the preparation system comprises a first polymerisation reactor (A1), a first evaporation means (B1), a separation means (SM) and a circulating fluid loop, and optionally a strand degasser and/or degassing extruder, wherein the separation means (SM) comprises one or more condensation means (CM) configured to condense volatile components to form a fluid (ULM), and the separation means includes means enabling division of individual or combined condensed fractions of the fluid (ULM) into different portions, allowing withdrawal of one or more portions thereof, wherein the separation means (SM) is configured to at least partially remove (PN) from at least a portion of a circulating fluid comprising (PN), and unreacted (AN) and/or unreacted (FM) and/or, if present, (SOL), thus that the concentration of (PN) in the circulating fluid is below 0.2% by weight by continuously withdrawing a portion of the circulating fluid through the means enabling division of individual or combined condensed fractions into different portions, wherein the preparation system further comprises means for continuous monitoring of the concentration of (PN) in the circulating fluid, preferably by gas chromatography.

Preferably, the polymerisation reactor (A1), the evaporation means (B1) and the separation means (SM) are as described above for the process of the invention. More preferably, the polymerisation system of the invention is configured to carry out the process described above for the simultaneous preparation of a first polymer product (PP1) and a second polymer product (PP2), and further comprises a second polymerisation reactor (A2) and a second evaporation means (B2). More preferably, the polymerisation reactor (A2) and the evaporation means (B2) are as described above for the process of the invention.

Another aspect of the present invention is a method for the preparation of an article for food contact, child contact, preferably a toy, or medical applications, comprising the steps:

(i) carrying out the process as described above, wherein in step (f1) further processing is carried out at a pressure of from 0.01 to 10 mbar, preferably at 0.1 to 8 mbar, more preferably at 1 to 6 mbar, more preferably 2 to 5 mbar and a temperature of from 100 to 350 °C, preferably from 150 to 300 °C, more preferably from 200 to 280 °C, more preferably from 250 to 270 °C, to obtain a polymer product (PP1) comprising a polymer (P1) based on acrylonitrile (AN) and at least one further monomer (FM), and less than 0.15 ppm (w/w) of propionitrile (PN), based on the total weight of (PP1);
(ii) optionally adding further components to the polymer product (PP1); and
(iii) preparing an article for food contact, child contact, preferably a toy, or medical applications therefrom.

The further components that are optionally added to the polymer product (PP1) may be any components useful in the preparation of articles for food contact, child contact (e.g. toys) or medical applications. Such components are known in the art and can be, e.g., other polymers, fillers or additives. Suitable components are described, e.g. in "Plastics Additives Handbook" (H. Zweifel, R. D. Maier, M. Schiller, 6th ed., Hanser, Munich). The further components optionally added to the polymer product (PP1) are selected to be safe for use in articles designed for food contact, for medical applications and for being handled by children.

The preparation of the article may be carried out by any means known in the art, for example by extrusion, injection molding, rotomolding, deep drawing, 3D printing and selective laser sintering.

Preferably, the method for the preparation of an article is a method for the simultaneous preparation of an article for food contact, child contact, preferably a toy, or medical applications and of an article not for food contact, child contact or medical applications, wherein in step (i) a polymer product (PP2) comprising a polymer (P2) based on acrylonitrile (AN) and at least one further monomer (FM), and from 0.15 ppm to 20 ppm (w/w) of propionitrile (PN), based on the total weight of (PP2), is obtained, further comprising the steps:

(iv) optionally adding further components to the polymer product (PP2); and
(v) preparing an article not for food contact, child contact or medical applications therefrom.

The further components that are optionally added to the polymer product (PP2) may be any components useful in the preparation of articles useful for any purpose. Such components are known in the art and are described, e.g. in "Plastics Additives Handbook" (H. Zweifel, R. D. Maier, M. Schiller, 6th ed., Hanser, Munich), and can be the same or different from those used with polymer product (PP1).

Similarly to the articles designed for food contact, for medical applications and for being handled by children, the article prepared from polymer product (PP2) may be prepared by any means known in the art, for example by extrusion, injection molding, rotomolding, 3D printing and selective laser sintering.

Another aspect of the present invention is a thermoplastic composition comprising a polymer (P1) based on acrylonitrile (AN) and at least one further monomer (FM) copolymerizable with (AN), and 0.0001 to 0.15 ppm (w/w), preferably 0.001 to 0.1 ppm (w/w), more preferably 0.01 to 0.05 ppm (w/w), based on the thermoplastic composition, of propionitrile (PN).

Preferably, the thermoplastic composition comprises the polymer (P1) compounded with a rubber component, preferably acrylonitrile butadiene styrene (ABS) rubber or acrylonitrile styrene acrylate (ASA) rubber, more preferably with ABS rubber.

Preferably, the thermoplastic composition is the polymer product (PP1) obtained by the process of the invention, wherein in step (f1) further processing is carried out and comprises degassing (PF1), preferably with a strand degasser and/or with a degassing extruder, at a pressure of from 0.01 to 10 mbar, preferably at 0.1 to 8 mbar, more preferably at 1 to 6 mbar, more preferably 2 to 5 mbar and a temperature of from 100 to 350 °C, preferably from 150 to 300 °C, more preferably from 200 to 280 °C, more preferably from 250 to 270 °C.

Another aspect of the present invention is the use of the thermoplastic composition as described above for the preparation of an article comprising less than 0.15 ppm (w/w) of propionitrile (PN), based on the total weight of the article. Preferably, the article is one for food contact, child contact (e.g. a toy) and/or medical applications.

Another aspect of the present invention is an article for food contact, child contact and/or medical applications comprising less than 0.15 ppm (w/w) of propionitrile (PN), based on the total weight of the article, prepared from the thermoplastic composition of the invention, or prepared by the process of the invention. Preferably, the article for child contact is a toy.

Preferably, the article is prepared by a method for the preparation of an article for food contact, child contact or medical applications, as described above.

The invention is further illustrated by the following examples, Figures and claims.

Examples

Determination of the composition of fluids, in particular of the propionitrile content in the fluids was carried out by gas chromatography, using a GC2010 Plus gas chromatograph manufactured by Shimadzu. A sample of the fluid was injected using the auto-sampling system AOC-20s and the injection tower AOC-20i, both manufactured by Shimadzu, into the gas chromatograph. The separation column was a DB-Wax column manufactured by Agilent J&W having a length of 30 m, a diameter of 0.25 mm, and a film thickness of 0.25 μm, manufactured by Agilent J&W. The detector was a flame ionisation detector (FID) manufactured by Shimadzu. The propionitrile detection limit was 200 ppm. The software for evaluation of the results is EZChrome Elite version 3.3.2 SP2 from Agilent.

Determination of propionitrile content in the polymer product was carried out by dissolving a sample of the polymer product in gamma-butyrolactone and analysing by means of Headspace-GC/MS.

The determination was carried out with a mass-selective detector with a detection limit of 50 μg/kg (= 0.05 ppm(w/w)), using internal standard addition. The results were documented as the average value of two measurements. The analysis was carried out with instruments and parameters disclosed in "Analysis of Volatile Organic Compounds in Water Using Static Headspace-GC/MS" by Agilent Technologies (2008, Application note). The polymer product solution in gamma-butyrolactone with known polymer concentration is used instead of the water samples disclosed for the method, and the (PN) content in the polymer product is calculated from the measurement results and the known concentration.

Comparative Example 1:

In a 9.3 $m^3$ vessel (A1) equipped with dosing equipment, reflux-condenser, stirrer and pump at the bottom of the vessel, a reaction mixture of styrene (FM), acrylonitrile (AN) and ethylbenzene as solvent (SOL) was reacting to form a SAN-polymer in a thermally initiated reaction at a temperature of 167 °C. Fresh styrene and acrylonitrile were separately provided as a first stream (STR1) into the reactor. A fluid (ULM) comprising styrene, acrylonitrile and ethyl benzene from a buffer tank (F) was dosed as a further part of stream (STR1) into the vessel (A1). The feeding rates of the components were regulated by the dosing equipment.

From the vessel (A1), the reaction mixture in molten form was transferred into degassing equipment (B1) comprising a tube bundle heat exchanger followed by a flash chamber for the removal of volatile components, operated at 64 mbar and 300-320 °C (heating medium) or 261 °C (molten polymer). The gaseous non reacted substances were thus evaporated from the degassing equipment (B1) into an oligomer separator (C) where fluid (ULM) from tank (F) was sprayed from the top to cool down the hot gases at a pressure of 65 mbar. The condensing oligomers in liquid form were separated from the other hot gases in this vessel.

The remaining vapours were condensed by using 2 condensers (heat exchangers) while the first heat exchanger (D) was operating at 25 °C (water as coolant) and 65 mbar to condense a fraction comprising styrene (54 wt.-%), solvent (41 wt.-%, mainly ethylbenzene) and minor amounts of acrylonitrile (5 wt.-%) and the second one (E) was operating at 3.0 °C (mixture of water, propylene glycol and diethylene glycol as coolant) and 65 mbar, to condense a fraction comprising mainly acrylonitrile (55 wt.-%), styrene (20 wt.-%), solvent (21.8 wt.-%) and propionitrile (3.2 wt.-%). Both condensed liquid streams were unified in the buffer tank (F) to form fluid (ULM).

The fluid (ULM) from buffer tank (F) was reintroduced into the vessel (A1) by the dosing equipment, with a portion being used as coolant in the oligomer separator (C).

From the degassing equipment (B1), the polymer melt was collected, subjected to further degassing in a strand degasser, extruded and granulated to obtain SAN granules.

FIG. 1 shows a schematic view of preparation system used in Comparative Example 1.

The fresh acrylonitrile (AN) dosed into the vessel (A1) was selected to have 10-30 ppm (w/w) of propionitrile. The total dosage rate into the reactor is 1902 kg/h, resulting in a polymer output of 1380 kg/h.

The composition of the stream (STR1) fed into the vessel (A1) was regulated by the dosing equipment to contain 24.2% by weight of fresh acrylonitrile (AN), 48.3% by weight of fresh styrene (FM), and 27.4% by weight of the fluid (ULM). The fluid (ULM) had a composition of 28.3% by weight of acrylonitrile, 30.2% by weight of styrene and 41.5% by weight of solvent (mainly ethylbenzene) (based on the total weight of acrylonitrile, styrene and solvent) and contained propionitrile (PN) as contaminant.

The fluid (ULM) present in the buffer tank (F) and fed into the vessel (A1) at the start of the process originated from an earlier polymerization process. The propionitrile content in (ULM) at the start of the process was approximately 0.7% by weight.

During the process, the concentration of propionitrile in the fluid (ULM) was determined by gas chromatography. The concentration increased from 0.7% by weight to 1.0% by weight, over the course of 20 days.

At a concentration of 0.72% by weight of propionitrile in the fluid (ULM), the residual amount of propionitrile in the SAN polymer granules was determined to be 1.04 ppm

Example 1:

The set-up and conditions of comparative example 1 are used except that the fluid (ULM) from the buffer tank (F) is routed to a distillation column (G) with 50 theoretical trays, operated under vacuum (65 mbar).

At the bottom of the column, a fraction comprising cumene, light oligomers and other components having boiling points above that of styrene and ethyl benzene are withdrawn and routed out of the process. At a position between 10 and 25% of the theoretical trays, a fraction consisting essentially of styrene and ethyl benzene is withdrawn.

At a position between 35 and 80% of the theoretical trays, a fraction containing propionitrile and other components with boiling points between those of styrene and acrylonitrile is withdrawn and routed out of the process. At the top of the column (position above 90% of theoretical trays), a fraction consisting essentially of acrylonitrile is withdrawn.

The fractions consisting essentially of styrene and ethyl benzene and consisting essentially of acrylonitrile are combined to form a fluid (ULM1), which is dosed back into the vessel (A1).

The composition of the stream (STR1) fed into the vessel (A1) is regulated by the dosing equipment, thus that the amount and ratio of acrylonitrile, styrene and ethylbenzene in the vessel (A1) corresponds to that in Comparative Example 1.

The fluid (ULM1) contains a concentration of propionitrile below the limit of detection by gas chromatography (<200 ppm) shortly after initiation and throughout the entire process (20 days after initiation). The residual amount of propionitrile in the SAN polymer granules is determined to also be below the detection limit (<0.05 ppm).

FIG. 2 shows a schematic view of the preparation system used in Example 1.

Example 2:

The set-up and conditions of Example 1 are used, however, only a portion of 9.6% (50 kg/h) by weight of the combined condensates (obtained at 522 kg/h) forming fluid (ULM) in the buffer tank (F) is routed to the distillation column (G). The fractions consisting essentially of acrylonitrile and consisting essentially of styrene and ethylbenzene are combined with the remainder of fluid (ULM) to form a fluid (ULM1).

The fluid (ULM1) contains a concentration of propionitrile of 240 ppm (0.024 wt.-%) 5 days after initiation, and a concentration of propionitrile of 300 ppm (0.03 wt.-%) 20 days after initiation of the process. The residual amount of propionitrile in the SAN polymer granules is determined to be below the detection limit (<0.05 ppm) both at 5 and 20 days.

This process variation allows an adaptation to the actual concentrations of propionitrile in the fluid. If the concentration is low like after start-up with fresh monomers, only a small portion of the fluid needs to be routed to the column to eliminate the propionitrile. Also invest is much more beneficial as a much smaller column is sufficient to reach the intended propionitrile level in the fluid (ULM1).

FIG. 3 shows a schematic view of the preparation system used in Example 2.

Example 3:

The set-up and conditions of Example 1 are used, however, only the condensates from the second condenser (E), comprising acrylonitrile and propionitrile, and minor amounts of ethylbenzene and styrene are routed to the distillation column (G), at a rate of 148 kg/h, to remove the propionitrile. The remaining acrylonitrile and minor amounts of ethylbenzene and styrene are combined with the condensate from condenser (D) to form fluid (ULM1).

The fluid (ULM1) contains a concentration of propionitrile below the detection limit (<200 ppm, 0.02 wt.-%) 20 days after initiation of the process. The residual amount of propionitrile in the SAN polymer granules is determined to also be below the detection limit (<0.05 ppm) after 20 days.

This process variation allows the use of a significantly smaller and less complex distillation column (G), since the amount of matter to be distilled is significantly lower.

FIG. 4 shows a schematic view of the preparation system used in Example 3.

Example 4:

The set-up and conditions of Example 3 are used, however only a portion of 3.4% (5 kg/h) by weight of the condensate from condenser (E) is distilled to remove propionitrile. The remaining acrylonitrile and residual styrene and ethylbenzene from distillation is combined with the remaining condensate from condenser (E) and the condensate from condenser (D) to form fluid (ULM1).

The fluid (ULM1) contains a concentration of propionitrile of 750 ppm (0.075 wt.-%) 20 days after initiation of the process. The residual amount of propionitrile in the SAN polymer granules is determined to be 0.06 ppm after 20 days.

This process variation allows the use of an even smaller and less complex distillation column (G) than in Example 3.

FIG. 5 shows a schematic view of the preparation system used in Example 4.

Example 5:

The set-up and conditions of Example 3 were used, however, instead of routing the condensates from condenser (E), operated at 2.2 °C, comprising acrylonitrile and propionitrile to a distillation column (G), they were routed to a second buffer tank (F2) as a fluid (ULM2). The condensates from condenser (D), operated at 23 °C, comprising styrene and ethylbenzene were used as fluid (ULM1) and introduced back into the vessel (A1). The dosage of fresh acrylonitrile into vessel (A1) was increased to compensate for the removal of acrylonitrile from the condenser (E).

The buffer tank (F2) formed part of a set-up as in Comparative Example 1, wherein the vessel was (A2), the degassing equipment was (B2), the oligomer separator was (C2), a condenser (D2) was operated at 23 °C and a condenser (E2) was operated at 2.2 °C. The condensates from both condensers were combined in buffer tank (F2) to form a fluid (ULM5), which was re-introduced together with (ULM2) into the second polymerization vessel (A2). The feed rate of fresh acrylonitrile into vessel (A2) was reduced to compensate for the additional acrylonitrile from condenser (E).

The initial composition of stream (STR1) fed into the first polymerization reactor (A1) was 50.6 wt.-% of fresh styrene, 12.7 wt.-% of fresh acrylonitrile (comprising 10-30 ppm of propionitrile); and 36.7 wt.-% of a fluid (ULM), which was initially stored in buffer tank (F) and was composed of 67.6 wt.-% of styrene, 9.8 wt.-% of acrylonitrile, 4070 ppm (w/w) of propionitrile, with the rest acting as a mixed solvent, mainly consisting of ethylbenzene and non polymerizable by-products of the monomers. The dosing was regulated to provide a feed of 73.1 wt.-% of styrene, 16.7 wt.-% of acrylonitrile, with the rest acting as the mixed solvent.

After initiation, the condensates from condenser (E) were routed to the second buffer tank (F2), and the dosing of components into vessel (A1) was continuously adjusted to compensate for the withdrawn condensates from condenser (E). The condensates from condenser (D) operated at 23 °C were further transferred into the first buffer tank (F) and then re-introduced into the vessel (A1). To compensate for the loss of solvent in the condensates from condenser (E), the corresponding amount of ethylbenzene was added into the first buffer tank (F).

After 22 h, the composition of stream (STR1) fed into the vessel (A1) reached 55.1 wt.- % of fresh styrene, 16.3 wt.-% of fresh acrylonitrile and 28.6 wt.-% of the fluid (ULM), which then acted as fluid (ULM1) and was composed of 68.8 wt.-% of styrene, 3.2 wt.- % of acrylonitrile (condensing in condenser (D) operated at 23 °C) and 310 ppm of propionitrile. The rest acted as a mixed solvent, mainly consisting of ethylbenzene and other non-polymerizable by-products of the monomers.

The condensates from condenser (E) operated at 2.2 °C were composed of approximately 32 wt.-% of styrene, approximately 53 wt.-% of acrylonitrile, 730 ppm (w/w) of propionitrile, and 14.9 wt.-% of further condensates acting as a mixed solvent and consisting mainly of ethylbenzene and other non polymerizable by-products of the monomers. These condensates were used as fluid (ULM2) for the second polymerization process.

The fluid (ULM1) contained a concentration of propionitrile below the detection limit (<200 ppm, 0.02 wt.-%) 3 days after initiation of the process. The residual amount of propionitrile in the first SAN polymer granules was determined to also be below the detection limit (<0.05 ppm) after 3 days.

The concentration of propionitrile in combined fluids (ULM2) and (ULM5) in the second buffer tank (F2) varied in a range between 0.7% by weight and 2% by weight, depending on the time passed since the initiation of the process. This shows that despite the low initial concentration of 10-30 ppm (0.001-0.003% by weight) the propionitrile accumulated in the second polymerization process.

At a concentration of 1.5% by weight of propionitrile in the combined fluids (ULM2) and (ULM5), the residual amount of propionitrile in the second SAN polymer granules after degassing the polymer melt in a strand degasser is determined to be 1.9 ppm.

This process variation allows the simultaneous production of two polymer products, one of which is suited for food contact, child contact (e.g. toys) and medical applications, whereas the other is used for other purposes. By this variation, it is possible to utilize unreacted monomers without having to use complex and costly separation means such as fractional distillation.

FIG. 6 shows a schematic view of the preparation system used in Example 5.

Example 6

The set-up and conditions of Example 5 are used. However, instead of routing condensates from condenser (D) back into the vessel (A1), all condensates are routed to the buffer tank (F2) as fluid (ULM2). No other buffer tank (e.g. first buffer tank (F)) is used, and no fluid (ULM1) is used, and vessel (A1) is operated only with fresh acrylonitrile, styrene and ethylbenzene.

The total dosing is 2420 kg/h resulting in a polymer output of 1500 kg/h.

The composition of the streams fed into the vessel (A1) is regulated by the dosing equipment to contain 37.0% by weight of fresh acrylonitrile (AN), 61.0% by weight of fresh styrene (FM), and 2% by weight of fresh ethyl benzene.

The residual amount of propionitrile in the first SAN polymer granules is determined to also be below the detection limit (<0.05 ppm) after 2 days.

The concentration of propionitrile in combined fluids (ULM2) and (ULM5) varies in a range between 0.7% by weight and 2% by weight, depending on the time passed since the initiation of the process.

At a concentration of 1.5% by weight of propionitrile in the combined fluids, the residual amount of propionitrile in the second SAN polymer granules after degassing the polymer melt in a strand degasser is determined to be 1.9 ppm.

The reduced ethylbenzene content of 2% in the vessel (A1) leads to an increase of the reaction speed, and thus to an improvement of the process efficiency.

FIG. 7 shows a schematic view of the preparation system used in Example 6.

Example 7:

The set-up and conditions of Example 3 are used. However, only a simple distillation column (G) is used, wherein residual styrene, residual ethylbenzene and components with higher boiling points are withdrawn at the bottom of the distillation column, combined with the condensates from condenser (D) and used as fluid (ULM1), and acrylonitrile, propionitrile and components with lower boiling points are withdrawn at the top of the distillation column and used as a fluid (e.g. (ULM2)) in a different process.

The fluid (ULM1) contains a concentration of propionitrile below the detection limit (<200 ppm, 0.02 wt.-%) 5 days after initiation of the process. The residual amount of propionitrile in the first SAN polymer granules is determined to also be below the detection limit (<0.05 ppm) after 5 days.

This variation of the process avoids too many losses of styrene and ethylbenzene in case of insufficient condensation in heat exchanger (D).

FIG. 8 shows a schematic view of the preparation system used in Example 7.

Example 8

The set-up and conditions of Example 5 are used. However, instead of transferring the entire condensate from condenser (E) comprising acrylonitrile and propionitrile and minor amounts of ethylbenzene and styrene to a second buffer tank (F2), a portion of this condensate is transferred to the buffer tank (F), to form part of the fluid (ULM1). Furthermore, the condensate from the condenser (D2) operating at 25 °C (containing ethyl benzene and styrene) is collected in a third buffer tank (F3), and the condensate from the condenser (E2) operating at 3.5 °C (containing acrylonitrile and propionitrile) is collected in the second buffer tank (F2). A portion of the condensate from the third buffer tank (F3) is transferred into the buffer tank (F) as a fluid (ULM4) and combinerd with fluid (ULM1), to be introduced into polymerization vessel (A1). Another portion of the condensate from the buffer tank (F3) and the condensate from the buffer tank (F2) are combined in a fourth buffer tank (F4) as fluid (ULM5) and combined with (ULM2), to be introduced into the vessel (A2) for further polymerisation.

This set-up allows better control over the composition of the fluids introduced into the reactors (A1) and (A2). For example, if the condensates of condenser (E) contain some minor amounts of ethylbenzene, some of this ethylbenzene is transferred as the second fluid (ULM2), thus that the amount of ethylbenzene would be decreased in (A1) and increased in (A2) over time. The missing quantity of ethylbenzene in (A1) and excess thereof in (A2) is compensated by transferring a portion of the condensates from condenser (D2), which are collected in tank (F3), back to (A1) through buffer tank (F). Due to the low amounts of acrylonitrile in the condensates from condenser (D2), the propionitrile content in (A1) remains low.

The missing acrylonitrile in (A1) and additional acrylonitrile in (A2) caused by the transfer from condenser (E) to tank (F2) can be compensated by increased dosing of fresh acrylonitrile into vessel (A1), and accordingly reduced dosing of fresh acrylonitrile into vessel (A2).

The additional styrene in (A1) and missing styrene in (A2) caused by transfer from tank (F3) to tank (F) can be compensated by reduced dosing of fresh styrene into vessel (A1), and accordingly increased dosing of fresh styrene into vessel (A2).

The combined fluids (ULM1) and (ULM4) contain a concentration of propionitrile below the detection limit (<200 ppm, 0.02 wt.-%) 10 days after initiation of the process. The residual amount of propionitrile in the first SAN polymer granules is determined to also be below the detection limit (<0.05 ppm) after 10 days.

The concentration in combined fluids (ULM2) and (ULM5) varies in a range between 0.7% by weight and 2% by weight, depending on the time passed since the initiation of the process.

At a concentration of 1.5% by weight of propionitrile in the combined fluids (ULM2) and (ULM5), the residual amount of propionitrile in the second SAN polymer granules after degassing the polymer melt in a strand degasser is determined to be 1.9 ppm.

This process variation is useful when the condenser (D) removes insufficient amounts of ethylbenzene and styrene, which are then condensed in condenser (E). In this case, styrene and ethylbenzene can be recovered from the second circulating fluid loop and transferred back into the first loop, in order to reduce the loss of styrene and ethylbenzene in the first loop.

FIG. 9 shows a schematic view of the preparation system used in Example 8.

Example 9

The set-up and conditions of Example 5 are used, however, only a portion of the condensed fraction from the heat exchanger (E) operating at 2.2 °C is withdrawn through a valve and transferred into the second buffer tank (F2) and further used as (ULM2), whereas the remaining condensed fraction from the heat exchanger (E) is combined with the condensed fraction from heat exchanger (D) to form fluid (ULM1).

The feed rates are as in comparative example 1. Accordingly, the feed rate of fresh acrylonitrile (AN) is 1902 kg/h x 24.2 wt.-% = 460 kg/h. The concentration of (PN) in fresh acrylonitrile is selected to be 30 ppm (w/w), resulting in a feed rate of (PN) of 13.8 g/h.

To obtain a predetermined propionitrile content in the fluid (ULM1) of 800 ppm (w/w), the withdrawal rate of the condensed fraction from the heat exchanger (E) is set to a constant rate of 17 kg/h (460 kg/h x 30 ppm / 800 ppm).

The content of ethylbenzene in the condensate from heat exchanger (E) is determined to be 15 wt.-%, resulting in a withdrawal rate of 17 kg/h x 15 wt.-% = 2.6 kg/h. The same amount of fresh ethylbenzene is fed into the buffer tank (F).

1 day after initiation of the reaction, the fluid (ULM1) contains 0.08% by weight (800 ppm (w/w)) of propionitrile. At this concentration, the residual amount of propionitrile in the SAN polymer granules is determined to be 0.12 ppm (w/w).

FIG. 12 shows a schematic view of the preparation system used in Example 9.

Example 10

The set-up and conditions of Example 9 are used, however a larger vessel (A1) is used. The fresh acrylonitrile is selected to have a propionitrile content of 11 ppm (w/w). The feed rates of the individual components are scaled up, thus that the feed rate of fresh acrylonitrile is 5000 kg/h.

The propionitrile content in the condensate from the heat exchanger (E) operated at 2.2 °C is monitored and is determined to be approximately 3x the propionitrile content in the buffer tank (F).

To obtain a predetermined propionitrile content in the fluid (ULM1) of 900 ppm (w/w), the withdrawal rate of the condensed fraction from the heat exchanger (E) is set to a constant rate of 20.4 kg/h (5000 kg/h x 11 ppm / 2700 ppm).

The content of ethylbenzene in the condensate from heat exchanger (E) is determined to be 15 wt.-%, resulting in a withdrawal rate of 20.4 kg/h x 15 wt.-% = 3.1 kg/h. The same amount of fresh ethylbenzene is fed into the vessel (A1).

2 days after initiation of the reaction, the fluid (ULM1) contains 0.09% by weight (900 ppm (w/w)) of propionitrile. At this concentration, the residual amount of propionitrile in the SAN polymer granules is determined to be 0.14 ppm (w/w).

Monitoring of the propionitrile concentration in the condensate from heat exchanger (E) and the fluid (ULM1) allows adjustment of the withdrawal rate, thus that the loss of components from the system can be reduced.

FIG. 12 shows a schematic view of the preparation system used in Example 10.

Example 11

The set-up and conditions of example 9 are used, however, the concentration of (PN) in fresh acrylonitrile is selected to be 10 ppm (w/w), the predetermined (PN) content in (ULM1) is selected to be 600 ppm, and a portion of the fluid (ULM) is withdrawn through a valve at a rate of 7.7 kg/h from tank (F) and transferred into a second buffer tank (F2) and further utilized as part of (ULM2) as described in Example 5. The withdrawn amount of solvent (SOL) is introduced directly into the vessel (A1) as fresh ethylbenzene.

2 days after initiation of the reaction, the fluid (ULM1) contains 0.06% by weight (600 ppm (w/w)) of propionitrile. At this concentration, the residual amount of propionitrile in the SAN polymer granules is determined to be 0.09 ppm (w/w).

FIG. 11 (use as part of (ULM2) not shown) shows a schematic view of the preparation system used in Example 11.

Example 12

The set-up and conditions of example 9 are used, however, the concentration of (PN) in fresh acrylonitrile is selected to be 5 ppm (w/w), the predetermined (PN) content in (ULM1) is selected to be 950 ppm (w/w), and the portion of the fluid from heat exchanger (E) is withdrawn through the valve at a rate of 2,4 kg/h and discarded. The withdrawn amount of solvent (SOL) is introduced directly into the vessel (A1) as fresh ethylbenzene.

1 day after initiation of the reaction, the fluid (ULM1) contains 0.095% by weight (950 ppm (w/w)) of propionitrile. At this concentration, the residual amount of propionitrile in the SAN polymer granules is determined to be 0.14 ppm (w/w).

FIG. 10 shows a schematic view of the preparation system used in Example 12.

Example 13

The set-up and conditions of Example 12 are used, however, the fresh styrene and fresh ethylbenzene are fed into the buffer tank (F) instead of the reaction vessel (A1). The results are essentially the same as in Example 12.

FIG. 14 shows a schematic view of the preparation system used in Example 13.

Example 14

Examples 1 to 5 and 7 to 13 are repeated with varying locations of introduction of fresh (AN), fresh styrene and fresh ethylbenzene, where applicable. The introduction is carried out directly into the reaction vessel (A1), into the buffer tank (F) and/or through a valve into the conduit for fluid (ULM1) or (ULM4), where applicable.

The results are essentially the same, regardless of the location, where the components are introduced.

From the above examples it can clearly be seen that the process of the invention allows the preparation of SAN polymer products having a propionitrile content significantly lower than 0.15 ppm, based on the total weight of the SAN polymer, and enables simultaneous utilization of monomers in further processes, wherein low propionitrile contents are not necessarily required.

**Claims**

1. A process for the continuous preparation of a polymer product (PP1) comprising a polymer (P1) based on acrylonitrile (AN) and one or more further monomer(s) (FM) copolymerizable with (AN), wherein the process comprises the steps:

    (a1) providing a continuous first stream (STR1) of (AN), (FM), optionally one or more solvent(s) (SOL), and optionally one or more further component(s) (FC), thus that the amount of (AN) is at least 5% by weight, based on the total weight of all polymerizable monomers, wherein (STR1) is fed into a first polymerization reactor (A1) and wherein the amount of propionitrile (PN) in (STR1) is less than 0.1% by weight, based on the total weight of (STR1);

    (b1) continuously polymerizing (AN) and (FM) in the first polymerization reactor (A1), to obtain a first reaction mixture (M1) comprising the polymer (P1) and volatile components (V1), which are volatile under the conditions of step (c1), wherein (V1) include unreacted (AN), unreacted (FM), (PN) and, if present, (SOL), oligomers (O) and/or other by-products (BP);

    (c1) continuously evaporating at least a portion of (V1) from (M1) at a pressure of from 0.01 to 500 mbar, and at a temperature of from 100 to 350 °C, to obtain a polymer fraction (PF1) comprising polymer (P1), and an evaporated fraction (VF1) comprising (V1);

    (d1) continuously separating at least a portion of (V1) from (VF1) to obtain at least one fluid (ULM) comprising (PN), and unreacted (AN) and/or unreacted (FM) and/or, if present, (SOL);

    (e1) continuously providing at least a portion of (ULM) as part of at least one stream (STR), wherein a stream (STR) is the first stream (STR1) and/or a stream (STR) is a second stream (STR2) of (AN), (FM), optionally (SOL) and optionally one or more further component(s) (FC) used for the preparation of a second polymer product (PP2) comprising a polymer (P2) based on acrylonitrile (AN) and one or more further monomer(s) (FM) copolymerizable with (AN);

and wherein if a stream (STR) is the first stream (STR1), the portion of (ULM) provided as part of (STR1) is continuously treated to obtain a fluid (ULM1) containing less than 0.2% by weight of (PN), based on the total weight of (ULM1), and (ULM1) forms less than 50% by weight of the entire first stream (STR1);

and wherein if a stream (STR) is the second stream (STR2), the portion of (ULM) provided as part of (STR2) is used as a fluid (ULM2);

(f1) continuously collecting the polymer fraction (PF1) comprising (P1) obtained in step (c1), and optionally further processing (PF1), to obtain the polymer product (PP1) comprising (P1).

**2.** The process according to claim 1, wherein a stream (STR) is the second stream (STR2), and wherein the process further comprises the steps:

(a2) continuously providing the second stream (STR2) of (AN), (FM), optionally one or more solvent(s) (SOL), and optionally one or more further component(s) (FC), wherein (STR2) is fed into a second polymerization reactor (A2) and (ULM2) forms part of (STR2);

(b2) continuously polymerizing (AN) and (FM) in the second polymerization reactor (A2), to obtain a second reaction mixture (M2) comprising the second polymer (P2) and volatile components (V2), which are volatile under the conditions of step (c2), wherein (V2) include unreacted (AN) and/or unreacted (FM), (PN), and, if present, (SOL), oligomers (O) and/or other by-products (BP);

(c2) continuously evaporating at least a portion of (V2) from (M2) at a pressure of from 0.01 to 500 mbar, and at a temperature of from 100 to 350 °C, to obtain a second polymer fraction (PF2) comprising (P2), and a second evaporated fraction (VF2) comprising (V2);

(d2) continuously separating at least a portion of (V2) from (VF2) to obtain at least one fluid (ULM3) comprising (PN), and unreacted (AN) and/or unreacted (FM) and/or, if present, (SOL);

(e2) continuously using at least a portion of (ULM3) as part of (ULM) and/or continuously providing at least a portion of (ULM3) as part of at least one stream (STR3),

wherein a stream (STR3) is the first stream (STR1) and/or a stream (STR3) is the second stream (STR2),

and wherein if a stream (STR3) is the first stream (STR1), the portion of (ULM3) provided as part of (STR1) is continuously treated to obtain a fluid (ULM4) containing any amount of (PN), with the proviso that (ULM4) and (ULM1) provided as part of (STR1) together contain less than 0.2% by weight of propionitrile (PN), based on the total weight of (ULM4) and (ULM1) combined, and (ULM1) and (ULM4) together form less than 50% by weight of the entire first stream (STR1);

and wherein if a stream (STR3) is the second stream (STR2), the portion of (ULM) provided as part of (STR2) is used as a fluid (ULM5);

(f2) continuously collecting the polymer fraction (PF2) comprising (P2) obtained in step (c2), and optionally further processing (PF2), to obtain the polymer product (PP2).

**3.** The process according to claim 1 or 2, wherein the polymer product (PP1) comprises the polymer (P1) and less than 0.15 ppm, preferably less than 0.1 ppm (w/w) of propionitrile (PN), based on the total weight of (PP1), and

wherein in step (f1) further processing of (PF1) is carried out and comprises degassing (PF1), preferably with a strand degasser and/or with a degassing extruder, at a pressure of from 0.01 to 10 mbar, preferably at 0.1 to 8 mbar, more preferably at 1 to 6 mbar, more preferably 2 to 5 mbar and a temperature of from 100 to 350 °C, preferably from 150 to 300 °C, more preferably from 200 to 280 °C, more preferably from 250 to 270 °C.

**4.** The process according to any one of claims 1 to 3, further comprising the step of compounding polymer (P1) and optionally polymer (P2) with a rubber component, preferably acrylonitrile butadiene styrene (ABS) rubber or acrylonitrile styrene acrylate (ASA) rubber, more preferably with ABS rubber, to obtain the polymer product (PP1) and optionally the polymer product (PP2), respectively.

**5.** The process according to any one of claims 1 to 4, wherein the amount of acrylonitrile (AN) is 6 to 70% by weight, preferably 7 to 65% by weight, preferably 8 to 60% by weight, based on the total weight of all polymerizable monomers.

**6.** The process according to any one of claims 1 to 5, wherein the one or more further monomer(s) (FM) copolymerizable with acrylonitrile comprises, preferably consists of, one or more vinylaromatic monomer(s), preferably styrene and/or alpha-methyl-styrene, more preferably styrene, and/or one or more derivative(s) of ethylenically unsaturated carboxylic acids, preferably alkyl(meth)acrylates and/or maleic acid derivatives, more preferably methyl methacrylate and/or maleic anhydride.

**7.** The process according to any one of claims 1 to 6, wherein (SOL) comprises, preferably consists of, at least one alkylaromatic solvent, preferably toluene or ethylbenzene, more preferably ethylbenzene, and/or at least one aprotic polar solvent, preferably a ketone, more prerably methyl ethyl ketone.

**8.** The process according to any one of claims 1 to 7, wherein the polymerization is thermally initiated, preferably by subjecting the acrylonitrile (AN) and the further monomers (FM) to a temperature of from 80 to 200 °C, preferably from 100 to 190 °C, more preferably from 120 to 185 °C, more preferably from 130 to 180 °C, or radical initiated, preferably by radical forming substances, more preferably by peroxides.

**9.** The process according to any one of claims 1 to 8, wherein the treatment to obtain a fluid containing less than 0.2% by weight of (PN) is carried out by at least partial condensation and/or at least partial distillation, preferably at least partial fractional distillation.

**10.** The process according to any one of claims 1 to 9, wherein the treatment to obtain a fluid (ULM1) containing less than 0.2% by weight of (PN) comprises withdrawal of a portion of the fluid (ULM) at a rate X calculated according to the equation (eq.1),

$$X = \frac{Y \cdot y\%}{z\%} \qquad (eq. 1)$$

wherein X is the rate at which the portion of the fluid (ULM) is withdrawn; Y is the feed rate of fresh acrylonitrile (AN) in step (a1); y% is the concentration of propionitrile (PN) in the fresh (AN); and z% is a predetermined concentration of (PN) in the fluid (ULM1) which is less than 0.2% by weight; and wherein at least a portion of (ULM1) is formed from the portion of (ULM) not withdrawn at rate X.

**11.** A preparation system configured for carrying out the process of any one of claims 1 to 10, comprising a first polymerization reactor (A1), an evaporation means (B1), a separation means (SM) and a circulating fluid loop, and optionally a strand degasser and/or a degassing extruder, wherein the separation means (SM) comprises one or more condensation means (CM) configured to condense volatile components to form a fluid (ULM), and the separation means includes means enabling division of individual or combined condensed fractions of the fluid (ULM) into different portions, allowing withdrawal of one or more portions thereof, wherein the separation means (SM) is configured to at least partially remove (PN) from at least a portion of a circulating fluid comprising (PN), and unreacted (AN) and/or unreacted (FM) and/or, if present, (SOL), thus that the concentration of (PN) in the circulating fluid is below 0.2% by weight by continuously withdrawing a portion of the circulating fluid through the means enabling division of individual or combined condensed fractions into different portions, wherein the preparation system further comprises means for continuous monitoring of the concentration of (PN) in the circulating fluid, preferably by gas chromatography.

**12.** A method for the preparation of an article for food contact, child contact, preferably a toy, or medical applications, comprising the steps:

(i) carrying out the process according to any one of claims 1 to 10, wherein in step (f1) further processing is carried out as described in claim 2, to obtain a polymer product (PP1) comprising a polymer (P1) based on acrylonitrile (AN) and at least one further monomer (FM), and less than 0.15 ppm (w/w) of propionitrile (PN), based on the total weight of (PP1);
(ii) optionally adding further components to the polymer product (PP1); and
(iii) preparing an article for food contact, child contact or medical applications therefrom.

**13.** The method according to claim 12, wherein the method is for the simultaneous preparation of an article for food contact, child contact or medical applications and of an article not for food contact, child contact or medical applications, wherein in step (i) a polymer product (PP2) comprising a polymer (P2) based on acrylonitrile (AN) and at least one further monomer (FM), and from 0.15 ppm to 20 ppm (w/w) of propionitrile (PN), based on the total weight of (PP2), is obtained, further comprising the steps:

(iv) optionally adding further components to the polymer product (PP2); and
(v) preparing an article not for food contact, child contact or medical applications therefrom.

**14.** A thermoplastic composition comprising a polymer (P1) based on acrylonitrile (AN) and at least one further monomer (FM) copolymerizable with (AN), and 0.0001 to 0.15 ppm (w/w), preferably 0.001 to 0.1 ppm (w/w), more preferably 0.01 to 0.05 ppm (w/w), based on the thermoplastic composition, of propionitrile (PN).

**15.** The thermoplastic composition according to claim 14, wherein it comprises the polymer (P1) compounded with a rubber component, preferably acrylonitrile butadiene styrene (ABS) rubber or acrylonitrile styrene acrylate (ASA) rubber, more preferably with ABS rubber.

**16.** The thermoplastic composition according to claim 14 or 15, wherein the thermoplastic composition is the polymer product (PP1) prepared by the process of any one of claims 1 to 9, wherein in step (f1) further processing is carried out as described in claim 3.

**17.** The use of a thermoplastic composition according to any one of claims 14 to 16 for the preparation of an article comprising less than 0.15 ppm (w/w) of propionitrile (PN), based on the total weight of the article, preferably for food contact, child contact and/or medical applications.

**18.** An article for food contact, child contact, preferably a toy, and/or medical applications comprising less than 0.15 ppm (w/w) of propionitrile (PN), based on the total weight of the article, prepared from the thermoplastic composition according to any one of claims 14 to 16.

**Patentansprüche**

**1.** Verfahren zur kontinuierlichen Herstellung eines Polymerprodukts (PP1), umfassend ein Polymer (P1) auf Basis von Acrylnitril (AN) und einem oder mehreren weiteren mit (AN) copolymerisierbaren Monomer(en) (FM), wobei das Verfahren die Schritte umfasst:

(a1) Bereitstellen eines kontinuierlichen ersten Stroms (STR1) aus (AN), (FM), optional einem oder mehreren Lösungsmittel(n) (SOL) und optional einer oder mehreren weiteren Komponente(n) (FC), so dass die Menge an (AN) mindestens 5 Gew.-% beträgt, bezogen auf das Gesamtgewicht aller polymerisierbaren Monomere, wobei (STR1) in einen ersten Polymerisationsreaktor (A1) eingespeist wird und wobei die Menge an Propionitril (PN) in (STR1) weniger als 0,1 Gew.-% beträgt, bezogen auf das Gesamtgewicht von (STR1);
(b1) kontinuierliches Polymerisieren von (AN) und (FM) in dem ersten Polymerisationsreaktor (A1), um eine erste Reaktionsmischung (M1) umfassend das Polymer (P1) und flüchtige Komponenten (V1), die unter den Bedingungen von Schritt (c1) flüchtig sind, zu erhalten, wobei (V1) nicht umgesetztes (AN), nicht umgesetztes (FM), (PN) und gegebenenfalls (SOL), Oligomere (O) und/oder andere Nebenprodukte (BP) beinhaltet;
(c1) kontinuierliches Verdampfen mindestens eines Teils von (V1) aus (M1) bei einem Druck von 0,01 bis 500 mbar und bei einer Temperatur von 100 bis 350 °C, um eine Polymerfraktion (PF1) umfassend Polymer (P1) und eine verdampfte Fraktion (VF1) umfassend (V1) zu erhalten;
(d1) kontinuierliches Abtrennen mindestens eines Teils von (V1) von (VF1), um mindestens ein Fluid (ULM) umfassend (PN) und nicht umgesetztes (AN) und/oder nicht umgesetztes (FM) und/oder gegebenenfalls (SOL) zu erhalten;
(e1) kontinuierliches Bereitstellen mindestens eines Teils von (ULM) als Teil mindestens eines Stroms (STR),
wobei ein Strom (STR) der erste Strom (STR1) ist und/oder ein Strom (STR) ein zweiter Strom (STR2) aus (AN), (FM), optional (SOL) und optional einer oder mehreren weiteren Komponente(n) (FC) ist, die für die Herstellung eines zweiten Polymerprodukts (PP2) verwendet werden, umfassend ein Polymer (P2) auf Basis von Acrylnitril (AN) und einem oder mehreren weiteren Monomer(en) (FM), die mit (AN) copolymerisierbar sind;
und wobei, wenn ein Strom (STR) der erste Strom (STR1) ist, der Anteil von (ULM), der als Teil von (STR1) bereitgestellt wird, kontinuierlich behandelt wird, um ein Fluid (ULM1) zu erhalten, das weniger als 0,2 Gew.-% von (PN), bezogen auf das Gesamtgewicht von (ULM1), enthält, und (ULM1) weniger als 50 Gew.-% des gesamten ersten Stroms (STR1) bildet;
und wobei, wenn ein Strom (STR) der zweite Strom (STR2) ist, der Anteil von (ULM), der als Teil von (STR2) bereitgestellt wird, als ein Fluid (ULM2) verwendet wird;
(f1) kontinuierliches Sammeln der in Schritt (c1) erhaltenen Polymerfraktion (PF1) umfassend (P1), und optional weiteres Verarbeiten von (PF1), um das Polymerprodukt (PP1) umfassend (P1) zu erhalten.

**2.** Verfahren nach Anspruch 1, wobei ein Strom (STR) der zweite Strom (STR2) ist, und wobei das Verfahren ferner die Schritte umfasst:

(a2) kontinuierliches Bereitstellen des zweiten Stroms (STR2) aus (AN), (FM), optional einem oder mehreren Lösungsmittel(n) (SOL) und optional einer oder mehreren weiteren Komponente(n) (FC), wobei (STR2) in einen zweiten Polymerisationsreaktor (A2) eingespeist wird und (ULM2) Teil von (STR2) ist;
(b2) kontinuierliches Polymerisieren von (AN) und (FM) in dem zweiten Polymerisationsreaktor (A2), um eine zweite Reaktionsmischung (M2) umfassend das zweite Polymer (P2) und flüchtige Komponenten (V2), die unter den Bedingungen von Schritt (c2) flüchtig sind, zu erhalten, wobei (V2) nicht umgesetztes (AN) und/oder nicht umgesetztes (FM), (PN) und gegebenenfalls (SOL), Oligomere (O) und/oder andere Nebenprodukte (BP) beinhaltet;

(c2) kontinuierliches Verdampfen mindestens eines Teils von (V2) aus (M2) bei einem Druck von 0,01 bis 500 mbar und einer Temperatur von 100 bis 350 °C, um eine zweite Polymerfraktion (PF2) umfassend (P2) und eine zweite verdampfte Fraktion (VF2) umfassend (V2) zu erhalten;

(d2) kontinuierliches Abtrennen mindestens eines Teils von (V2) von (VF2), um mindestens ein Fluid (ULM3) umfassend (PN) und nicht umgesetztes (AN) und/oder nicht umgesetztes (FM) und/oder gegebenenfalls (SOL) zu erhalten;

(e2) kontinuierliches Verwenden mindestens eines Teils von (ULM3) als Teil von (ULM) und/oder kontinuierliches Bereitstellen mindestens eines Teils von (ULM3) als Teil von mindestens einem Strom (STR3),

wobei ein Strom (STR3) der erste Strom (STR1) ist und/oder ein Strom (STR3) der zweite Strom (STR2) ist,

und wobei, wenn ein Strom (STR3) der erste Strom (STR1) ist, der Anteil von (ULM3), der als Teil von (STR1) bereitgestellt wird, kontinuierlich behandelt wird, um ein Fluid (ULM4) enthaltend eine beliebige Menge von (PN) zu erhalten, mit der Maßgabe, dass (ULM4) und (ULM1), die als Teil von (STR1) bereitgestellt werden, zusammen weniger als 0.2 Gew.-% Propionitril (PN) enthalten, bezogen auf das Gesamtgewicht von (ULM4) und (ULM1) zusammen, und (ULM1) und (ULM4) zusammen weniger als 50 Gew.-% des gesamten ersten Stroms (STR1) bilden;

und wobei, wenn ein Strom (STR3) der zweite Strom (STR2) ist, der Anteil von (ULM), der als Teil von (STR2) bereitgestellt wird, als ein Fluid (ULM5) verwendet wird;

(f2) kontinuierliches Sammeln der in Schritt (c2) erhaltenen Polymerfraktion (PF2) umfassend (P2), und optional weiteres Verarbeiten von (PF2), um das Polymerprodukt (PP2) zu erhalten.

**3.** Verfahren nach Anspruch 1 oder 2, wobei das Polymerprodukt (PP1) das Polymer (P1) und weniger als 0,15 ppm, vorzugsweise weniger als 0,1 ppm (w/w) Propionitril (PN), bezogen auf das Gesamtgewicht von (PP1), umfasst, und

wobei in Schritt (f1) die Weiterverarbeitung von (PF1) durchgeführt wird und das Entgasen von (PF1), vorzugsweise mit einem Strangentgaser und/oder mit einem Entgasungsextruder, bei einem Druck von 0,01 bis 10 mbar, vorzugsweise bei 0,1 bis 8 mbar, besonders bevorzugt bei 1 bis 6 mbar, besonders bevorzugt bei 2 bis 5 mbar und einer Temperatur von 100 bis 350 °C, vorzugsweise von 150 bis 300 °C, besonders bevorzugt von 200 bis 280 °C, besonders bevorzugt von 250 bis 270 °C, umfasst.

**4.** Verfahren nach einem der Ansprüche 1 bis 3, ferner umfassend den Schritt des Compoundierens von Polymer (P1) und optional Polymer (P2) mit einer Kautschukkomponente, vorzugsweise Acrylnitril-Butadien-Styrol-Kautschuk (ABS-Kautschuk) oder Acrylnitril-Styrol-Acrylat-Kautschuk (ASA-Kautschuk), besonders bevorzugt mit ABS-Kautschuk, um das Polymerprodukt (PP1) bzw. optional das Polymerprodukt (PP2) zu erhalten.

**5.** Verfahren nach einem der Ansprüche 1 bis 4, wobei die Menge an Acrylnitril (AN) 6 bis 70 Gew.-%, vorzugsweise 7 bis 65 Gew.-%, vorzugsweise 8 bis 60 Gew.-%, bezogen auf das Gesamtgewicht aller polymerisierbaren Monomere, beträgt.

**6.** Verfahren nach einem der Ansprüche 1 bis 5, wobei das eine oder die mehreren weitere(n) mit Acrylnitril copolymerisierbare Monomer(e) (FM) ein oder mehrere vinylaromatische(s) Monomer(e), vorzugsweise Styrol und/oder alpha-Methyl-Styrol, besonders bevorzugt Styrol, und/oder ein oder mehrere Derivate ethylenisch ungesättigter Carbonsäuren, vorzugsweise Alkyl(meth)acrylate und/oder Maleinsäurederivate, besonders bevorzugt Methylmethacrylat und/oder Maleinsäureanhydrid, umfassen, vorzugsweise daraus bestehen.

**7.** Verfahren nach einem der Ansprüche 1 bis 6, wobei (SOL) mindestens ein alkylaromatisches Lösungsmittel, vorzugsweise Toluol oder Ethylbenzol, besonders bevorzugt Ethylbenzol, und/oder mindestens ein aprotisches polares Lösungsmittel, vorzugsweise ein Keton, besonders bevorzugt Methylethylketon, umfasst, vorzugsweise daraus besteht.

**8.** Verfahren nach einem der Ansprüche 1 bis 7, wobei die Polymerisation thermisch initiiert wird, vorzugsweise indem das Acrylnitril (AN) und die weiteren Monomere (FM) einer Temperatur von 80 bis 200 °C, vorzugsweise von 100 bis 190 °C, besonders bevorzugt von 120 bis 185 °C, ganz besonders bevorzugt von 130 bis 180 °C, ausgesetzt werden, oder radikalisch initiiert wird, bevorzugt durch radikalbildende Substanzen, mehr bevorzugt durch Peroxide.

**9.** Verfahren nach einem der Ansprüche 1 bis 8, wobei die Behandlung zur Gewinnung eines Fluids enthaltend weniger als 0,2 Gew.-% (PN) durch zumindest teilweise Kondensation und/oder zumindest teilweise Destillation, vorzugsweise zumindest teilweise fraktionierte Destillation, durchgeführt wird.

**10.** Verfahren nach einem der Ansprüche 1 bis 9, wobei die Behandlung zur Gewinnung eines Fluids (ULM1) enthaltend weniger als 0,2 Gew.-% (PN) die Entnahme eines Teils des Fluids (ULM) mit einer Rate X umfasst, die gemäß der Gleichung (eq. 1) berechnet wird,

$$X = \frac{Y \cdot y\%}{z\%} \quad (eq. 1)$$

wobei X die Rate ist, mit der der Teil des Fluids (ULM) entnommen wird; Y die Zufuhrrate von frischem Acrylnitril (AN) in Schritt (a1) ist; y% die Konzentration von Propionitril (PN) in dem frischen (AN) ist; und z% eine vorbestimmte Konzentration von (PN) in dem Fluid (ULM1) ist, die weniger als 0,2 Gew.-% beträgt; und wobei mindestens ein Teil von (ULM1) aus dem Teil von (ULM) gebildet wird, der nicht mit der Rate X entnommen wird.

**11.** Herstellungssystem konfiguriert zur Durchführung des Verfahrens nach einem der Ansprüche 1 bis 10, umfassend einen ersten Polymerisationsreaktor (A1), eine Verdampfungseinrichtung (B1), eine Trenneinrichtung (SM) und einen Kreislauf für ein zirkulierendes Fluid, und optional einen Strangentgaser und/oder einen Entgasungsextruder, wobei die Trenneinrichtung (SM) eine oder mehrere Kondensationseinrichtungen (CM) umfasst, die konfiguriert sind, flüchtige Komponenten zu kondensieren, um ein Fluid (ULM) zu bilden, und die Trenneinrichtung Mittel umfasst, die eine Aufteilung einzelner oder kombinierter kondensierter Fraktionen des Fluids (ULM) in verschiedene Teile ermöglichen, was die Entnahme eines oder mehrerer Teile davon erlaubt, wobei die Trenneinrichtung (SM) konfiguriert ist, zumindest teilweise (PN) aus zumindest einem Teil eines zirkulierenden Fluids umfassend (PN) und nicht umgesetztes (AN) und/oder nicht umgesetztes (FM) und/oder gegebenenfalls (SOL) zu entfernen, so dass die Konzentration von (PN) in dem zirkulierenden Fluid unter 0,2 Gew.-% liegt, indem kontinuierlich ein Teil des zirkulierenden Fluids durch die Mittel abgezogen wird, die eine Aufteilung der einzelnen oder kombinierten kondensierten Fraktionen in verschiedene Teile ermöglichen, wobei das Herstellungssystem ferner Mittel zur kontinuierlichen Überwachung der Konzentration von (PN) in dem zirkulierenden Fluid, vorzugsweise durch Gaschromatographie, umfasst.

**12.** Verfahren zur Herstellung eines Gegenstandes für den Kontakt mit Lebensmitteln, für den Kontakt mit Kindern, vorzugsweise ein Spielzeug, oder für medizinische Anwendungen, umfassend die Schritte:

(i) Durchführung des Verfahrens nach einem der Ansprüche 1 bis 10, wobei in Schritt (f1) eine weitere Verarbeitung wie in Anspruch 2 beschrieben durchgeführt wird, um ein Polymerprodukt (PP1) zu erhalten, das ein Polymer (P1) auf Basis von Acrylnitril (AN) und mindestens einem weiteren Monomer (FM) und weniger als 0,15 ppm (w/w) Propionitril (PN), bezogen auf das Gesamtgewicht von (PP1), umfasst;
(ii) optional Zugabe weiterer Komponenten zu dem Polymerprodukt (PP1); und
(iii) Herstellen eines Artikels für den Kontakt mit Lebensmitteln, Kindern oder medizinischen Anwendungen daraus.

**13.** Verfahren nach Anspruch 12, wobei das Verfahren zur gleichzeitigen Herstellung eines Gegenstandes für den Kontakt mit Lebensmitteln, Kindern oder medizinischen Anwendungen und eines Gegenstands, der nicht für den Kontakt mit Lebensmitteln, Kindern oder medizinischen Anwendungen bestimmt ist, dient, wobei in Schritt (i) ein Polymerprodukt (PP2) erhalten wird, das ein Polymer (P2) auf Basis von Acrylnitril (AN) und mindestens einem weiteren Monomer (FM) und 0,15 ppm bis 20 ppm (w/w) Propionitril (PN), bezogen auf das Gesamtgewicht von (PP2), umfasst, wobei das Verfahren ferner die Schritte umfasst:

(iv) optional Zugabe weiterer Komponenten zu dem Polymerprodukt (PP2); und
(v) Herstellen eines Gegenstands, der nicht für den Kontakt mit Lebensmitteln, Kindern oder medizinischen Anwendungen bestimmt ist, daraus.

**14.** Thermoplastische Zusammensetzung, umfassend ein Polymer (P1) auf Basis von Acrylnitril (AN) und mindestens einem weiteren mit (AN) copolymerisierbaren Monomer (FM) und 0,0001 bis 0,15 ppm (w/w), bevorzugt 0,001 bis 0,1 ppm (w/w), besonders bevorzugt 0,01 bis 0,05 ppm (w/w), bezogen auf die thermoplastische Zusammensetzung, an Propionitril (PN).

**15.** Thermoplastische Zusammensetzung nach Anspruch 14, wobei sie das Polymer (P1) umfasst, das mit einer Kautschukkomponente, bevorzugt Acrylnitril-Butadien-Styrol (ABS)-Kautschuk oder Acrylnitril-Styrol-Acrylat (ASA)-Kautschuk, besonders bevorzugt mit ABS-Kautschuk, compoundiert ist.

**16.** Thermoplastische Zusammensetzung nach Anspruch 14 oder 15, wobei die thermoplastische Zusammensetzung das Polymerprodukt (PP1) ist, hergestellt durch das Verfahren nach einem der Ansprüche 1 bis 9, wobei in Schritt (f1) eine weitere Verarbeitung wie in Anspruch 3 beschrieben durchgeführt wird.

**17.** Verwendung einer thermoplastischen Zusammensetzung nach einem der Ansprüche 14 bis 16 zur Herstellung eines Gegenstands, der weniger als 0,15 ppm (w/w) Propionitril (PN), bezogen auf das Gesamtgewicht des Gegenstands, enthält, vorzugsweise für den Kontakt mit Lebensmitteln, mit Kindern und/oder für medizinische Anwendungen.

**18.** Gegenstand für den Kontakt mit Lebensmitteln, für den Kontakt mit Kindern, vorzugsweise ein Spielzeug, und/oder für medizinische Anwendungen, der weniger als 0,15 ppm (w/w) Propionitril (PN), bezogen auf das Gesamtgewicht des Gegenstands, enthält, hergestellt aus der thermoplastischen Zusammensetzung nach einem der Ansprüche 14 bis 16.

**Revendications**

**1.** Procédé de préparation en continu d'un produit de polymère (PP1) comprenant un polymère (P1) à base d'acrylonitrile (AN) et un ou plusieurs autres monomère(s) (FM) copolymérisable(s) avec (AN), le procédé comprenant les étapes de :

(a1) fourniture d'un premier flux continu (STR1) de (AN), (FM), éventuellement d'un ou plusieurs solvant(s) (SOL), et éventuellement d'un ou plusieurs autres composants (FC), de sorte que la quantité de (AN) soit d'au moins 5 % en poids, sur la base du poids total de tous les monomères polymérisables, (STR1) étant introduit dans un premier réacteur de polymérisation (A1) et la quantité de propionitrile (PN) dans (STR1) étant inférieure à 0,1 % sur la base du poids total de (STR1) ;
(b1) polymérisation en continu de (AN) et (FM) dans le premier réacteur de polymérisation (A1), pour obtenir un premier mélange réactionnel (M1) comprenant le polymère (P1) et des composants volatils (V1), qui sont volatils dans les conditions de l'étape (c1), dans lequel (V1) comprennent (AN) n'ayant pas réagi, (FM) n'ayant pas réagi, (PN) et, le cas échéant, (SOL), oligomères (O) et/ou autres sous-produits (BP) ;
(c1) évaporation en continu au moins une partie de (V1) de (M1) à une pression de 0,01 à 500 mbar, et à une température de 100 à 350 °C, pour obtenir une fraction polymérique (PF1) comprenant le polymère (P1), et une fraction évaporée (VF1) comprenant (V1) ;
(d1) séparation en continu d'au moins une partie de (V1) de (VF1) pour obtenir au moins un fluide (ULM) comprenant (PN), et (AN) n'ayant pas réagi et/ou (FM) n'ayant pas réagi et/ou, le cas échéant, (SOL) ;
(e1) fourniture en continu d'au moins une partie de (ULM) en tant que partie d'au moins un flux (STR),
dans lequel un flux (STR) est le premier flux (STR1) et/ou un flux (STR) est un deuxième flux (STR2) de (AN), (FM), éventuellement (SOL) et éventuellement un ou plusieurs autres composants) (FC) utilisés pour la préparation d'un deuxième produit de polymère (PP2) comprenant un polymère (P2) à base d'acrylonitrile (AN) et un ou plusieurs autres monomère(s) (FM) copolymérisable(s) avec (AN) ;
et dans lequel si un flux (STR) est le premier flux (STR1), la partie de (ULM) fournie comme partie de (STR1) est traitée en continu pour obtenir un fluide (ULM1) contenant moins de 0,2 % en poids de (PN), sur la base du poids total de (ULM1), et (ULM1) forme moins de 50 % en poids de l'ensemble du premier flux (STR1) ;
et où si un flux (STR) est le deuxième flux (STR2), la partie de (ULM) fournie comme partie de (STR2) est utilisée comme un fluide (ULM2) ;
(f1) collecte en continu de la fraction polymérique (PF1) comprenant (P1) obtenue dans l'étape (c1), et éventuellement traitement supplémentaire (PF1), pour obtenir le produit de polymère (PP1) comprenant (P1).

**2.** Procédé selon la revendication 1, dans lequel un flux (STR) est le deuxième flux (STR2), et dans lequel le procédé comprend en outre les étapes de :

(a2) fourniture en continu du deuxième flux (STR2) de (AN), (FM), éventuellement d'un ou plusieurs solvant(s) (SOL), et éventuellement d'un ou plusieurs autre(s) composant(s) (FC), (STR2) étant alimenté dans un deuxième réacteur de polymérisation (A2) et (ULM2) forme partie de (STR2) ;
(b2) polymérisation en continu de (AN) et (FM) dans le deuxième réacteur de polymérisation (A2), pour obtenir un deuxième mélange réactionnel (M2) comprenant le deuxième polymère (P2) et des composants volatils (V2), qui sont volatils dans les conditions de l'étape (c2), (V2) comprenant (AN) n'ayant pas réagi et/ou (FM) n'ayant pas réagi, (PN) et, le cas échéant, (SOL), oligomères (O) et/ou autres sous-produits (BP) ;
(c2) évaporation en continu d'au moins une partie de (V2) de (M2) à une pression de 0,01 à 500 mbar, et à une température de 100 à 350 °C, pour obtenir une deuxième fraction polymérique (PF2) comprenant (P2), et une deuxième fraction évaporée (VF2) comprenant (V2) ;

(d2) séparation en continu d'au moins une partie de (V2) de (VF2) pour obtenir au moins un fluide (ULM3) comprenant (PN), et (AN) n'ayant pas réagi et/ou (FM) n'ayant pas réagi et/ou, le cas échéant, (SOL) ;

(e2) utilisation en continu d'au moins une partie de (ULM3) comme partie de (ULM) et/ou fourniture en continu d'au moins une partie de (ULM3) comme partie d'au moins un flux (STR3),

dans lequel un flux (STR3) est le premier flux (STR1) et/ou un flux (STR3) est le deuxième flux (STR2),

et dans lequel si un flux (STR3) est le premier flux (STR1), la partie de (ULM3) fournie en tant que partie de (STR1) est traitée en continu pour obtenir un fluide (ULM4) contenant une quantité quelconque de (PN), sous réserve que (ULM4) et (ULM1) fournis en tant que partie de (STR1) contiennent ensemble moins de 0,2 % en poids de propionitrile (PN), sur la base du poids total de (ULM4) et (ULM1) combinés, et (ULM1) et (ULM4) forment ensemble moins de 50 % en poids de l'ensemble du premier flux (STR1) ;

et dans lequel si un flux (STR3) est le deuxième flux (STR2), la partie de (ULM) fournie en tant que partie de (STR2) est utilisée comme fluide (ULM5) ;

(f2) collecte en continu de la fraction polymérique (PF2) comprenant (P2) obtenue à l'étape (c2), et éventuellement traitement supplémentaire (PF2), pour obtenir le produit de polymère (PP2).

**3.** Procédé selon la revendication 1 ou 2, dans lequel le produit de polymère (PP1) comprend le polymère (P1) et moins de 0,15 ppm, de préférence moins de 0,1 ppm (m/m) de propionitrile (PN), sur la base du poids total de (PP1), et

dans lequel à l'étape (f1) un traitement supplémentaire de (PF1) est effectué et comprend un dégazage (PF1), de préférence avec un dégazeur de brins et/ou avec une extrudeuse de dégazage, à une pression de 0,01 à 10 mbar, de préférence de 0,1 à 8 mbar, plus préférablement de 1 à 6 mbar, plus préférablement de 2 à 5 mbar et une température de 100 à 350 °C, de préférence de 200 à 280 °C, plus préférablement de 250 à 270 °C.

**4.** Procédé selon l'une quelconque des revendications 1 à 3, comprenant en outre l'étape de compoundage du polymère (P1) et éventuellement du polymère (P2) avec un composant caoutchouc, de préférence un caoutchouc acrylonitrile butadiène styrène (ABS) ou un caoutchouc acrylonitrile styrène acrylate (ASA), plus préférablement avec un caoutchouc ABS, pour obtenir le produit de polymère (PP1) et éventuellement le produit de polymère (PP2), respectivement.

**5.** Procédé selon l'une quelconque des revendications 1 à 4, dans lequel la quantité d'acrylonitrile (AN) est de 6 à 70 % en poids, de préférence de 7 à 65 % en poids, de préférence de 8 à 60 % en poids, sur la base du poids total de tous les monomères polymérisables.

**6.** Procédé selon l'une quelconque des revendications 1 à 5, dans lequel le ou les autres monomères (FM) copolymérisables avec l'acrylonitrile comprennent, de préférence sont constitués par, un ou plusieurs monomères vinylaromatiques, de préférence le styrène et/ou l'alpha-méthylstyrène, plus préférablement le styrène et/ou un ou plusieurs dérivés d'acides carboxyliques éthyléniquement insaturés, de préférence des (méth)acrylates d'alkyle et/ou des dérivés d'acide maléique, plus préférablement le méthacrylate de méthyle et/ou l'anhydride maléique.

**7.** Procédé selon l'une quelconque des revendications 1 à 6, dans lequel (SOL) comprend, de préférence est constitué par, au moins un solvant alkylaromatique, de préférence le toluène ou l'éthylbenzène, plus préférablement l'éthylbenzène, et/ou au moins un solvant polaire aprotique, de préférence une cétone, plus préférablement la méthyléthylcétone.

**8.** Procédé selon l'une quelconque des revendications 1 à 7, dans lequel la polymérisation est initiée thermiquement, de préférence en soumettant l'acrylonitrile (AN) et les autres monomères (FM) à une température de 80 à 200 °C, de préférence de 100 à 190 °C, plus préférablement de 120 à 185 °C, plus préférablement de 130 à 180 °C, ou initié par des radicaux, de préférence par des substances formant des radicaux, plus préférablement par des peroxydes.

**9.** Procédé selon l'une quelconque des revendications 1 à 8, dans lequel le traitement pour obtenir un fluide contenant moins de 0,2 % en poids de (PN) est réalisé par condensation au moins partielle et/ou distillation au moins partielle, de préférence distillation fractionnée au moins partielle.

**10.** Procédé selon l'une quelconque des revendications 1 à 9, dans lequel le traitement pour obtenir un fluide (ULM1) contenant moins de 0,2 % en poids de (PN) comprend un soutirage d'une partie du fluide (ULM) à une vitesse X calculée selon l'équation (éq.1),

$$X = \frac{Y \cdot y\,\%}{z\,\%} \quad \text{(éq. 1)}$$

dans laquelle X est la vitesse à laquelle la partie du fluide (ULM) est soutirée ; Y est la vitesse d'alimentation en acrylonitrile (AN) frais dans l'étape (a1) ; y % est la concentration en propionitrile (PN) dans le (AN) frais ; et z % est une concentration prédéterminée de (PN) dans le fluide (ULM1) qui est inférieure à 0,2 % en poids ; et où au moins une partie de (ULM1) est formée à partir de la partie de (ULM) non soutirée à la vitesse X.

**11.** Système de préparation configuré pour mettre en œuvre le procédé de l'une quelconque des revendications 1 à 10, comprenant un premier réacteur de polymérisation (A1), un moyen d'évaporation (B1), un moyen de séparation (SM) et une boucle de fluide en circulation, et éventuellement un dégazeur de brins et/ou une extrudeuse de dégazage, dans lequel le moyen de séparation (SM) comprend un ou plusieurs moyens de condensation (CM) configurés pour condenser des composants volatils pour former un fluide (ULM), et le moyen de séparation comporte des moyens permettant une division de fractions condensées individuelles ou combinées du fluide (ULM) en différentes parties, permettant le soutirage d'une ou plusieurs parties de celui-ci, dans lequel le moyen de séparation (SM) est configuré pour éliminer (PN) au moins partiellement d'au moins une partie d'un fluide en circulation comprenant (PN), et (AN) n'ayant pas réagi et/ou (FM) n'ayant pas réagi et/ou, le cas échéant, (SOL), de sorte que la concentration de (PN) dans le fluide en circulation soit inférieure à 0,2 % en poids en soutirant en continu une partie du fluide en circulation à travers les moyens permettant de diviser en différentes parties des fractions condensées individuelles ou combinées, le système de préparation comprenant en outre des moyens de surveillance continue de la concentration de (PN) dans le fluide en circulation, de préférence par chromatographie en phase gazeuse.

**12.** Procédé pour la préparation d'un article pour le contact avec des aliments, le contact avec un enfant, de préférence un jouet, ou des applications médicales, comprenant les étapes de :

(i) mise en œuvre du procédé selon l'une quelconque des revendications 1 à 10, dans lequel dans l'étape (f1) un traitement supplémentaire est réalisé comme décrit dans la revendication 2, pour obtenir un produit de polymère (PP1) comprenant un polymère (P1) à base d'acrylonitrile (AN) et au moins un autre monomère (FM) et moins de 0,15 ppm (m/m) de propionitrile (PN) sur la base du poids total de (PP1) ;
(ii) éventuellement ajout d'autres composants au produit de polymère (PP1) ; et
(iii) préparation d'un article pour le contact alimentaire, le contact avec un enfant ou des applications médicales à partir de celui-ci.

**13.** Procédé selon la revendication 12, le procédé étant pour la préparation simultanée d'un article pour des applications pour contact alimentaire, pour contact avec un enfant ou applications médicales et d'un article non pour contact alimentaire, contact avec un enfant ou applications médicales, dans lequel, dans l'étape (i), un produit de polymère (PP2) comprenant un polymère (P2) à base d'acrylonitrile (AN) et au moins un autre monomère (FM), et de 0,15 ppm à 20 ppm (m/m) de propionitrile (PN) sur la base du poids total de (PP2) comprenant en outre les étapes :

(iv) éventuellement ajout d'autres composants au produit de polymère (PP2) ; et
(v) préparation d'un article non pour contact alimentaire, contact avec un enfant ou applications médicales à partir de celui-ci.

**14.** Composition thermoplastique comprenant un polymère (P1) à base d'acrylonitrile (AN) et au moins un autre monomère (FM) copolymérisable avec (AN) et 0,0001 à 0,15 ppm (m/m), de préférence 0,001 à 0,1 ppm (m/m), plus préférablement 0,01 à 0,05 ppm (m/m), sur la base de la composition thermoplastique, de propionitrile (PN).

**15.** Composition thermoplastique selon la revendication 14, dans laquelle elle comprend le polymère (P1) mélangé avec un composant caoutchouc, de préférence un caoutchouc acrylonitrile butadiène styrène (ABS) ou un caoutchouc acrylonitrile styrène acrylate (ASA), plus préférablement un caoutchouc ABS.

**16.** Composition thermoplastique selon la revendication 14 ou 15, dans laquelle la composition thermoplastique est le produit de polymère (PP1) préparé par le procédé selon l'une quelconque des revendications 1 à 9, dans laquelle, dans l'étape (f1) un traitement supplémentaire est effectué comme décrit dans la revendication 3.

**17.** Utilisation d'une composition thermoplastique selon l'une quelconque des revendications 14 à 16, pour la préparation d'un article comprenant moins de 0,15 ppm (m/m) de propionitrile (PN) sur la base du poids total de l'article, de préférence pour le contact alimentaire, le contact avec un enfant et/ou des applications médicales.

**18.** Article pour le contact alimentaire, le contact avec un enfant, de préférence un jouet, et/ou pour des applications médicales comprenant moins de 0,15 ppm (m/m) de propionitrile (PN) sur la base du poids total de l'article, préparé à partir de la composition thermoplastique selon l'une quelconque des revendications 14 à 16.

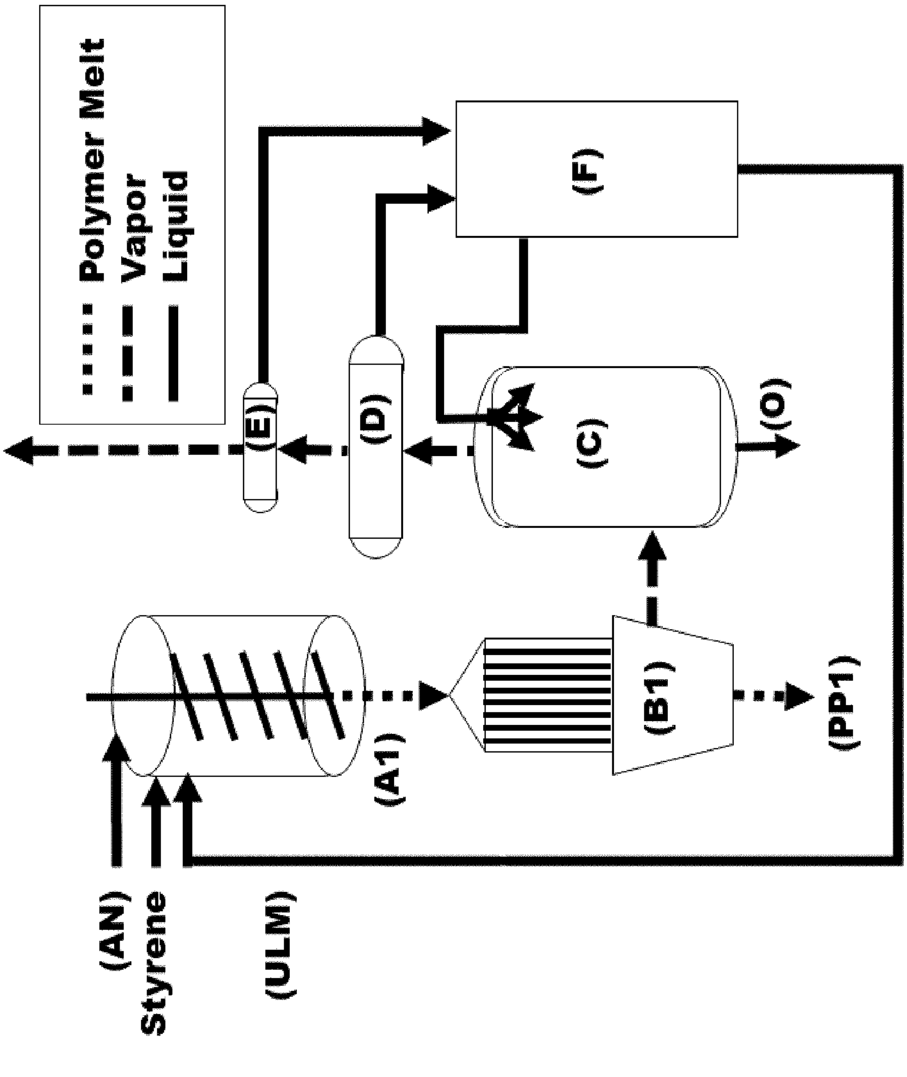


FIG. 1

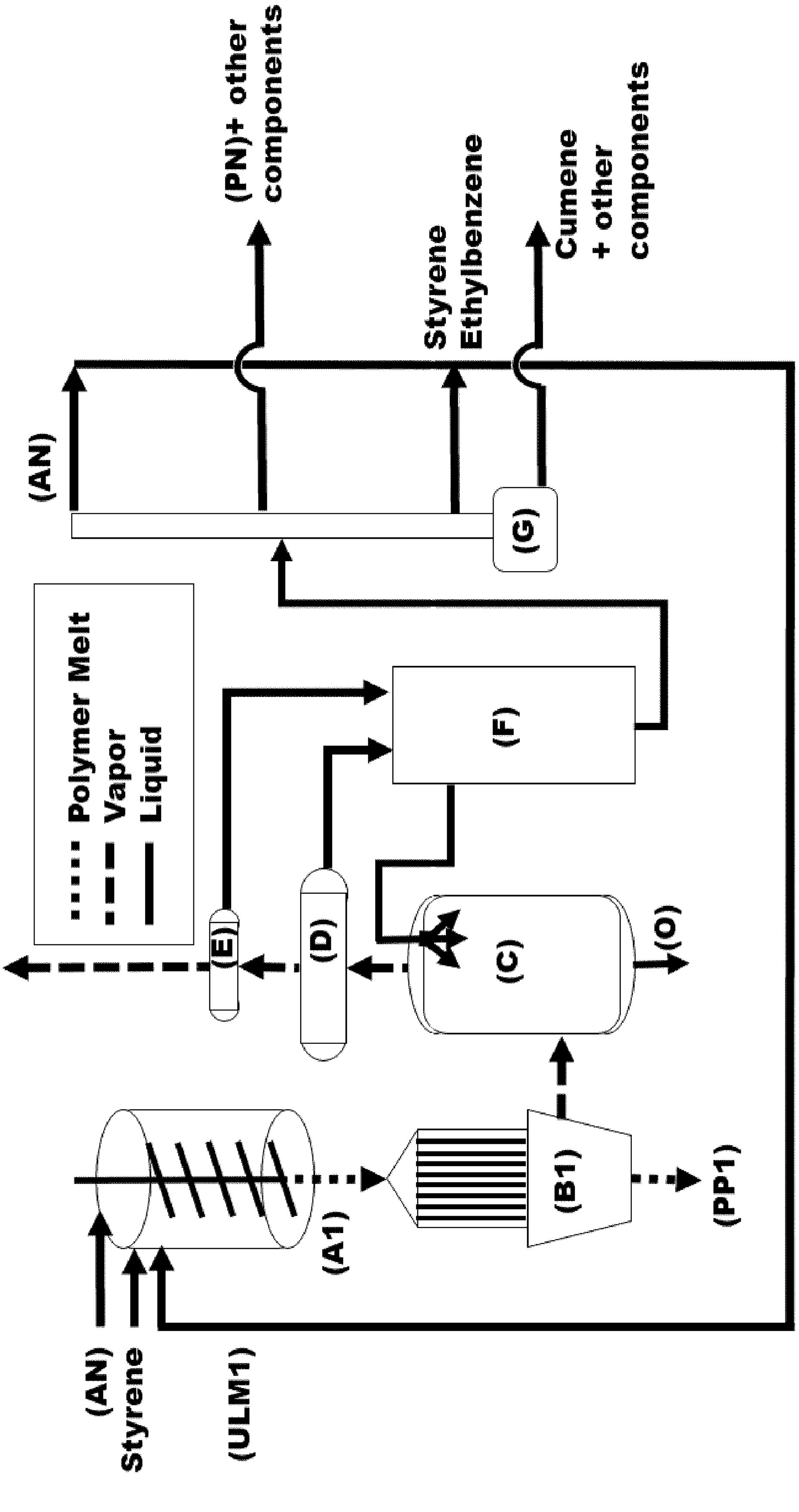
(PN)+ other components
Styrene
Ethylbenzene
Cumene + other components
(AN)
(G)
Polymer Melt
Vapor
Liquid
(F)
(E)
(D)
(C)
(O)
(A1)
(B1)
(PP1)
(AN)
Styrene
(ULM1)

FIG. 2

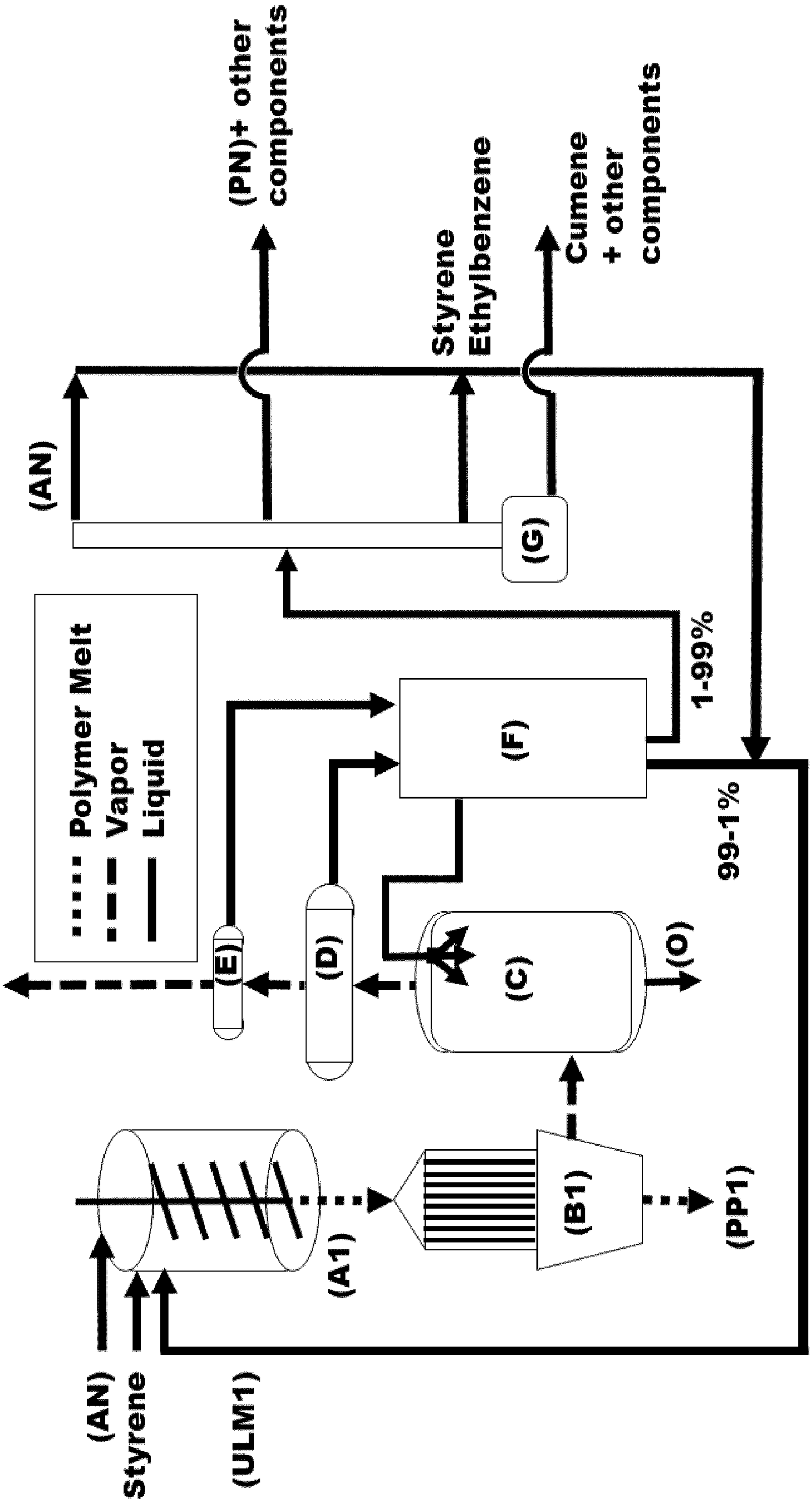
(AN)
Styrene
(ULM1)
(A1)
(B1)
(PP1)
(C)
(O)
(D)
(E)
(F)
(G)
1-99%
99-1%
(AN)
(PN)+ other components
Styrene Ethylbenzene
Cumene + other components
Polymer Melt
Vapor
Liquid

FIG. 3

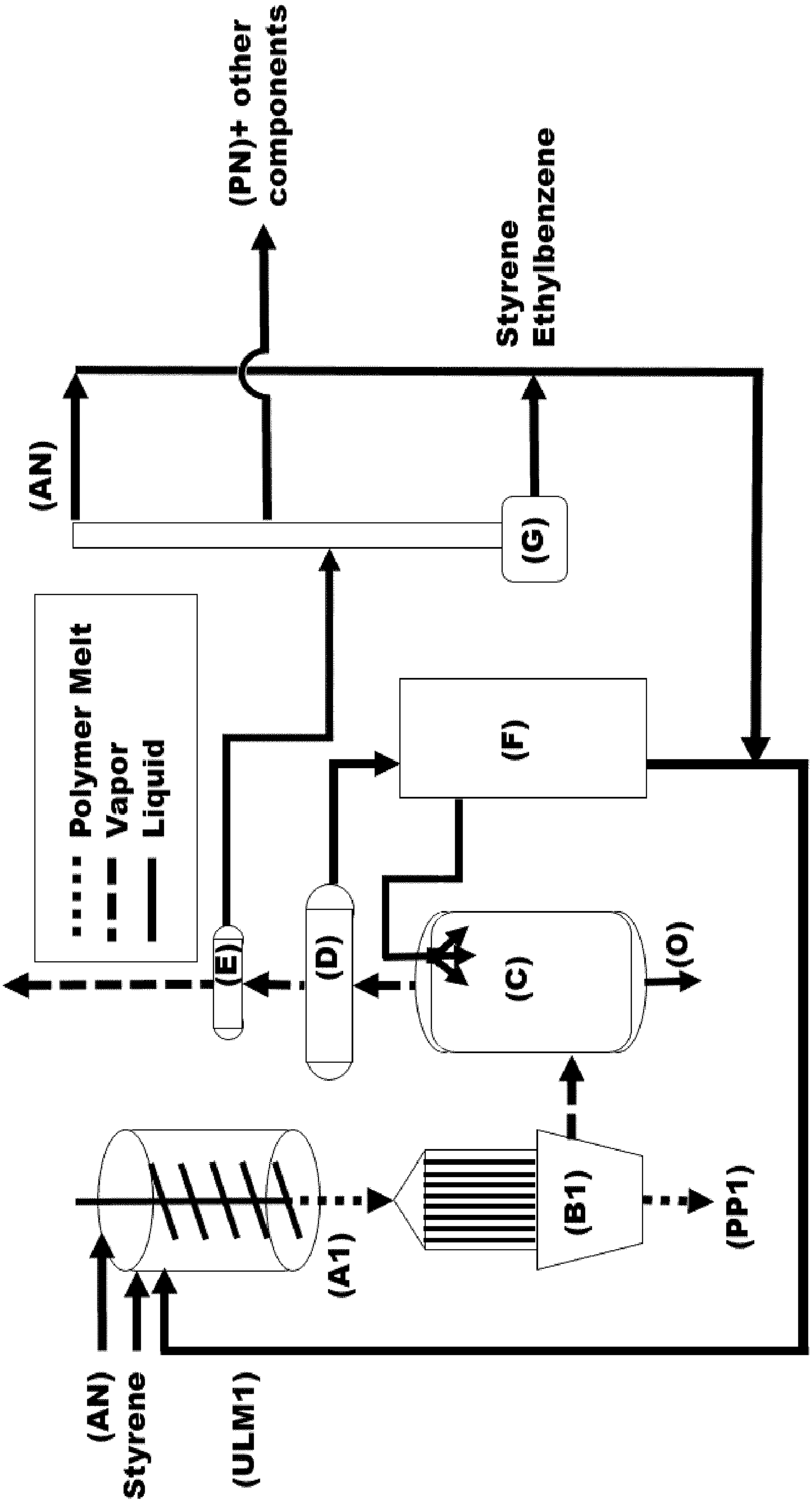
(PN)+ other components
Styrene
Ethylbenzene
(AN)
(G)
Polymer Melt
Vapor
Liquid
(F)
(E)
(D)
(C)
(O)
(A1)
(B1)
(PP1)
(AN)
Styrene
(ULM1)

FIG. 4

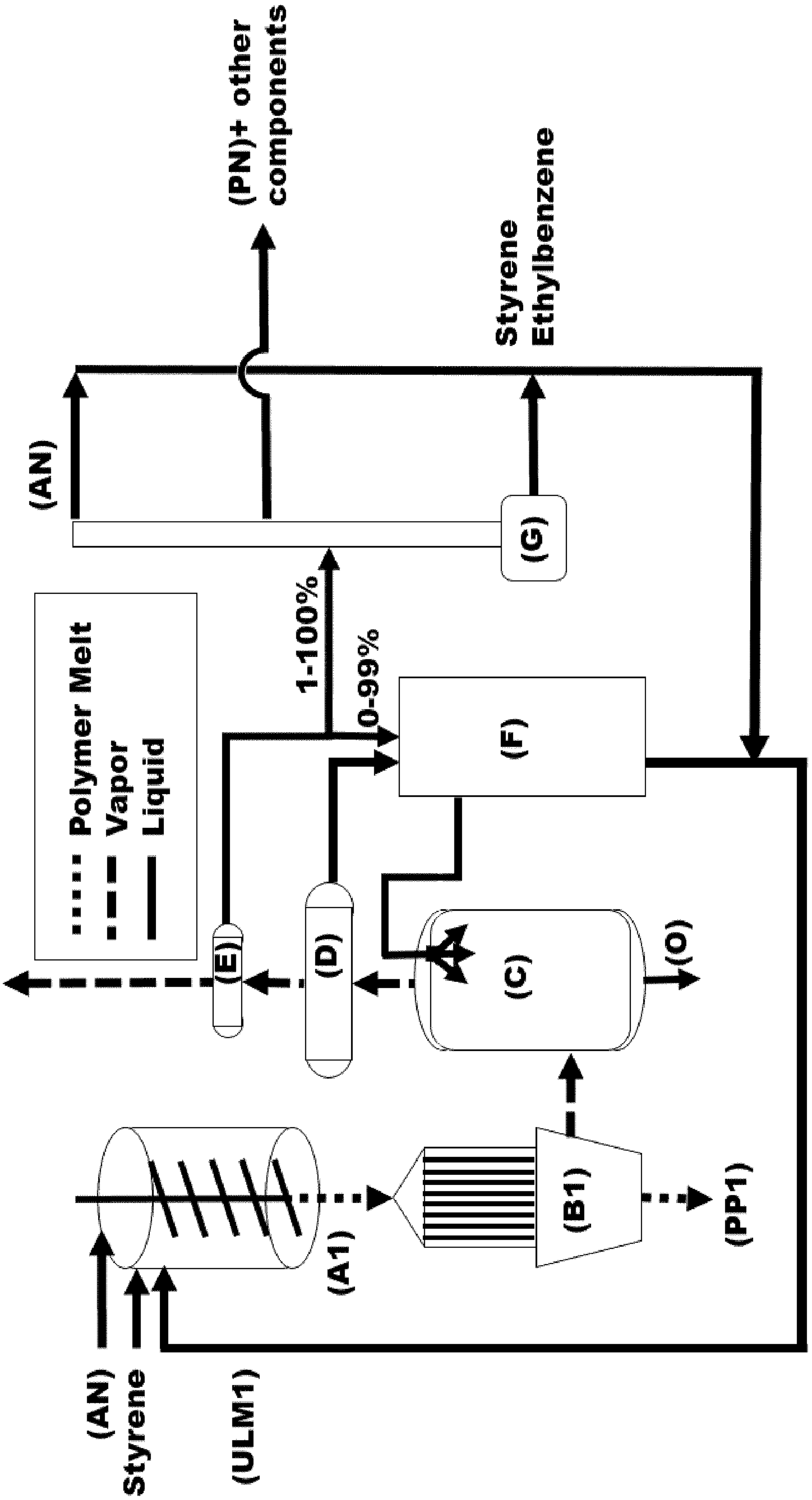
(PN)+ other components
Styrene
Ethylbenzene
(AN)
(G)
1-100%
0-99%
Polymer Melt
Vapor
Liquid
(F)
(E)
(D)
(C)
(O)
(A1)
(B1)
(PP1)
(AN)
Styrene
(ULM1)

FIG. 5

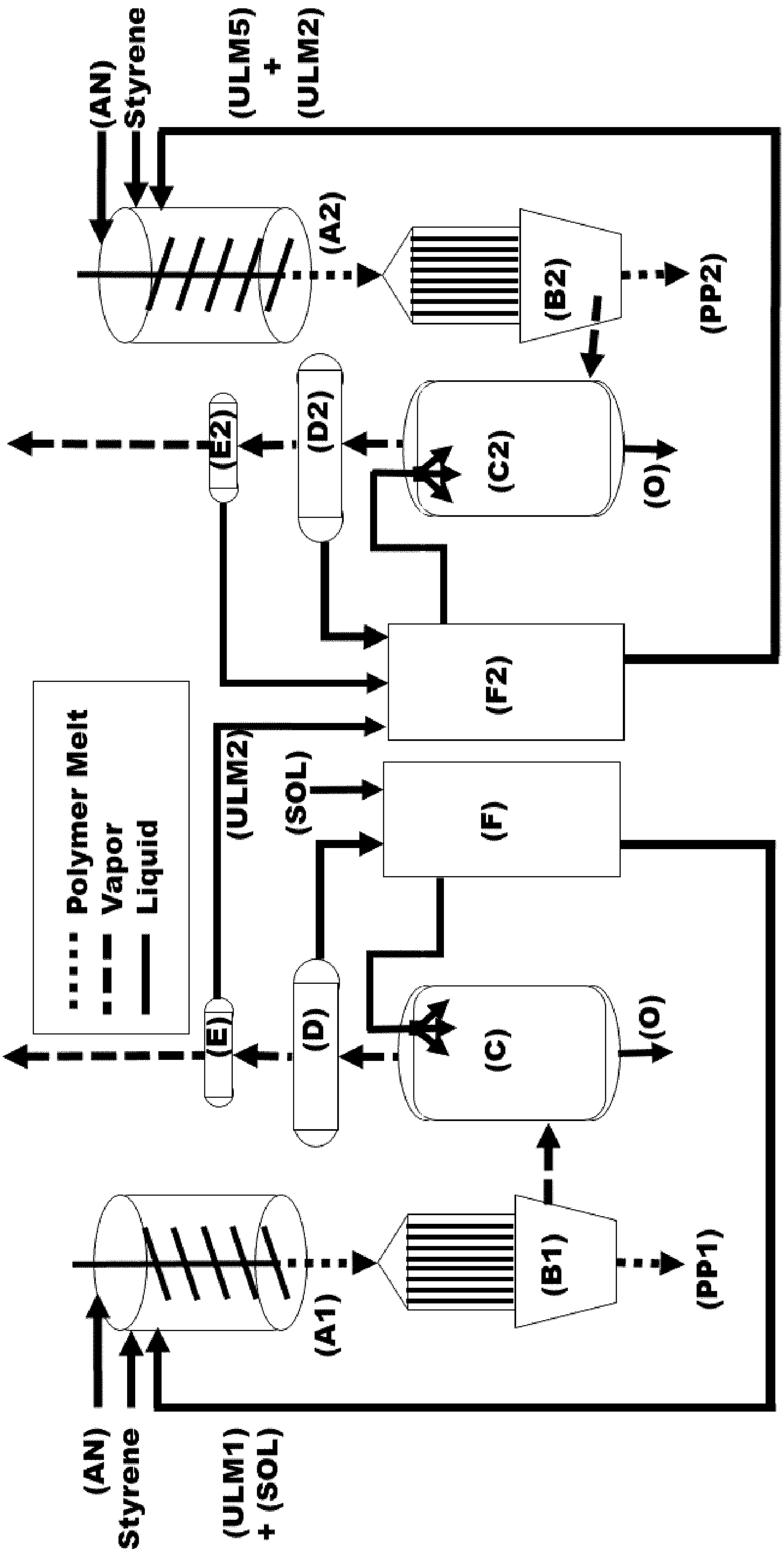
(AN)
Styrene
(ULM5)
+
(ULM2)
(A2)
(B2)
(PP2)
(D2)
(E2)
(C2)
(O)
(F2)
Polymer Melt
Vapor
Liquid
(ULM2)
(SOL)
(F)
(E)
(D)
(C)
(O)
(A1)
(B1)
(PP1)
(AN)
Styrene
(ULM1)
+ (SOL)

FIG. 6

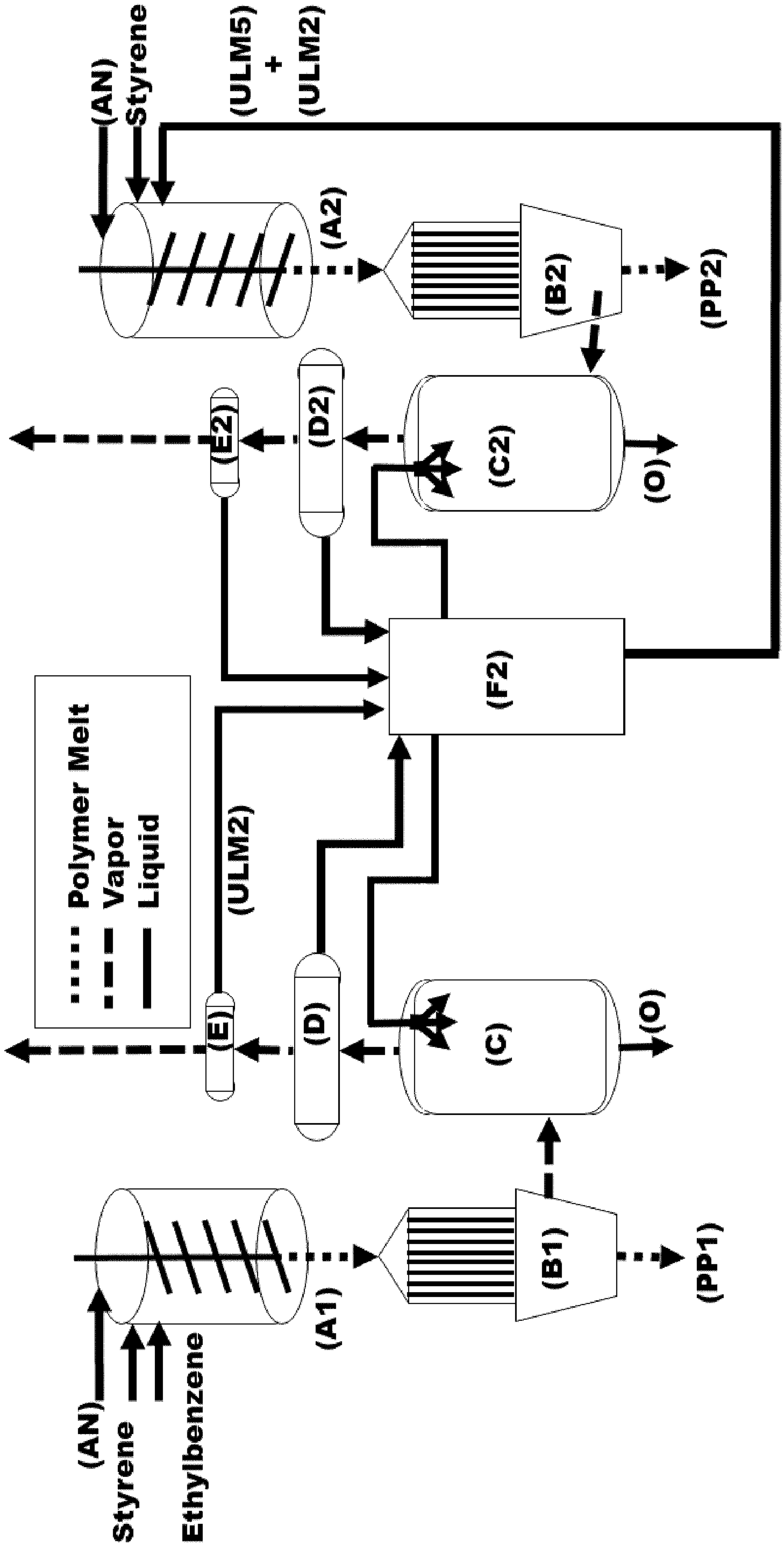
(AN)
Styrene
Ethylbenzene
(A1)
(B1)
(PP1)
(C)
(O)
(D)
(E)
(ULM2)
Polymer Melt
Vapor
Liquid
(F2)
(C2)
(O)
(D2)
(E2)
(AN)
Styrene
(ULM5)
+
(ULM2)
(A2)
(B2)
(PP2)

FIG. 7

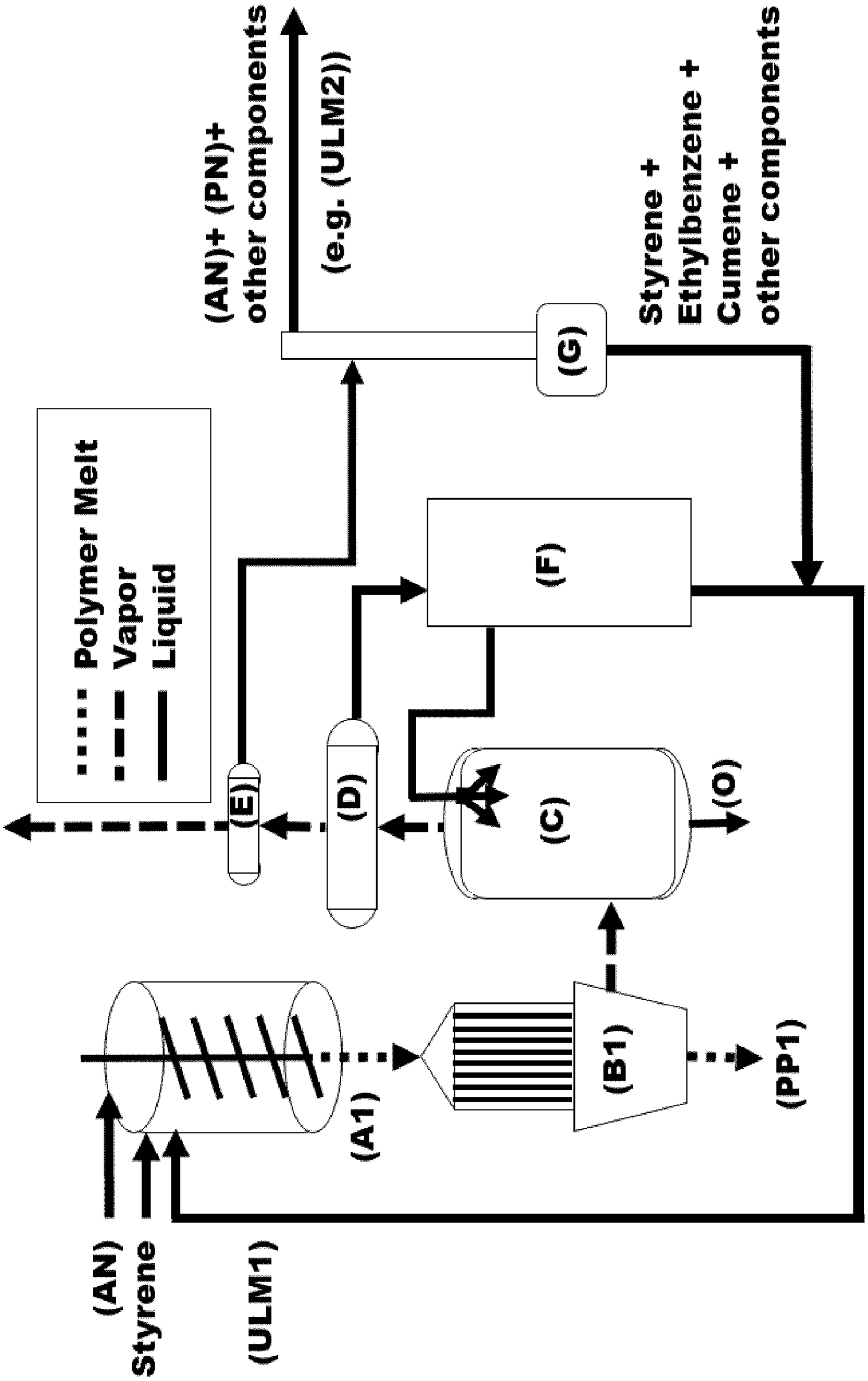
Polymer Melt
Vapor
Liquid
(AN)+ (PN)+
other components
(e.g. (ULM2))
Styrene +
Ethylbenzene +
Cumene +
other components
(G)
(F)
(E)
(D)
(C)
(O)
(A1)
(B1)
(PP1)
(AN)
Styrene
(ULM1)

FIG. 8

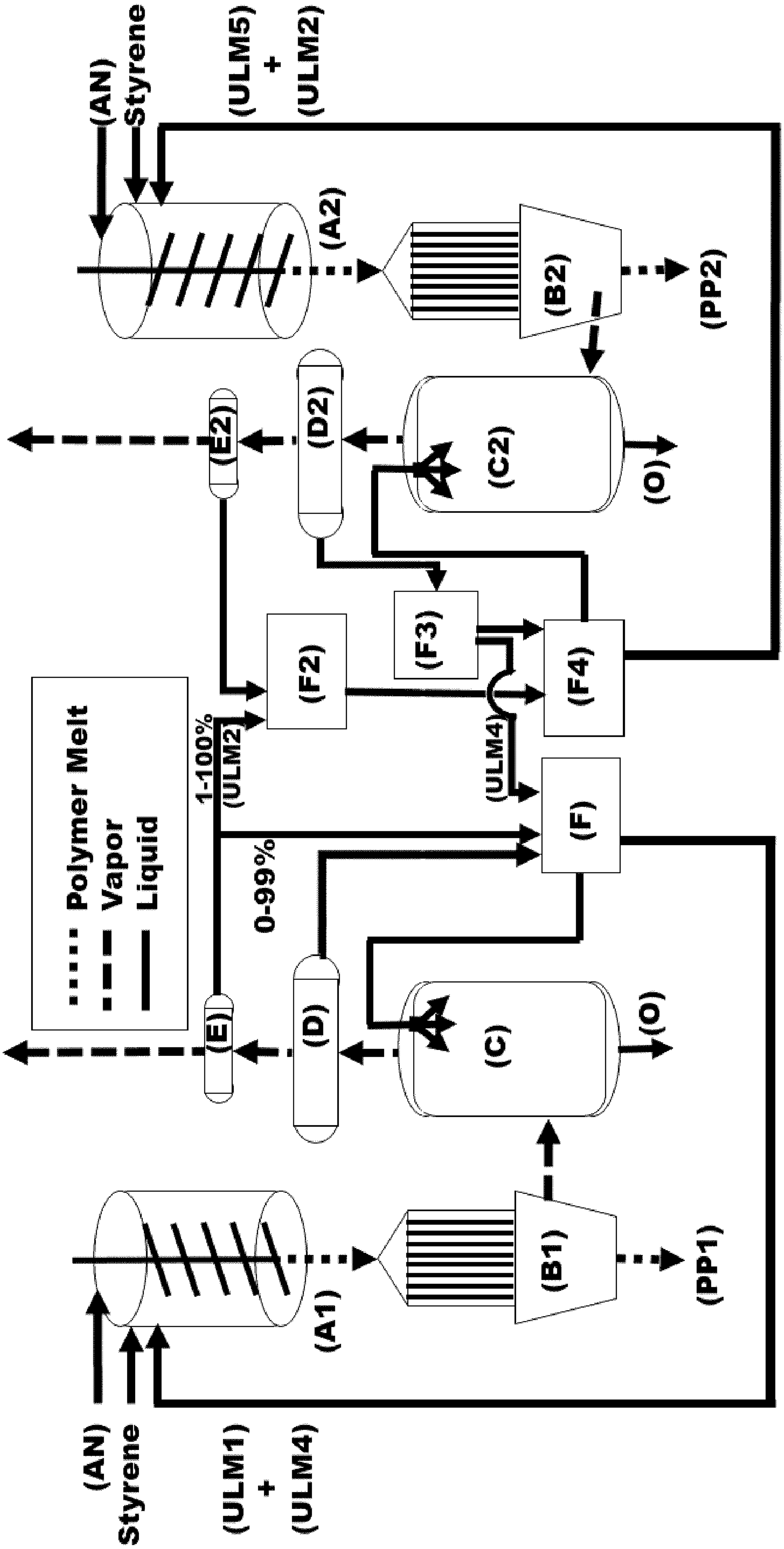
(AN)
Styrene
(ULM5)
+
(ULM2)
(A2)
(B2)
(PP2)
(D2)
(E2)
(C2)
(O)
(F2)
(F3)
(F4)
(ULM4)
(F)
1-100%
(ULM2)
0-99%
Polymer Melt
Vapor
Liquid
(E)
(D)
(C)
(O)
(A1)
(B1)
(PP1)
(AN)
Styrene
(ULM1)
+
(ULM4)

FIG. 9

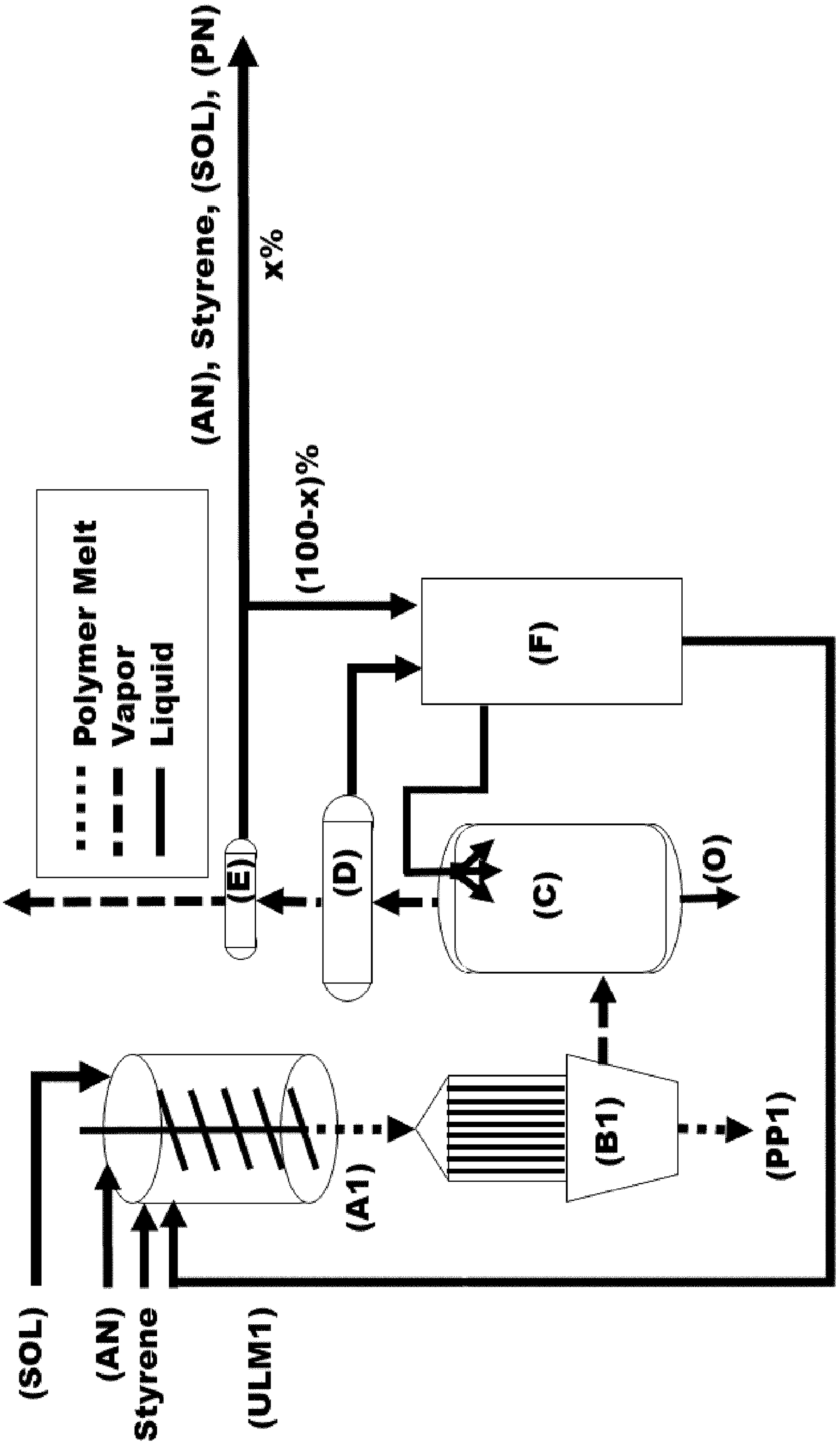
(AN), Styrene, (SOL), (PN)
x%
(100-x)%
Polymer Melt
Vapor
Liquid
(E)
(D)
(F)
(C)
(O)
(A1)
(B1)
(PP1)
(SOL)
(AN)
Styrene
(ULM1)

FIG. 10

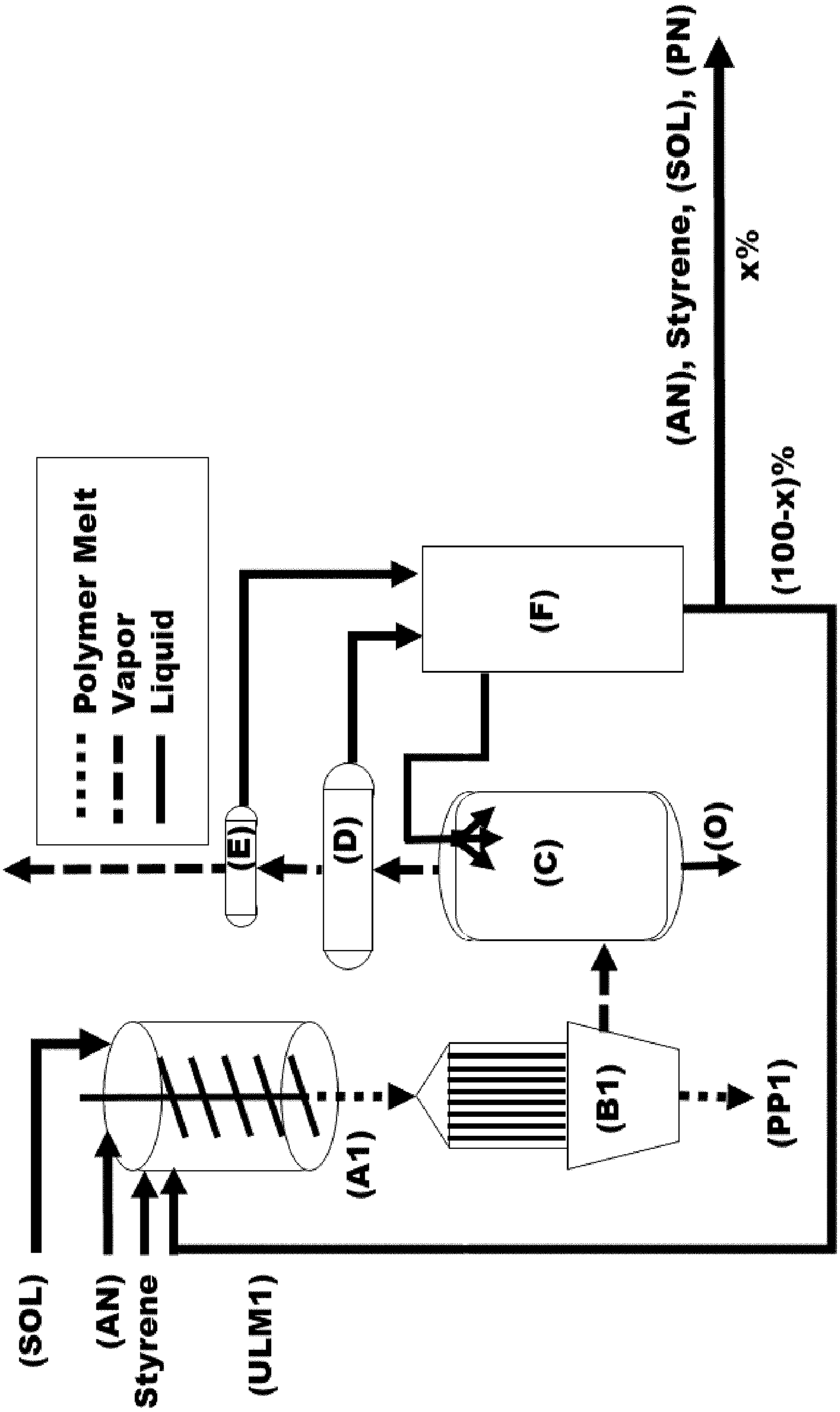
Polymer Melt
Vapor
Liquid
(AN), Styrene, (SOL), (PN)
x%
(100-x)%
(F)
(E)
(D)
(C)
(O)
(A1)
(B1)
(PP1)
(SOL)
(AN)
Styrene
(ULM1)

FIG. 11

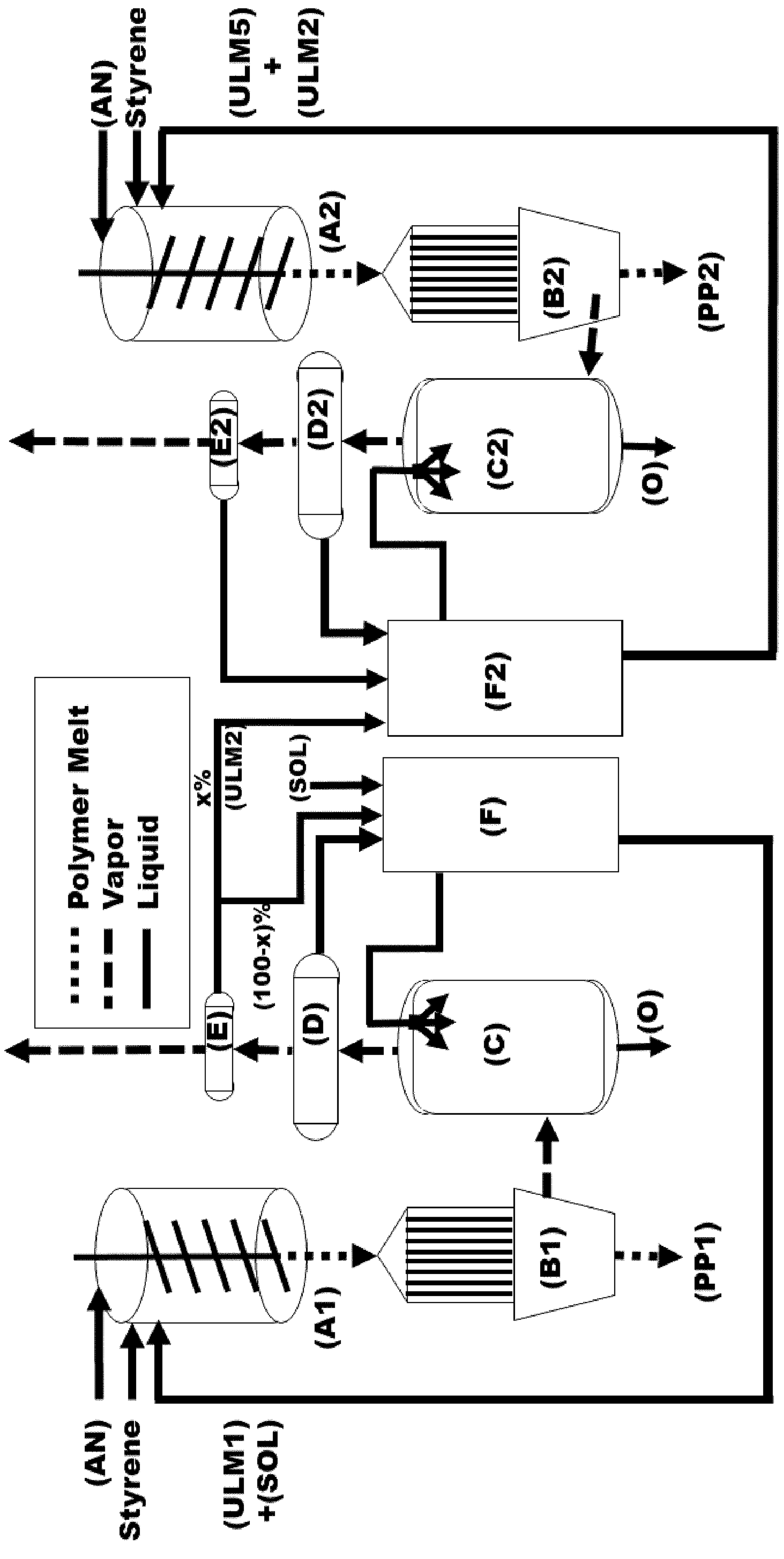
(AN)
Styrene
(ULM5)
+
(ULM2)
(A2)
(B2)
(PP2)
(D2)
(E2)
(C2)
(O)
(F2)
Polymer Melt
Vapor
Liquid
x%
(ULM2)
(SOL)
(F)
(100-x)%
(E)
(D)
(C)
(O)
(A1)
(B1)
(PP1)
(AN)
Styrene
(ULM1)
+(SOL)

FIG. 12

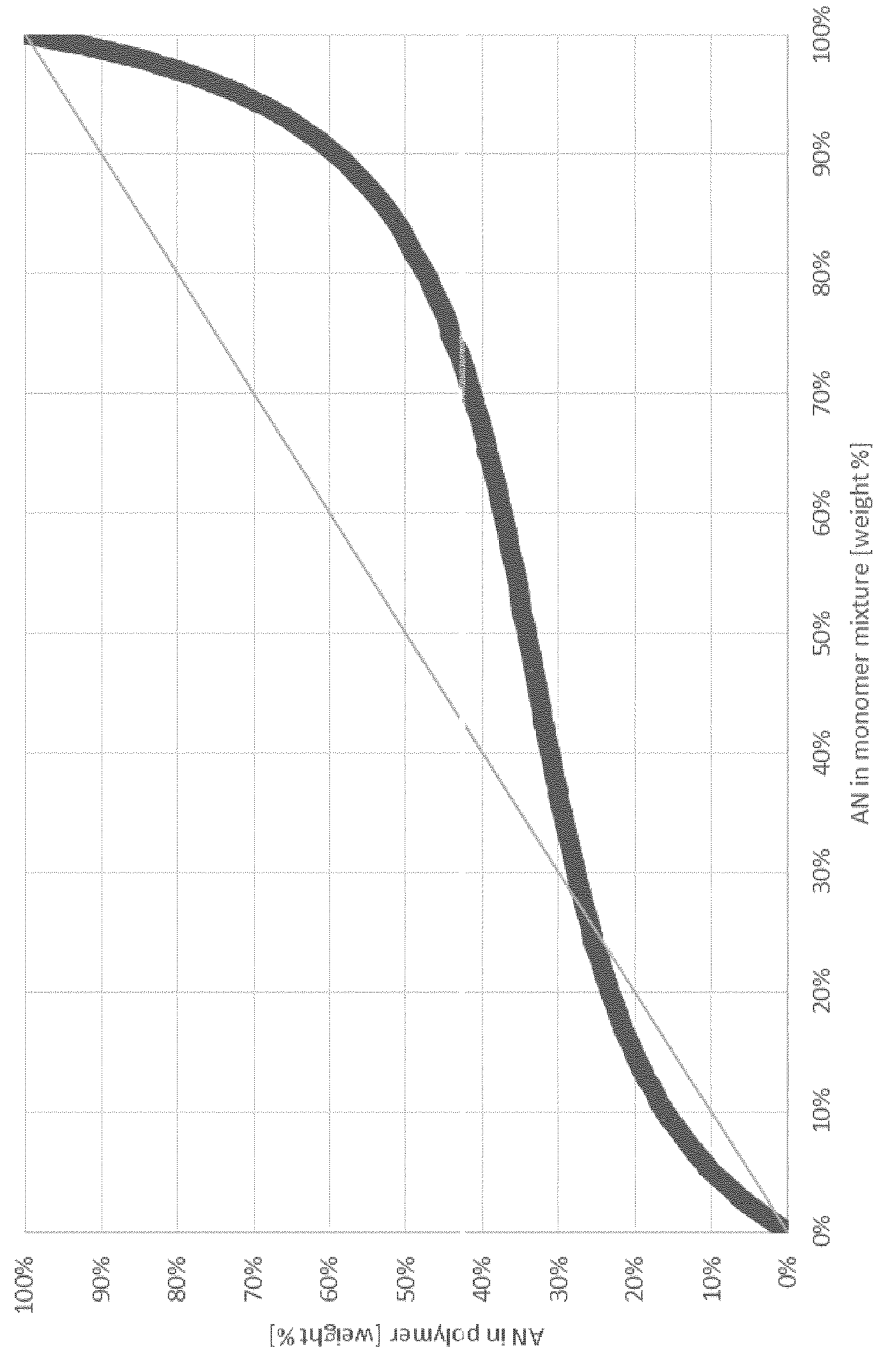
AN in polymer [weight %]
100%
90%
80%
70%
60%
50%
40%
30%
20%
10%
0%
AN in monomer mixture [weight %]
0%
10%
20%
30%
40%
50%
60%
70%
80%
90%
100%

FIG. 13

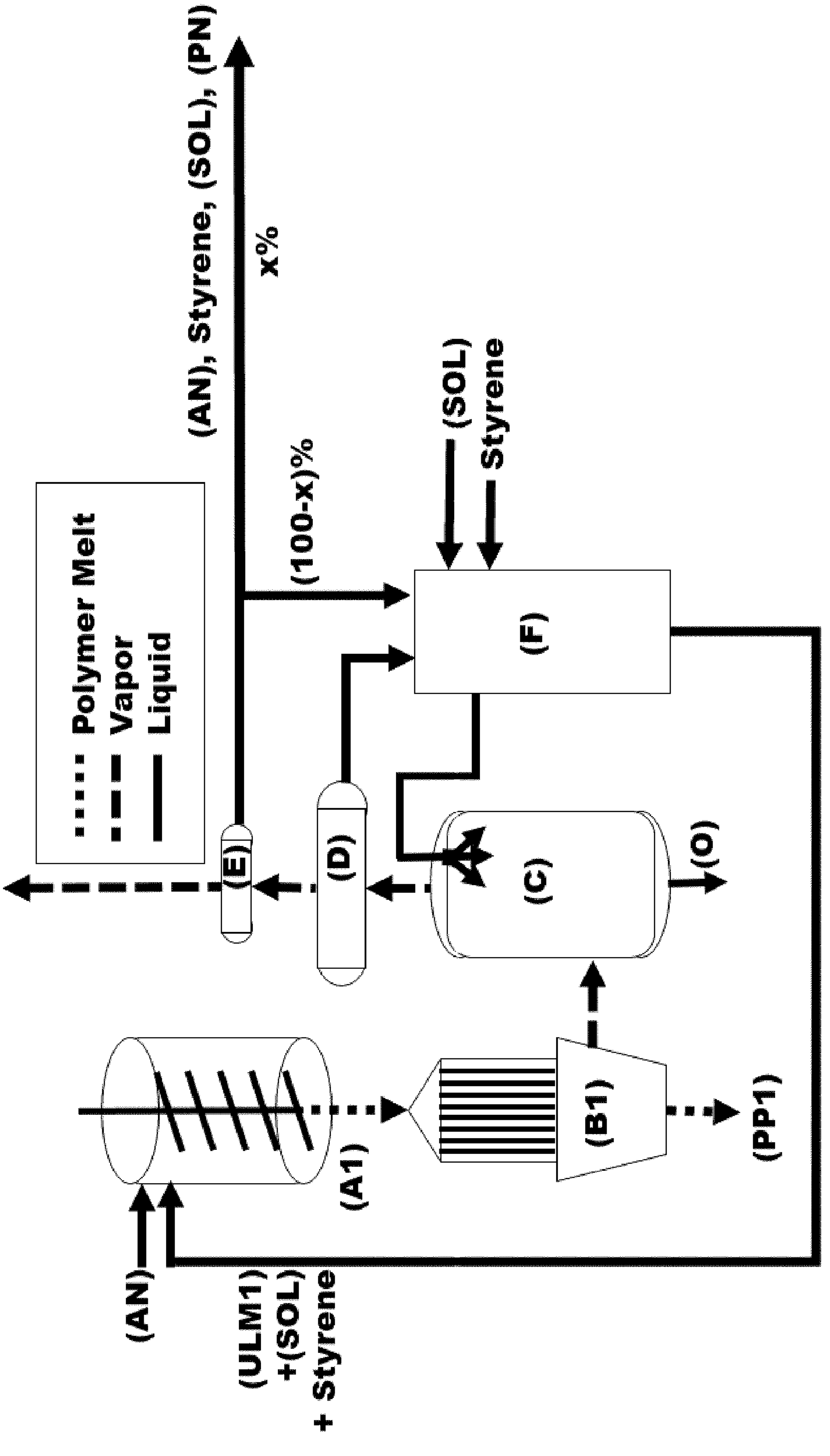
Polymer Melt
Vapor
Liquid
(AN), Styrene, (SOL), (PN)
x%
(100-x)%
(SOL)
Styrene
(F)
(E)
(D)
(C)
(O)
(A1)
(B1)
(PP1)
(AN)
(ULM1)
+(SOL)
+ Styrene

FIG. 14

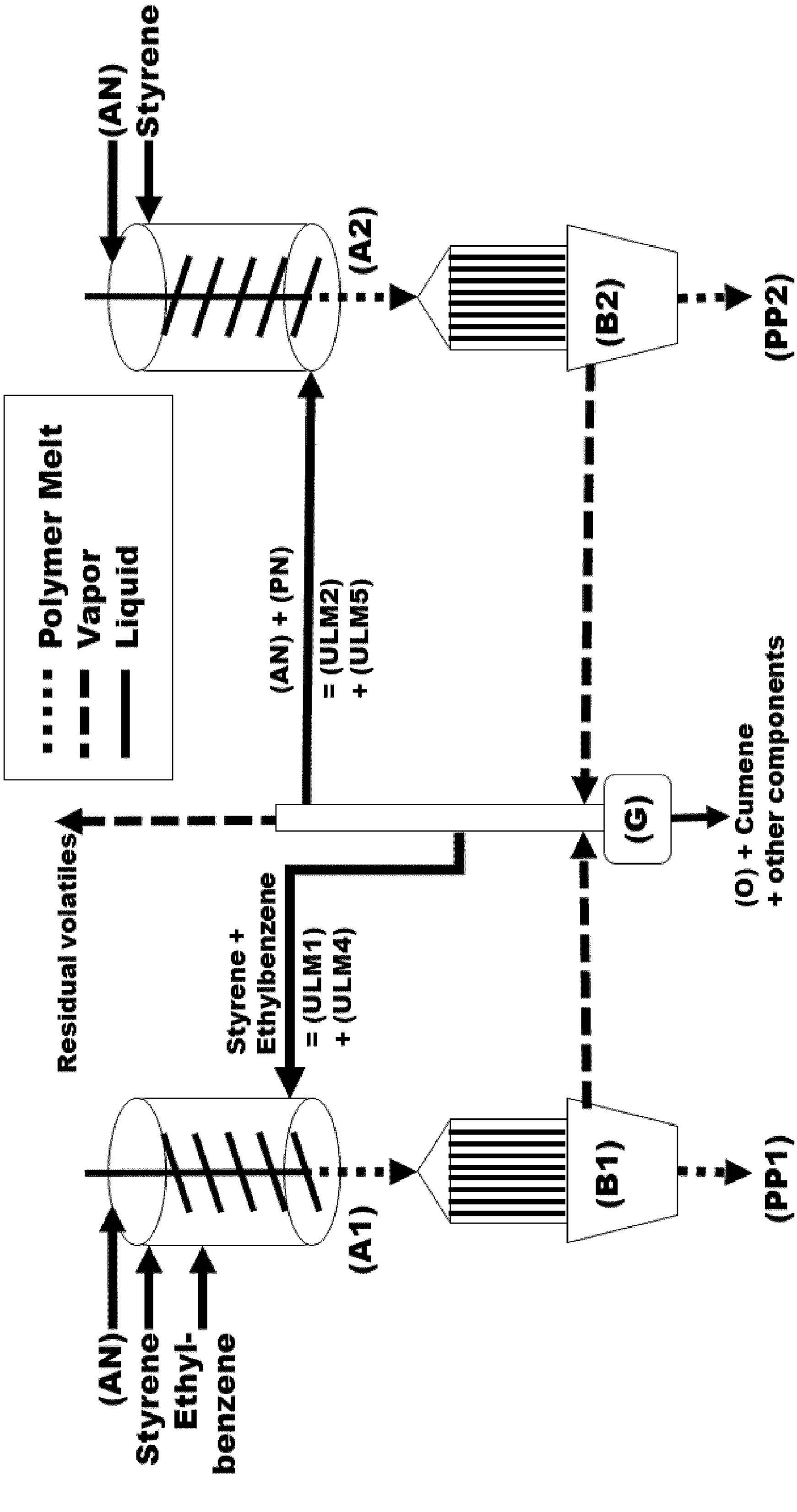
(AN)
Styrene
Ethyl-
benzene
(A1)
(B1)
(PP1)
Residual volatiles
Styrene +
Ethylbenzene
= (ULM1)
+ (ULM4)
(G)
(O) + Cumene
+ other components
(AN) + (PN)
= (ULM2)
+ (ULM5)
Polymer Melt
Vapor
Liquid
(AN)
Styrene
(A2)
(B2)
(PP2)

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018065347 A
- US 4555384 A
- CN 112142880 A
- EP 0768337 A
- US 4215024 A
- DE 2843292
- EP 0798314 A
- EP 1415693 A
- DE 3107732 A1
- DE 102005054151
- DE 102015102311


### Non-patent literature cited in the description


- **HANS ZWEIFEL**. Plastics Additives Handbook. Hanser Publ, 2009
- Ullmann's Encyclopedia of Industrial Chemistry. 2011, vol. 29, 498 ff
- **H. ZWEIFEL** ; **R. D. MAIER** ; **M. SCHILLER**. Plastics Additives Handbook
- Analysis of Volatile Organic Compounds in Water Using Static Headspace-GC/MS. *Agilent Technologies*, 2008